# EUROPEAN PATENT SPECIFICATION

(11) **EP 3 985 492 B1**
(45) Date of publication and mention of the grant of the patent: **22.04.2026**
(21) Application number: 20847152.4
(22) Date of filing: 25.07.2020
(51) Int. Cl.: G06F 3/0481, G06F 3/0486, G06F 3/0482, G06F 3/04842, G06F 3/04883, G06F 3/04886, H04M 1/72439

(54) **FLOATING WINDOW MANAGEMENT METHOD AND RELATED DEVICE**
VERFAHREN ZUR VERWALTUNG VON SCHWEBENDEM FENSTER UND ZUGEHÖRIGE VORRICHTUNG
PROCÉDÉ DE GESTION DE FENÊTRE FLOTTANTE ET DISPOSITIF ASSOCIÉ

(30) Priority: 31.07.2019 CN 201910704781
(43) Date of publication of application: 20.04.2022
(73) Proprietor: Huawei Technologies Co., Ltd., Longgang District Shenzhen, Guangdong 518129 (CN)
(72) Inventor: WU, Xia, Shenzhen, Guangdong 518129 (CN); HAN, Xiao, Shenzhen, Guangdong 518129 (CN)
(74) Representative: Pfenning, Meinig & Partner mbB
(86) International application number: PCT/CN2020/104682
(87) International publication number: WO 2021/018067

(56) References cited:
- WO-A1-2019/114828
- CN-A- 105 872 832
- CN-A- 106 843 626
- CN-A- 109 445 572
- CN-A- 110 489 043
- US-A1- 2014 325 438
- US-A1- 2016 154 536

## Description

### TECHNICAL FIELD

This application relates to the field of electronic technologies, and in particular, to a floating window management method, an electronic device, a computer program product and a computer storage medium.

### BACKGROUND

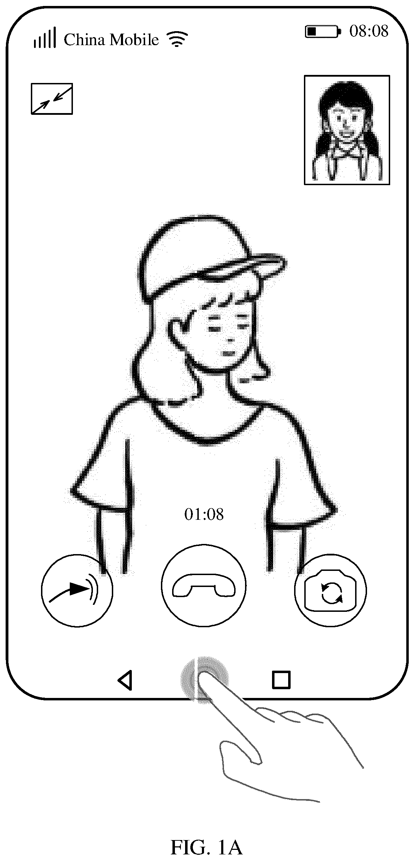

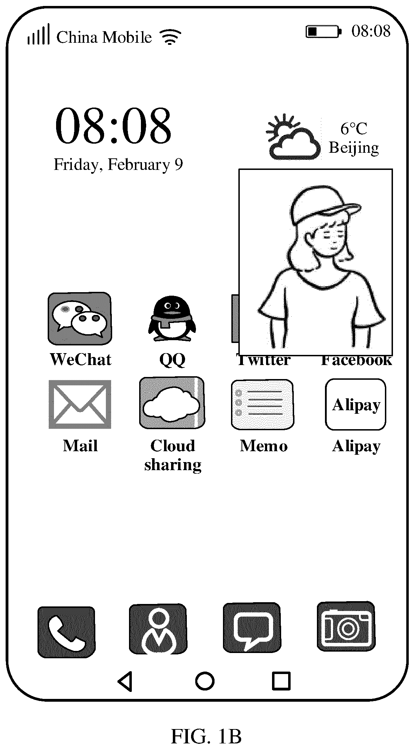

As shown in FIG. 1A, when a user makes a video call, a display of an electronic device displays a video call interface. The user may exit the current video call interface without declining the video call. When the user switches the current video call interface to another user interface, the display of the electronic device displays both the another user interface and a floating window. The floating window is used to display an image collected by a camera of an electronic device of a video contact. For example, as shown in FIG. 1A and FIG. 1B, when the user switches the current video call interface to a home screen by touching a home screen button in the video call interface, the display of the electronic device displays both the home screen and the floating window. It can be learned from FIG. 1B that the floating window blocks a part of the home screen. Therefore, the floating window may affect browsing interface information on the home screen by the user, or affect a user operation performed by the user on the home screen.

In conclusion, the floating window used for the video call affects the user operation, causing inconvenience of the user operation.

US 2014/325438 A1 discloses a method for controlling a screen in an electronic device.

US 2016/154536 A1 discloses a method for displaying applications on windows.

WO 2019/114828 A1 discloses a user interface display method.

### SUMMARY

Embodiments of this application provide a floating window management method according to claim 1, an electronic device according to claim 8, a computer program product according to claim 9 and a computer storage medium according to claim 10. According to this application, when a video call is kept, a floating window can be prevented from blocking a user interface, to improve convenience of a user operation.

According to a first aspect, this application provides a floating window management method, including: An electronic device displays a first user interface and a floating window on a display, where the floating window is used to display an image collected by a camera of an electronic device of a video contact. The electronic device receives a first user operation, where the first user operation is that a user drags the floating window to a status bar in the first user interface. The electronic device hides the floating window in response to the first user operation.

According to the method in the first aspect, when a video call is kept, the floating window can be prevented from blocking a user interface, to improve convenience of a user operation.

With reference to the first aspect, in some embodiments, after the electronic device hides the floating window in response to the first user operation, the method further includes: The electronic device receives a second user operation performed on a status bar in a second user interface. The electronic device displays the second user interface and the floating window on the display in response to the second user operation.

With reference to the first aspect, in some embodiments, after the electronic device hides the floating window in response to the first user operation, the method further includes: The electronic device receives a third user operation performed on the status bar in the second user interface. The electronic device displays, on the display in full screen mode in response to the third user operation, a video call interface corresponding to the floating window.

With reference to the first aspect, in some embodiments, the display includes a first area and a second area, and after the electronic device hides the floating window in response to the first user operation, the method further includes: The electronic device receives a fourth user operation performed on the status bar in the second user interface. In response to the fourth user operation, the electronic device displays the second user interface in the first area, and the electronic device displays the video call interface corresponding to the floating window in the second area.

With reference to the first aspect, the floating window and the status bar cannot be displayed in an overlapping manner; and the first user operation is that a finger of the user slides on the display, to drag the floating window upward to the status bar in the first user interface, and a first preset condition is met.

With reference to the first aspect, the first preset condition is: after the upper edge of the floating window coincides with the lower edge of the status bar in the first user interface, a distance by which the finger of the user continues to slide upward on the display reaches a first distance threshold; after the upper edge of the floating window coincides with the lower edge of the status bar in the first user interface, when the distance by which the finger of the user continues to slide upward on the display is greater than or equal to the first distance threshold, the finger of the user stops sliding and stops touching the display; after the upper edge of the floating window coincides with the lower edge of the status bar in the first user interface, a time period for which the finger of the user continues to touch the area in which the floating window is located on the display reaches a first time threshold; after the upper edge of the floating window coincides with the lower edge of the status bar in the first user interface, when the distance by which the finger of the user continues to slide upward on the display is greater than or equal to the first distance threshold, the finger of the user stops sliding and stops touching the display; a distance between the upper edge of the floating window and an upper edge of the status bar in the first user interface is less than a first width value; or when the distance between the upper edge of the floating window and the upper edge of the status bar in the first user interface is less than the first width value, the finger of the user stops touching the area in which the floating window is located on the display.

According to a second aspect, this application provides an electronic device, including one or more processors and one or more memories. The one or more memories are coupled to the one or more processors, the one or more memories are configured to store computer program code, where the computer program code includes computer instructions, and when the one or more processors execute the computer instructions, the electronic device performs the floating window management method according to the first aspect.

According to a third aspect, this application provides a computer storage medium, including computer instructions. When the computer instructions are run on an electronic device, the electronic device is enabled to perform the floating window management method according to the first aspect.

According to a fourth aspect, this application provides a computer program product. When the computer program product runs on a computer, the computer is enabled to perform the floating window management method according to the first aspect.

According to this application, when displaying a floating window used for a video call, the electronic device may hide the floating window based on a user operation, and the electronic device may further re-invoke the hidden floating window based on a user operation. In addition, in the foregoing process, when the electronic device continuously keeps the video call, the floating window is prevented from blocking a user interface, to improve convenience of the user operation.

### BRIEF DESCRIPTION OF DRAWINGS

FIG. 1A is a schematic diagram of a video call interface according to this application;
FIG. 1B is a schematic diagram of a floating window according to this application;
FIG. 2A is a schematic diagram of a structure of an electronic device according to this application;
FIG. 2B is a block diagram of a software structure of an electronic device according to this application;
FIG. 2C-1 and FIG. 2C-2 are a schematic diagram of working procedures of software and hardware of an electronic device according to this application;
FIG. 3 is a schematic diagram of a video call interface according to an embodiment of this application;
FIG. 4A to FIG. 4F are schematic diagrams of a group of interfaces according to an embodiment of this application;
FIG. 5A to FIG. 5I are schematic diagrams of another group of interfaces according to an embodiment of this application;
FIG. 6 is a schematic diagram of an interface according to an embodiment of this application;
FIG. 7A to FIG. 7G are schematic diagrams of another group of interfaces according to an embodiment of this application;
FIG. 8A to FIG. 8D are schematic diagrams of another group of interfaces according to an embodiment of this application;
FIG. 9A to FIG. 9G are schematic diagrams of another group of interfaces according to an embodiment of this application;
FIG. 10A to FIG. 10F are schematic diagrams of another group of interfaces according to an embodiment of this application;
FIG. 11A to FIG. 11D are schematic diagrams of another group of interfaces according to an embodiment of this application;
FIG. 12A to FIG. 12F are schematic diagrams of another group of interfaces according to an embodiment of this application;
FIG. 13A and FIG. 13B are schematic diagrams of another group of interfaces according to an embodiment of this application;
FIG. 14A to FIG. 14D are schematic diagrams of another group of interfaces according to an embodiment of this application;
FIG. 15 is a schematic diagram of a button of an electronic device according to an embodiment of this application;
FIG. 16A and FIG. 16B are schematic diagrams of another group of interfaces according to an embodiment of this application;
FIG. 17A to FIG. 17G are schematic diagrams of another group of interfaces according to an embodiment of this application;
FIG. 18A to FIG. 18F are schematic diagrams of another group of interfaces according to an embodiment of this application;
FIG. 19A to FIG. 19H are schematic diagrams of another group of interfaces according to an embodiment of this application;
FIG. 20A to FIG. 20F are schematic diagrams of another group of interfaces according to an embodiment of this application;
FIG. 21A is a schematic diagram of a foldable screen according to an embodiment of this application;
FIG. 21B is a schematic diagram of a hole-punch display according to an embodiment of this application; and
FIG. 22A to FIG. 22B are schematic diagrams of another group of interfaces according to an embodiment of this application.

### DESCRIPTION OF EMBODIMENTS

The following clearly describes technical solutions in the embodiments of this application in detail with reference to accompanying drawings. In descriptions of the embodiments of this application, unless otherwise stated, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of" means two or more.

The following first describes an electronic device in the embodiments of this application. A type of the described electronic device is not specifically limited in this application. The electronic device may be a portable electronic device such as a mobile phone, a tablet computer, a personal digital assistant (personal digital assistant, PDA), a wearable device, or a laptop (laptop). An example embodiment of the portable electronic device includes but is not limited to a portable electronic device using iOS, Android, Microsoft, or another operating system. The portable electronic device may alternatively be another portable electronic device, for example, a laptop (laptop) with a touch-sensitive surface (for example, a touch panel). It should be further understood that, in some other embodiments of this application, the electronic device may alternatively be not a portable electronic device, but a desktop computer with a touch-sensitive surface (for example, a touch panel) or a smart television.

In this application, a display is disposed on the electronic device, and may be configured to display interface content currently output by a system of the electronic device. The interface content may include an interface of a running application, a system-level menu, and the like, and may specifically include the following interface elements: input interface elements, for example, a button (button), a text (text) input box, a scroll bar (scroll Bar), a menu (menu), and the like, and output interface elements, for example, a window (window) and a label (label).

In this application, the display may be configured to display both a first user interface and a floating window.

In a possible implementation, the floating window is stacked on the first user interface. Herein, when the display displays the first user interface and the floating window in a stacked manner, the floating window may be transparent. To be specific, a user may see some content in the first user interface in an area in which the floating window is located. The floating window may alternatively be opaque. To be specific, the user cannot see content in the first user interface in the area in which the floating window is located.

In another possible implementation, when the display displays the first user interface, an area in which the floating window is located on the display is not used to display the first user interface, but is used to display the floating window. In this implementation, when the display displays the floating window, the display may display a scaled-down first user interface, and the floating window does not block the first user interface.

In this application, a touch panel is disposed on the display of the electronic device. In other words, the display is a touchscreen, and may be configured to receive a touch operation of the user. The touch operation is an operation that the user directly contacts the display by using a body part or a stylus. In some optional embodiments, the touchscreen may be further configured to receive a floating touch operation of the user. The floating touch operation is an operation that a hand of the user is floated above the display and is not in contact with the display.

In some optional embodiments of this application, the touchscreen of the electronic device may receive a user operation used to trigger the electronic device to hide the floating window.

In some optional embodiments of this application, the touchscreen of the electronic device may further receive a user operation used to trigger the electronic device to invoke the hidden floating window.

In some optional embodiments of this application, the touchscreen of the electronic device may further receive a user operation used to trigger the electronic device to invoke the hidden floating window and display, in full screen mode, an application interface corresponding to the floating window.

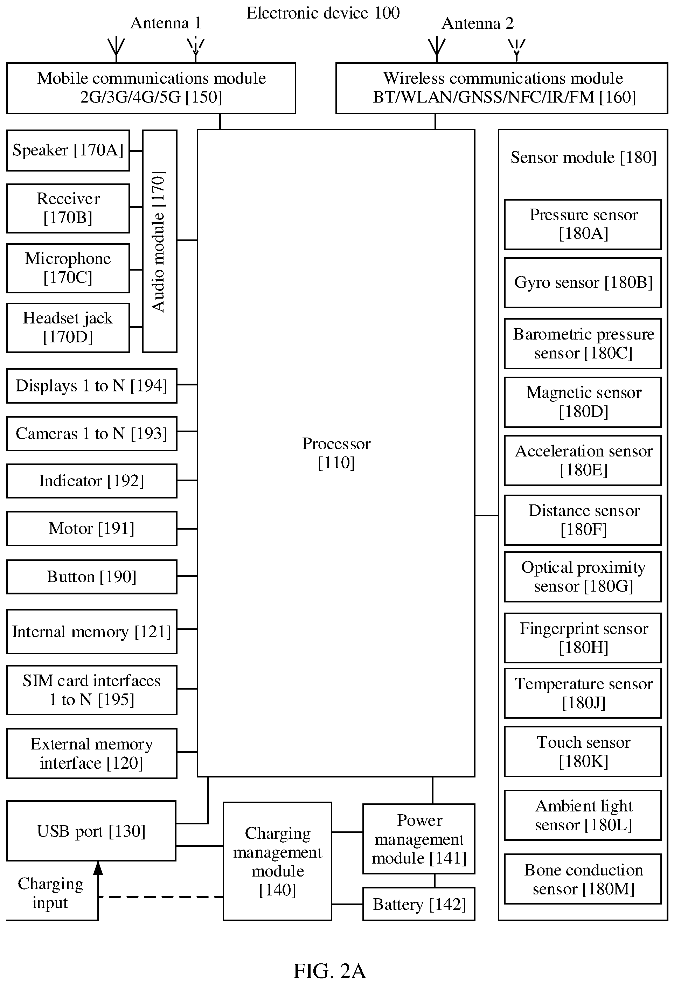

FIG. 2A is a schematic diagram of a structure of an example electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or may have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

It can be understood that an interface connection relationship between the modules in this embodiment of this application is merely an example for description, and does not constitute a limitation on the structure of the electronic device 100. In some other embodiments of this application, the electronic device 100 may alternatively use an interface connection manner different from an interface connection manner in this embodiment, or a combination of a plurality of interface connection manners.

The charging management module 140 is configured to receive a charging input from the charger.

The power management module 141 is configured to connect the battery 142 and the charging management module 140 to the processor 110. The power management module 141 receives an input of the battery 142 and/or the charging management module 140, and supplies power to the processor 110, the internal memory 121, an external memory, the display 194, the camera 193, the wireless communications module 160, and the like.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave through the antenna 1 for radiation.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 may be one or more devices that integrate at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

The electronic device 100 implements a display function by using the GPU, the display 194, the application processor, and the like. The GPU is a microprocessor for image processing, and connects the display 194 to the application processor. The GPU is configured to: perform mathematical and geometric calculation, and render an image. The processor 110 may include one or more GPUs that execute program instructions to generate or change display information.

The display 194 is configured to display an image, a video, and the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal.

The video codec is configured to: compress or decompress a digital video. The electronic device 100 may support one or more video codecs.

The external memory interface 120 may be configured to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to produce an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. In some embodiments, the electronic device 100 uses an eSIM, namely, an embedded SIM card. The eSIM card may be embedded into the electronic device 100 and cannot be separated from the electronic device 100.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

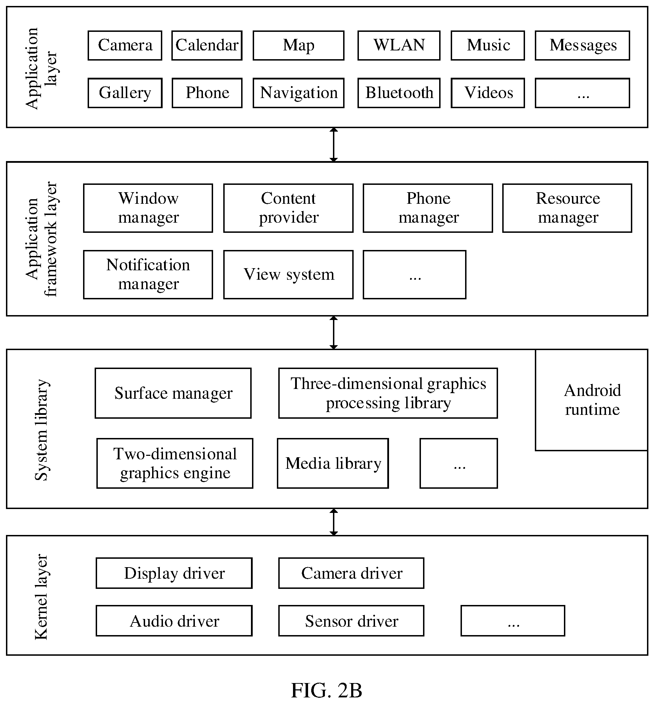

FIG. 2B is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers, that is, an application layer, an application framework layer, an Android runtime (Android runtime) and system library, and a kernel layer from top to bottom.

The application layer may include a series of application packages.

As shown in FIG. 2B, the application package may include applications such as Camera, Gallery, Calendar, Phone, Map, Navigation, WLAN, Bluetooth, Music, Videos, and Messages.

In this application, a floating launcher (floating launcher) may be further added to the application layer, is used as a default display application in the foregoing floating window, and is provided for the user to enter another application.

The application framework layer provides an application programming interface (application programming interface, API) and a programming framework for an application at the application layer. The application framework layer includes some predefined functions.

As shown in FIG. 2B, the application framework layer may include a window manager (window manager), a content provider, a view system, a phone manager, a resource manager, a notification manager, an activity manager (activity manager), and the like.

In this application, a motion detector (motion detector) may be further added to the application framework layer, to perform logical determining on an obtained input event and identify a type of the input event. For example, the motion detector determines, based on information such as touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, an input manager (input manager), an input dispatcher (input dispatcher), a surface manager (surface manager), a media library (Media Library), a three-dimensional graphics processing library (for example, OpenGL ES), and a 2D graphics engine (for example, SGL).

The kernel layer is a layer between hardware and software. The kernel layer includes at least a display driver, a camera driver, an audio driver, and a sensor driver.

The following describes examples of working procedures of software and hardware of the electronic device 100 with reference to a floating window management method in this application.

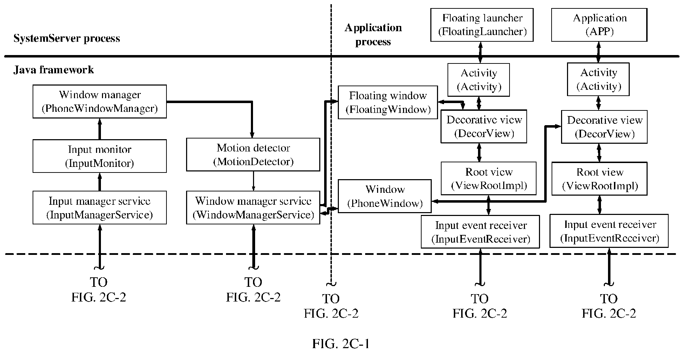

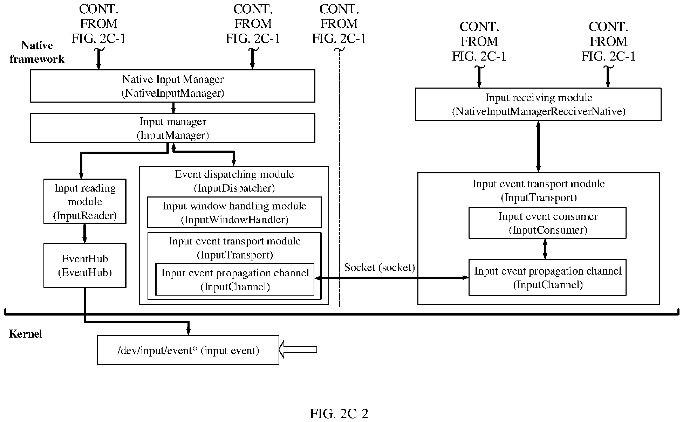

Refer to FIG. 2C-1 and FIG. 2C-2. A kernel, a Native framework, a Java framework, a SystemServer process, and an application process in FIG. 2C-1 and FIG. 2C-2 respectively correspond to the kernel layer, the system library, the application framework layer, and the application layer in FIG. 2B.

When the touch sensor 180K receives a touch operation, a corresponding hardware interruption is sent to the kernel layer. The kernel layer processes the touch operation into an original input event, that is, /dev/input/event* in FIG. 2C-2. The original input time includes information such as touch coordinates and a timestamp of the touch operation.

The original input event is stored at the kernel layer. The input manager (input manager) of the system library obtains an original input event from the kernel layer, parses and encapsulates the original input event, and sends the original input event to the input dispatcher (input dispatcher). After receiving an input event from the input manager, the input dispatcher dispatches the input event to a proper window.

The motion detector (motion detector) at the application framework layer obtains the encapsulated input event from the input manager and performs logical determining on the event. For example, the touch operation received by the touch sensor 180K is that a finger of the user slides on the display to drag the floating window to an area in which the status bar is located. The motion detector may determine, based on a pressure value of the display, a capacitance value, touch coordinates, a location of the floating window, and the like in the input event, that the input event is that the user drags the floating window to the area in which the status bar is located. If a logical determining result conforms to a gesture of hiding the floating window, a launcher of hiding the floating window is invoked to stop displaying the floating window on interface content currently output on the display.

A video call scenario is used as an example. The following first describes some user interfaces in a video call scenario implemented on the electronic device 100 according to an embodiment of this application.

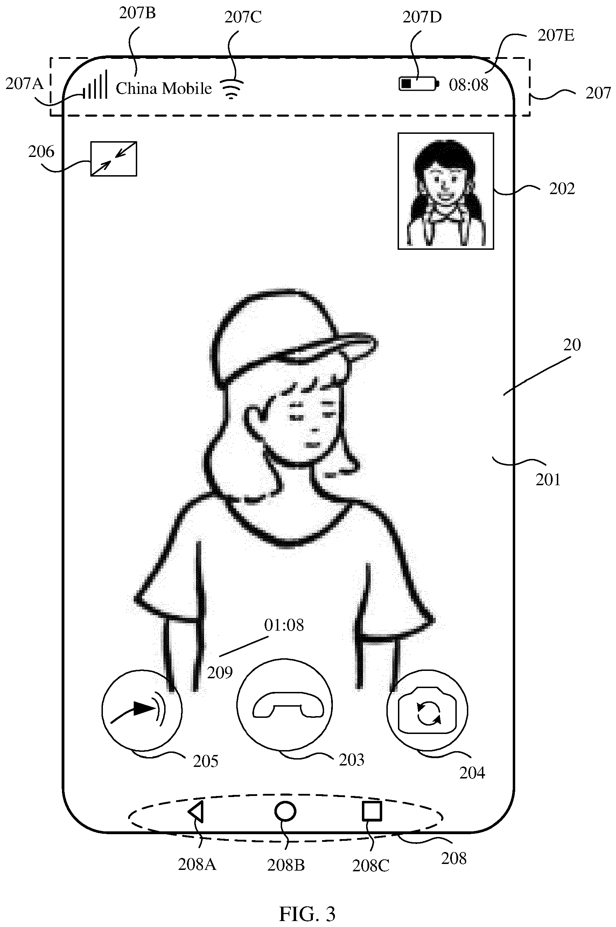

For example, as shown in FIG. 3, the display 194 of the electronic device 100 displays interface content 20 currently output by the system, and the interface content 20 is a video call interface. In this application, a touch panel is disposed on the display 194, and may be configured to receive a touch operation of the user. The touch operation is an operation that the user contacts the display 194 by using a hand, an elbow, a stylus, or the like.

FIG. 3 shows a user interface used for a video call. The user interface is a video call interface provided by WeChat. In addition, the user interface may alternatively be an interface provided by another application for a video call, and the another application may be, for example, instant messaging software such as QQ, FaceTime of Apple, or MSN.

As shown in FIG. 3, a user interface 20 used for a video call may include a video display area 201, a window switching control 202, a hang-up control 203, a camera switching control 204, a voice switching control 205, a window scale-down control 206, a status bar 207, a navigation bar 208, and a call duration indicator 209. An electronic device used by a local user is the electronic device 100.

The video display area 201 is configured to display an image collected by a camera of an electronic device (or the electronic device 100) of a video contact.

The window switching control 202 is configured to display an image collected by a camera of the electronic device 100 (or the electronic device of the video contact), and may also be configured to switch a video window. When the electronic device 100 may detect a touch operation performed on the window switching control 202 (for example, a tap operation on the window switching control 202), in response to the operation, the electronic device 100 may switch an image displayed in the video display area 201 and an image displayed in the window switching control 202.

For example, if the video display area 201 displays the image collected by the camera of the electronic device of the video contact, the window switching control 202 displays the image collected by the camera 193 of the electronic device 100. After the electronic device 100 detects the touch operation performed on the window switching control 202, in response to the operation, the electronic device 100 switches content displayed in the video display area 201 to the image collected by the camera 193 of the electronic device 100, and simultaneously switches content displayed in the window switching control 202 to the image collected by the camera of the electronic device of the video contact.

Conversely, if the video display area 201 displays the image collected by the camera 193 of the electronic device 100, the window switching control 202 displays the image collected by the camera of the electronic device of the video contact. After the electronic device 100 detects the touch operation performed on the window switching control 202, in response to the operation, the electronic device 100 switches content displayed in the video display area 201 to the image collected by the camera of the electronic device of the video contact, and simultaneously switches content displayed in the window switching control 202 to the image collected by the camera 193 of the electronic device 100.

The hang-up control 203 is configured to disconnect the video call. When the electronic device 100 may detect a touch operation performed on the hang-up control 203 (for example, a tap operation on the hang-up control 203), the electronic device 100 may disconnect the video call in response to the operation.

The camera switching control 204 is configured to switch between cameras. When the electronic device 100 may detect a touch operation performed on the camera switching control 204 (for example, a tap operation on the camera switching control 204), the electronic device 100 may switch between cameras in response to the operation. For example, the camera of the electronic device 100 is switched from a front-facing camera to a rear-facing camera, or the camera of the electronic device 100 is switched from a rear-facing camera to a front-facing camera.

The voice switching control 205 is configured to switch the video call to a voice call. When the electronic device 100 may detect a touch operation performed on the voice switching control 205 (for example, a tap operation on the voice switching control 205), in response to the operation, the electronic device 100 may switch the video call to a voice call, and turn off the camera 193.

The window scale-down control 206 is configured to scale down a window. When the electronic device 100 may detect a touch operation performed on the window scale-down control 206 (for example, a tap operation on the window scale-down control 206), in response to the operation, the electronic device 100 may scale down a current video window to obtain a floating window, display the floating window at a preset location on the display, and display, in the scaled-down window, the image collected by the camera of the electronic device of the video contact.

The floating window is used to display the image collected by the camera of the electronic device 100 (and/or the electronic device of the video contact), and may also be used to switch a current user interface to a video call interface. When the electronic device 100 may detect a touch operation performed on the floating window (for example, a tap operation on the floating window), in response to the operation, the electronic device 100 may scale up the floating window to obtain the video call interface.

The status bar 207 may include one or more signal strength indicators 207A of a mobile communications signal (also referred to as a cellular signal), an operator name (for example, "China Mobile") 207B, one or more signal strength indicators 207C of a wireless fidelity (wireless fidelity, Wi-Fi) signal, a battery status indicator 207D, and a time indicator 207E.

The navigation bar 208 may include system navigation buttons such as a return button 208A, a home screen (Home screen) button 208B, and a historical call-out task button 208C. A home screen is an interface displayed by the electronic device 100 after a user operation performed on the home screen button 208B is detected in any user interface. When the electronic device 100 detects a touch operation performed on the return button 208A, the electronic device 100 may display a previous user interface of a current user interface. When the electronic device 100 detects a touch operation performed on the home screen button 208B, the electronic device 100 may display the home screen. When the electronic device 100 detects a touch operation performed on the historical call-out task button 208C, the electronic device 100 may display a task last opened by the user. Each navigation button may have another name. For example, 208A may be referred to as a back button, 208B may be referred to as a home button, and 208C may be referred to as a menu button. This is not limited in this application. The navigation buttons in the navigation bar 208 are not limited to virtual buttons, and may also be implemented as physical buttons. In some possible embodiments, the system navigation buttons such as the return button 208A, the home screen (Home screen) button 208B, or the historical call-out task button 208C may also be referred to as a second control.

The call duration indicator 209 is used to indicate duration of a current video call.

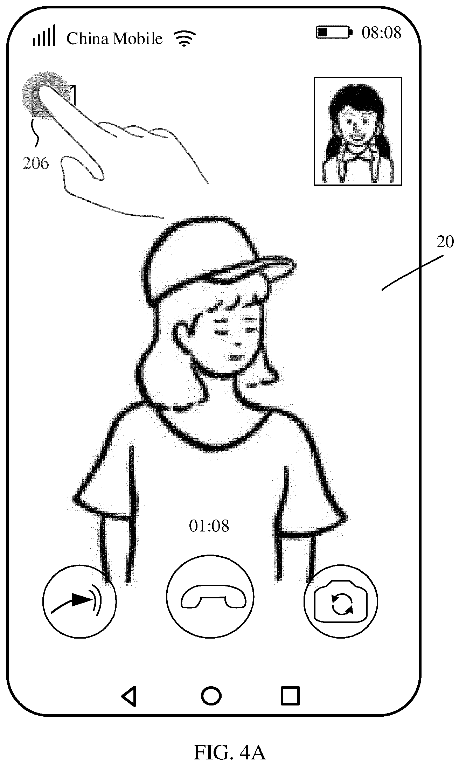

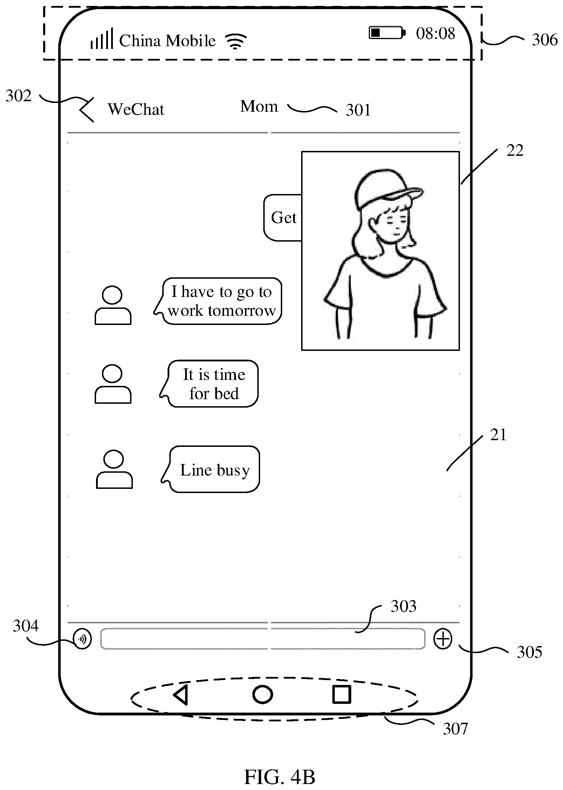

For example, as shown in FIG. 4A and FIG. 4B, when the electronic device 100 detects a tap operation performed on the window scale-down control 206, in response to the operation, the electronic device 100 displays both a chat interface 21 of a video contact and a floating window 22 on the display. The floating window 22 is displayed in the chat interface 21 of the video contact in a floating manner, and the floating window 22 displays an image collected by a camera of an electronic device of the video contact.

As shown in FIG. 4B, the chat interface 21 of the video contact may include a contact identifier 301, an exit control 302, an input box 303, a voice trigger control 304, an add control 305, a status bar 306, and a navigation bar 307.

The contact identifier 301 is used to indicate an identity of a current call object.

The exit control 302 may be configured to exit a current user interface. When the electronic device 100 may detect a touch operation performed on the exit control 302 (for example, a tap operation on the exit control 302), the electronic device 100 may exit the current user interface in response to the operation.

The input box 303 may be configured to input chat content, where the chat content may include a text, an emoticon, a picture, and the like. When the electronic device 100 may detect a touch operation performed on the input box 303 (for example, a tap operation on the input box 303), the electronic device 100 may display an input keyboard in response to the operation.

The voice trigger control 304 may be configured to invoke a voice input control. When the electronic device 100 may detect a touch operation performed on the voice trigger control 304 (for example, a tap operation on the voice trigger control 304), the electronic device 100 may display the voice input control in response to the operation. The user can tap (or touch and hold) the voice input control to input and send a voice.

The add control 305 may be configured to invoke an add menu. When the electronic device 100 may detect a touch operation performed on the add control 305 (for example, a tap operation on the add control 305), the electronic device 100 may display the add menu in response to the operation. The add menu may include the following icons: Album, Camera, Video call, Location, Red packet. Transfer, and Voice input.

The status bar 306 is the same as the status bar 207 in the user interface 20. Details are not described herein.

The navigation bar 307 is the same as the status bar 207 in the user interface 20. Details are not described herein.

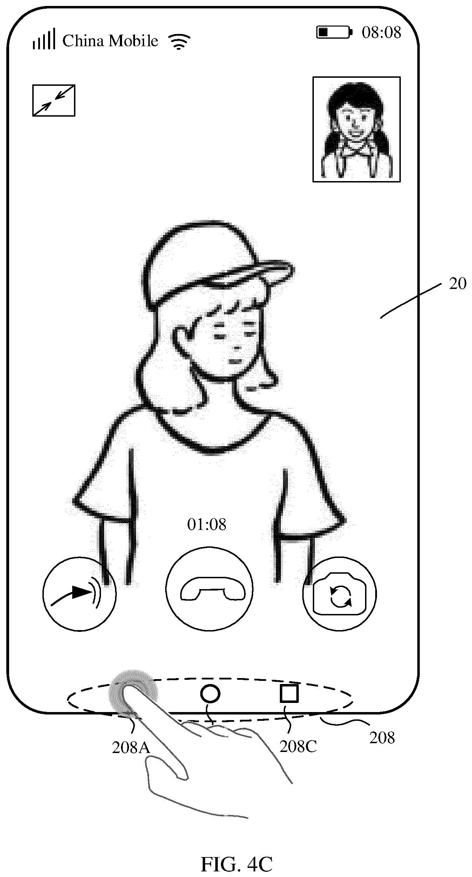

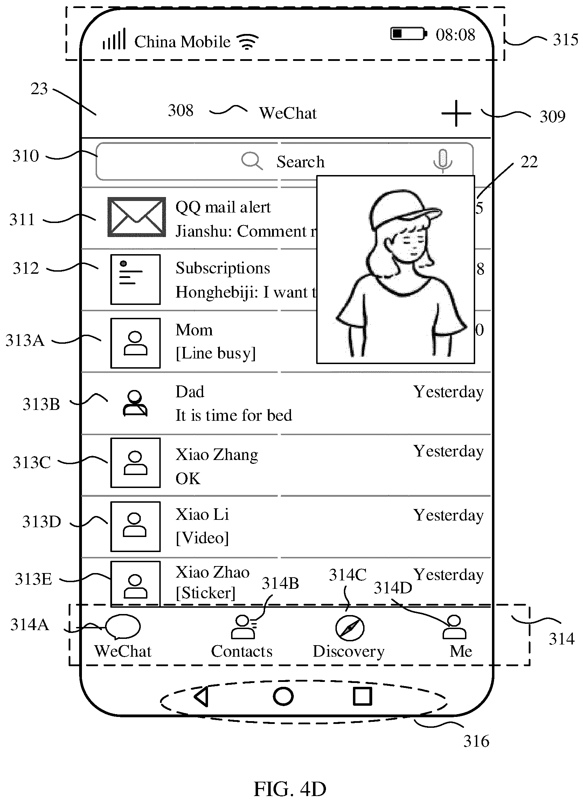

For example, as shown in FIG. 4C and FIG. 4D, the current user interface is a user interface 23 used for a video call. When the electronic device 100 detects a tap operation performed on the return button 208A, in response to the operation, the electronic device 100 displays a previous user interface of the user interface 20, that is, a contact list interface 23, displays a floating window 22 at a preset location on the display, and displays a video image in the video display area 201 in the floating window 22, that is, the image collected by the camera of the electronic device of the video contact.

As shown in FIG. 4D, the electronic device 100 may display the user interface 23 on the display in full screen mode. The user interface 51 may include an application title bar 308, a control 309, a search box 310, a QQ mail alert 311, subscriptions 312, one or more contact chat bars such as 313A to 313E, a menu 314, a status bar 315, and a navigation bar 316.

The application title bar 502 may be used to indicate that a current page is used to display related interface information of the WeChat application.

The control 309 may receive a user operation (for example, a touch operation). In response to the detected user operation, the electronic device 100 may display other controls, for example, Add contacts and New chat.

The one or more contact chat bars are used to display one or more chat records of one or more contacts. For example, the chat bar 313A may receive a user operation (for example, a touch operation). In response to the detected user operation, the electronic device 100 may display a chat interface of a contact corresponding to the chat bar 313A. A latest chat time point is displayed on the chat bar 313A.

The menu 314 includes a control 314A, a control 3114B, a control 314C, and a control 314D. Content displayed in the contact list interface 23 is related to a currently selected control in the menu 314. As shown in FIG. 4D, in the current menu 314, if the control 314A is selected, the user interface 51 is configured to display the one or more chat records of the one or more contacts; if the control 314B is selected, that is, when the control 314B receives a user operation (for example, a touch operation), the electronic device 100 may display a WeChat friend list in response to the detected user operation; and if the control 314C is selected, that is, when the control 314C receives a user operation (for example, a touch operation), the electronic device 100 may display controls such as Moments and Scan in response to the detected user operation. If the control 314D is selected, that is, when the control 314D receives a user operation (for example, a touch operation), the electronic device 100 may display account information of the user in response to the detected user operation.

The status bar 315 is the same as the status bar 207 in the user interface 20. Details are not described herein.

The navigation bar 316 is the same as the navigation bar 208 in the user interface 20. Details are not described herein.

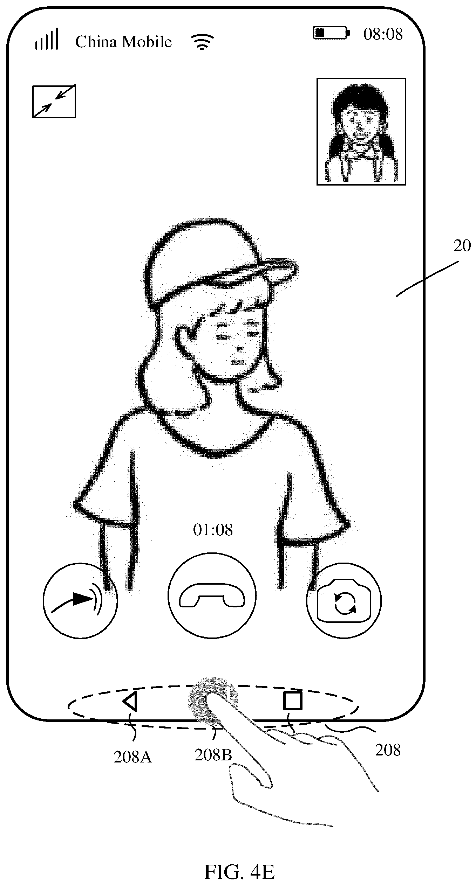

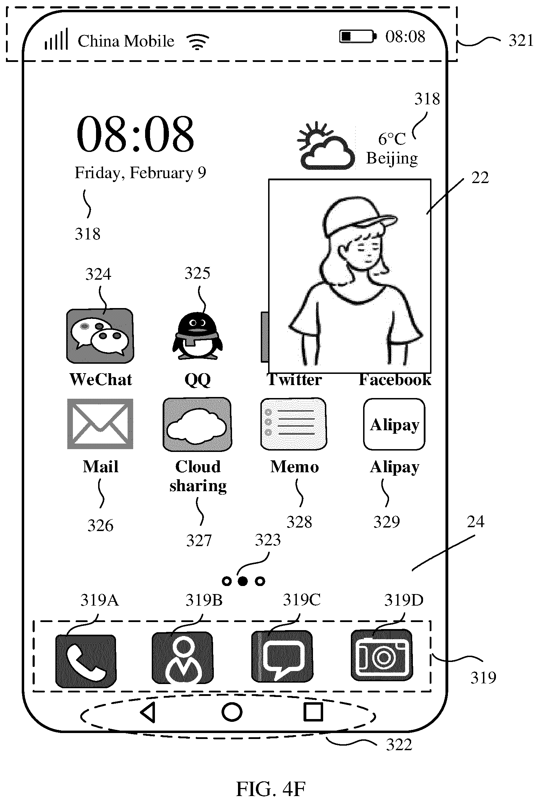

For example, as shown in FIG. 4E and FIG. 4F, the current user interface is the user interface 20 used for a video call. When the electronic device 100 detects a tap operation performed on the home screen button 208B, in response to the operation, the electronic device 100 displays a home screen 24, displays a floating window 22 on the home screen 24, and displays a video image in the video display area 201 in the floating window 22, that is, the image collected by the camera of the electronic device of the video contact.

As shown in FIG. 4F, the home screen 24 may further include a calendar indicator 317, a weather indicator 318, a tray 319 having frequently used application icons, a page indicator 320, a status bar 321, and a navigation bar 322.

The calendar indicator 317 may be used to indicate current time, for example, a date, a day of a week, and hour-minute information.

The weather indicator 318 may be used to indicate a weather type, for example, Clouds Early/Clearing Late or Light Rain, and may be further used to indicate information such as a temperature.

The tray 319 having the frequently used application icons may display a Phone icon 319A, a Contacts icon 319B, a Messages icon 319C, and a Camera icon 319D.

For example, other application icons may include a WeChat (WeChat) icon 323, a QQ icon 324, a Mail icon 325, a Cloud sharing icon 326, a Memo icon 327. and an Alipay icon 328. The home screen 24 may further include a page indicator 329. The other application icons may be distributed on a plurality of pages, and the page indicator 213 may be used to indicate a specific page on which an application is currently browsed by the user. The user may swipe left or right in an area of other application icons to browse application icons on other pages.

The status bar 321 is the same as the status bar 321 in the user interface 20. Details are not described herein.

The navigation bar 322 is the same as the navigation bar 208 in the user interface 20. Details are not described herein.

According to the floating window management method provided in this application, a currently displayed floating window may be hidden, and the hidden floating window may be re-invoked.

A video call scenario is used as an example. The following describes a video call scenario and an embodiment of a user interface in the video call scenario in the embodiments of this application.

As shown in FIG. 3, in the specific application scenario, when making a video call, the user may tap the window scale-down control 206, the return button 208A, or the home screen button 208B in the video call interface 20, so that the electronic device 100 exits the current video call interface 20, displays the floating window 22 on the display 194, and displays, in the floating window, the image collected by the camera of the electronic device (or the electronic device 100) of the video contact. From a perspective of a display effect, the electronic device 100 scales down a video call window to obtain the floating window 22 used for the video call. Based on a requirement of the user, in this embodiment of this application, the floating window 22 may be hidden, to prevent the floating window 22 from blocking other interface content, so as to prevent the floating window 22 from affecting a user operation on the other interface content. In addition, the user expects the floating window 22 to keep running in the background, so that the user can re-invoke the floating window 22.

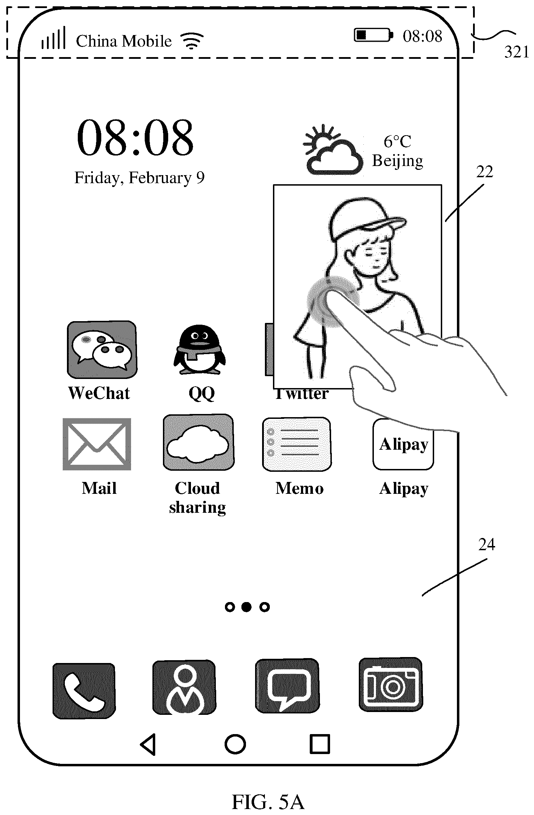

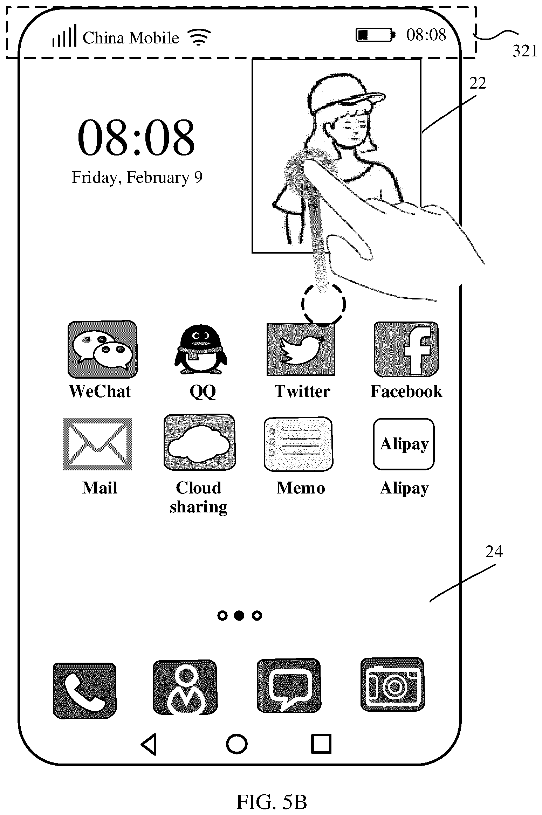

In this application, the floating window 22 is movable. When the electronic device 100 detects a drag operation performed on the floating window 22, the electronic device 100 moves a location of the floating window 22 on the display 194 in response to the operation. The drag operation may be that a finger of the user slides on the display 194, and a sliding start point is in the floating window 22. As shown in FIG. 5A and FIG. 5B, in a movement process of the floating window 22, a relative location between a finger of the user and the floating window remains unchanged.

In this application, movement of the floating window 22 on the home screen 24 includes the following two cases.

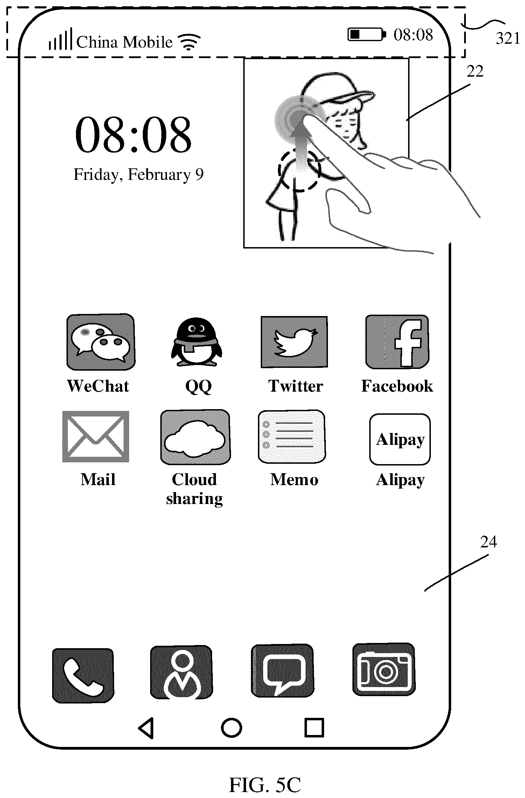

Case 1: The floating window and the status bar on the display 194 of the electronic device 100 cannot be displayed in an overlapping manner. As shown in FIG. 5A, FIG. 5B, and FIG. 5C, the finger of the user slides on the display 194 to drag the floating window 22 to move upward. When an upper edge of the floating window 22 coincides with a lower edge of the status bar 321, if the finger of the user continues to slide upward on the display 194, the floating window 22 cannot continue to move upward, that is, a vertical location of the floating window 22 remains unchanged. In this application, that the upper edge of the floating window 22 coincides with the lower edge of the status bar 321 means that a distance between the upper edge of the floating window 22 and the lower edge of the status bar 321 is 0, or means that a distance between the upper edge of the floating window 22 and the lower edge of the status bar 321 is less than or equal to a minimum. For example, the minimum is equal to 0.1 mm.

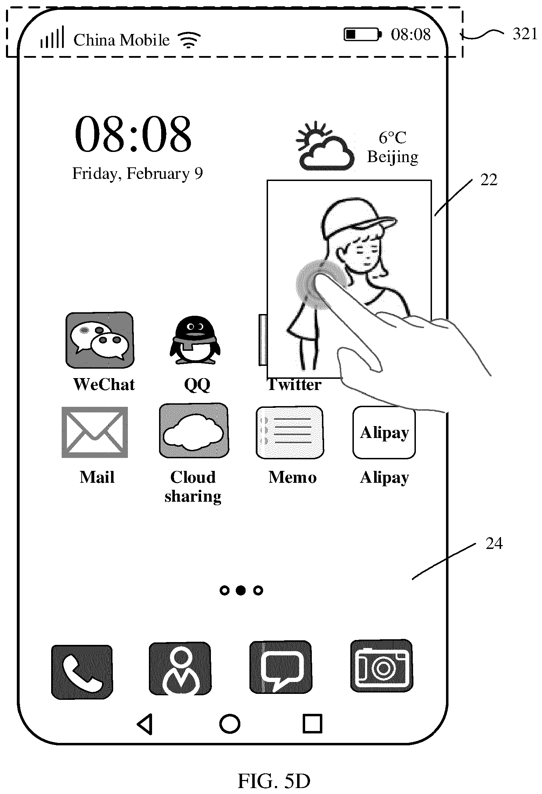

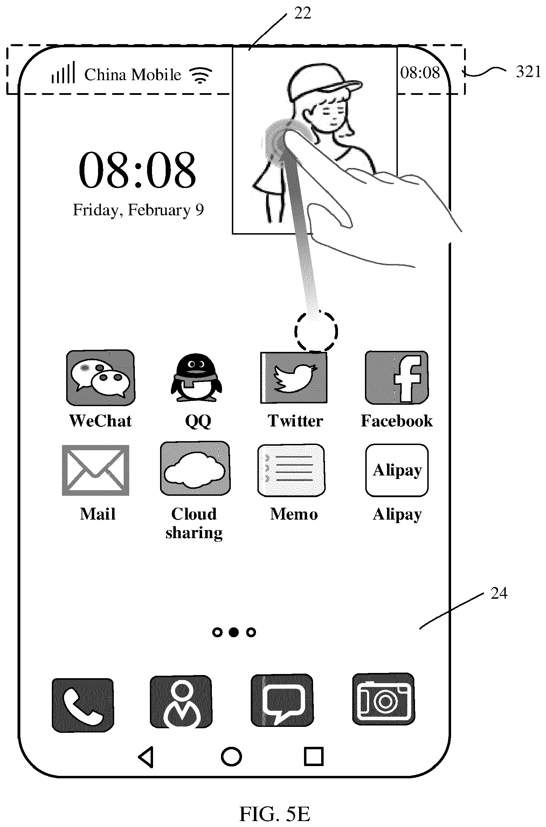

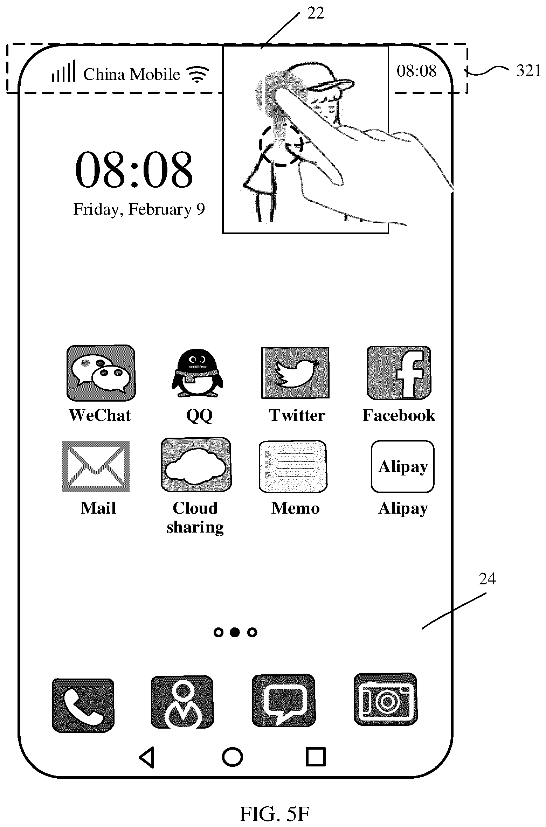

Case 2: The floating window and the status bar on the display 194 of the electronic device 100 may be displayed in an overlapping manner, and after an upper edge of the floating window 22 coincides with an upper edge of the status bar 321, the floating window 22 cannot continue to move upward. As shown in FIG. 5D, FIG. 5E, and FIG. 5F, the finger of the user slides on the display 194 to drag the floating window 22 to move upward. When the upper edge of the floating window 22 coincides with the lower edge of the status bar 321, if the finger of the user continues to slide upward on the display 194, the floating window 22 continues to move upward. After the upper edge of the floating window 22 coincides with an upper edge of the home screen 24, if the finger of the user continues to slide upward on the display 194, the floating window 22 cannot continue to move upward, that is, a vertical location of the floating window 22 remains unchanged, and a relative location between the finger of the user and the floating window changes. In this application, that the upper edge of the floating window 22 coincides with the upper edge of the status bar 321 means that a distance between the upper edge of the floating window 22 and the upper edge of the status bar 321 is 0, or means that a distance between the upper edge of the floating window 22 and the upper edge of the status bar 321 is less than or equal to a minimum. For example, the minimum is equal to 0.1 mm. Case 2 is not part of the claimed invention.

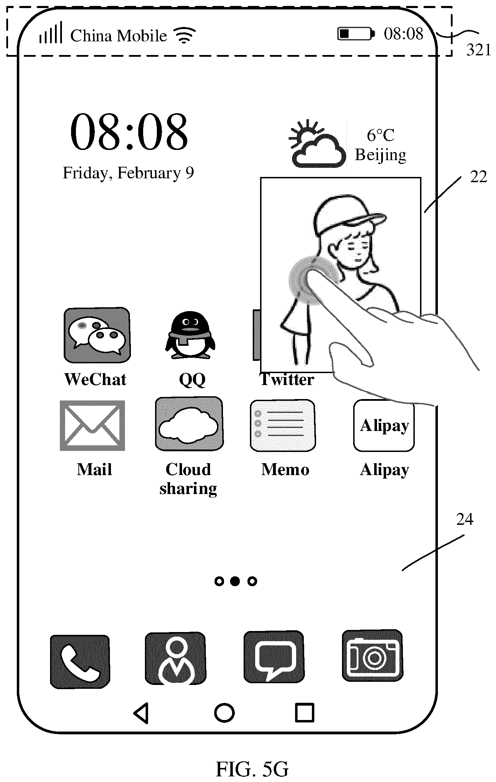

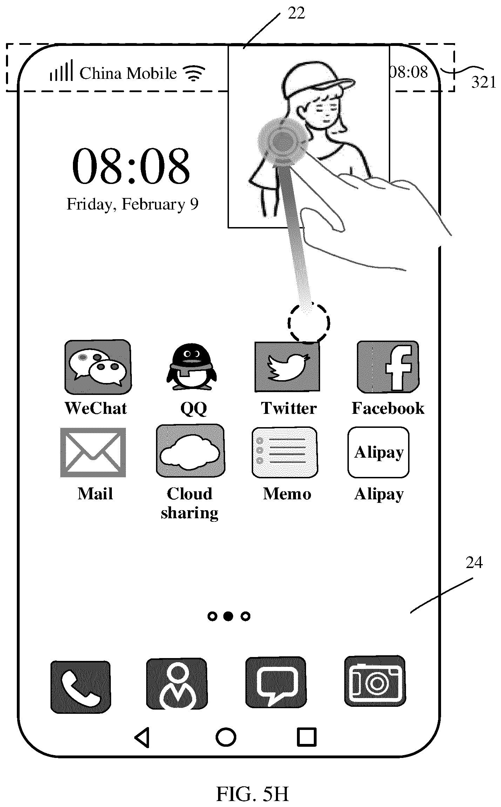

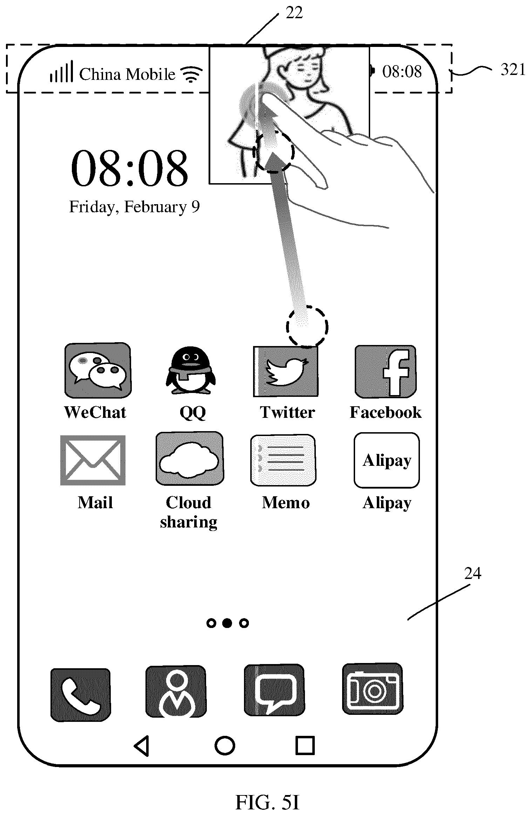

Case 3: The floating window and the status bar on the display 194 of the electronic device 100 may be displayed in an overlapping manner, and after an upper edge of the floating window 22 coincides with an upper edge of the status bar 321, the floating window 22 may continue to move upward. As shown in FIG. 5G, FIG. 5H, and FIG. 5I, the finger of the user slides on the display 194 to drag the floating window 22 to move upward. When the upper edge of the floating window 22 coincides with the upper edge of the status bar 321, if the finger of the user continues to slide upward on the display 194, the floating window 22 continues to move upward, and a relative location between the finger of the user and the floating window remains unchanged. Claim 3 is not part of the claimed invention.

In addition to the foregoing three cases, the movement process of the floating window 22 on the home screen 24 may further include another case. For example, after an upper edge of the floating window 22 coincides with a lower edge of the status bar 321, if the finger of the user continues to slide upward on the display 194, a form of a contact edge between the floating window 22 and the status bar 321 may be changed. A process of changing the form may be presented in a form of various animation effects. This is not specifically limited herein.

Detailed descriptions are provided below from the following two aspects.

Aspect 1: How to hide the floating window 22.

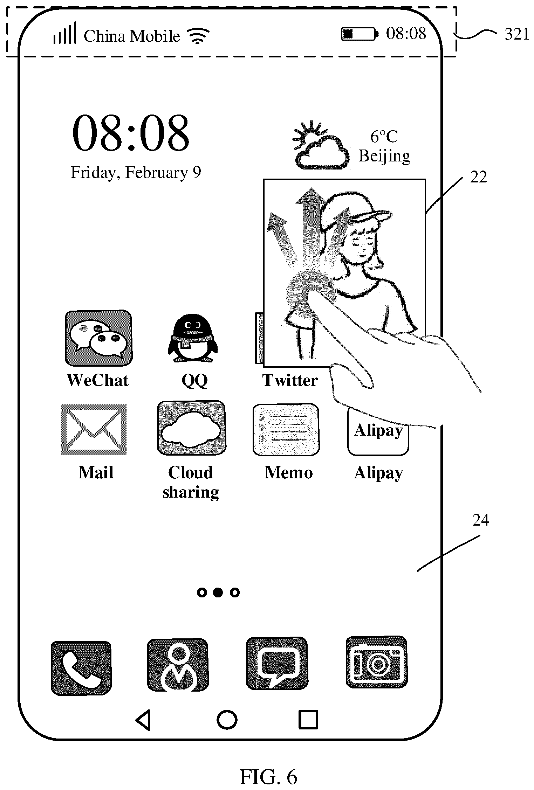

The floating window 22 in FIG. 4F is used as an example. An operation used to hide the floating window 22 may be referred to as a first user operation. When the user expects to hide the floating window 22, the user performs the first user operation. In response to the first user operation, the electronic device 100 stops displaying the floating window 22, and keeps the floating window 22 running in the background. The first user operation may be that the finger of the user slides on the display 194, to drag the floating window 22 to an area in which the status bar 321 is located. As shown in FIG. 6, a sliding start point of the finger of the user in the first user operation is in an area in which the floating window 22 is located, and a sliding trend of the finger of the user in the first user operation is toward the top of the home screen 24.

A finger pad of the finger of the user slides on the display 194, to drag the floating window 22 to the area in which the status bar 321 is located. In addition, in some embodiments of this application, the user may further slide on the display 194 by using another body part or a tool, to drag the floating window 22 to the area in which the status bar 321 is located. For example, the user may drag the floating window 22 by using a fingertip, a finger pad, an elbow, a stylus, or the like. This is not limited herein. For example, the user may slide on the display 194 by using a knuckle, to drag the floating window 22 to the area in which the status bar 321 is located. For example, the user may further slide on the display 194 by using a stylus, to drag the floating window 22 to the area in which the status bar 321 is located.

In a specific implementation, when the finger of the user contacts the display 194 of the electronic device 100, different finger parts such as a finger pad, a fingertip, and a knuckle may generate different vibration and/or acoustic effects, and generate corresponding signals (including a pressure value generated by the contact operation on the display 194, a capacitance value, an acceleration value generated for the electronic device, and the like). The signals generated by the different finger parts may be captured by using a sensor (for example, a capacitive touchscreen, a pressure touchscreen, an acceleration sensor, an impact sensor, a vibration sensor, an acoustic sensor, a displacement sensor, or a speed sensor) of the electronic device 100. Therefore, the electronic device 100 may identify, by using the captured signals, a finger part used by the user to touch the display 194. Further, the electronic device 100 may detect touch point coordinates of a location at which the finger of the user touches the display 194 in real time in the sliding process and a location of the floating window, and identify an input touch operation based on changes of the touch point coordinates in the sliding process and the location of the floating window.

In this application, a user operation used to trigger the electronic device 100 to hide the floating window 22 may be preset by a system of the electronic device 100, or may be set by the user based on an operation habit of the user.

For Case 1 and Case 2, the following separately describes the embodiment of the user interface in which the floating window 22 is hidden.

Based on Case 1, details are as follows:
The floating window and the status bar on the display 194 of the electronic device 100 cannot be displayed in an overlapping manner. The first user operation may be that the finger of the user slides on the display 194, to drag the floating window 22 upward to the status bar 321, and a first preset condition is met.

In some embodiments of this application, which are not part of the claimed invention, the first preset condition is that the upper edge of the floating window 22 coincides with the lower edge of the status bar 321. The electronic device 100 hides the floating window 22 after the electronic device 100 detects that the upper edge of the floating window 22 coincides with the lower edge of the status bar 321.

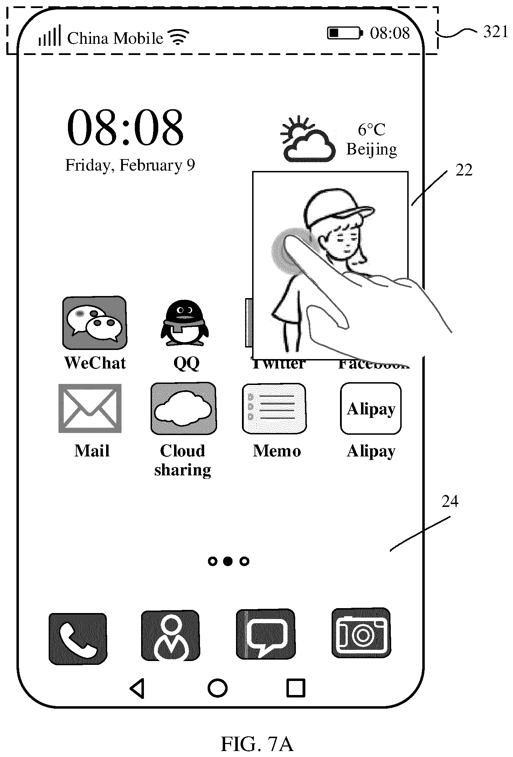

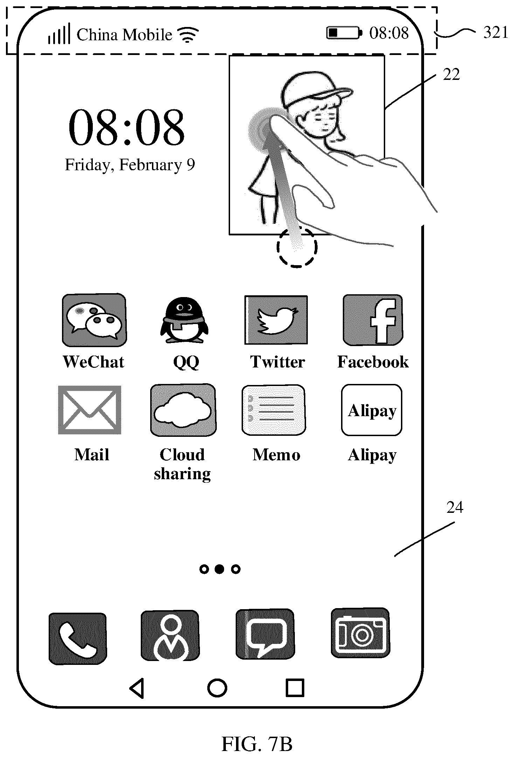

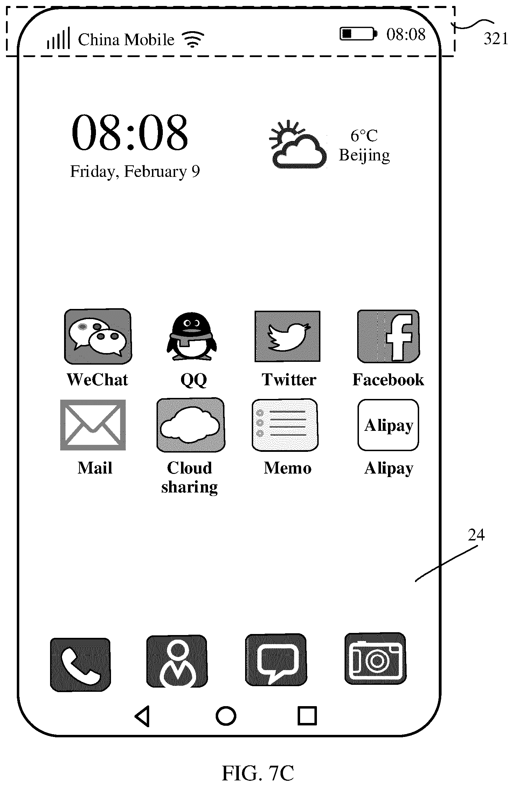

For example, as shown in FIG. 7A and FIG. 7B, the finger of the user slides on the display 194, to drag the floating window 30 to move on the home screen 24, until the upper edge of the floating window 22 coincides with the lower edge of the status bar 321. A sliding start point of the finger of the user is in the area in which the floating window 22 is located. As shown in FIG. 7C, when the electronic device 100 detects the user operation, in response to the user operation, the electronic device 100 stops displaying the floating window 22, and the electronic device 100 keeps the floating window 22 running in the background. It may be understood that regardless of whether the user continues to touch the area in which the floating window 22 is located on the display 194, the electronic device 100 may hide the floating window 22 provided that the electronic device 100 detects that the upper edge of the floating window 22 coincides with the lower edge of the status bar 321.

In some embodiments of this application, which are not part of the claimed invention, the first preset condition is that the upper edge of the floating window 22 coincides with the lower edge of the status bar 321, and the finger of the user stops sliding and stops touching the area in which the floating window 22 is located on the display 194.

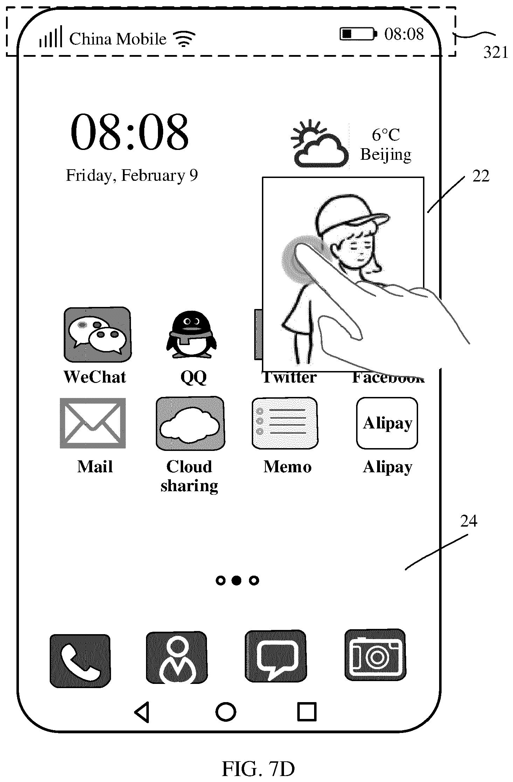

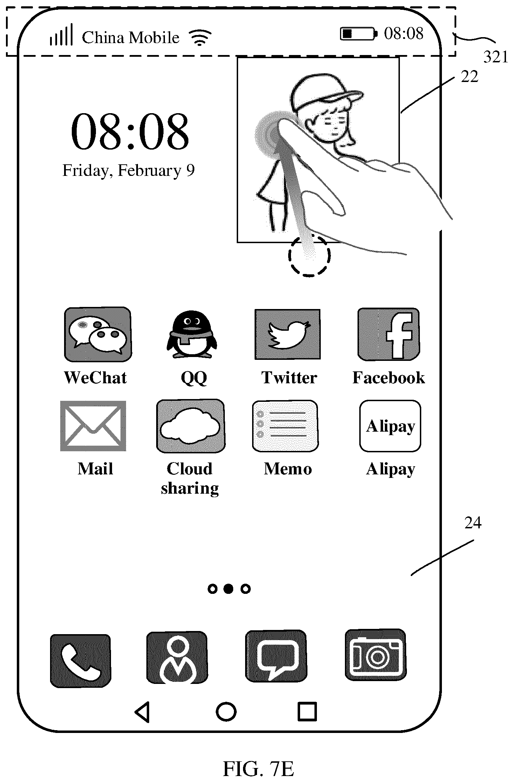

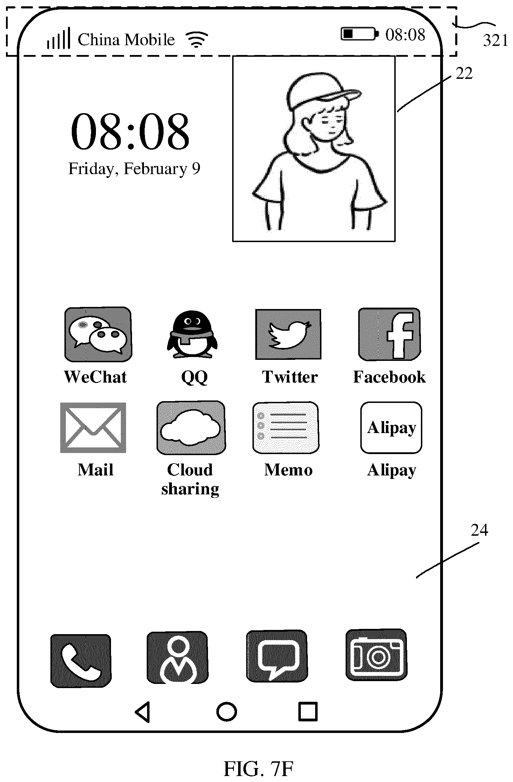

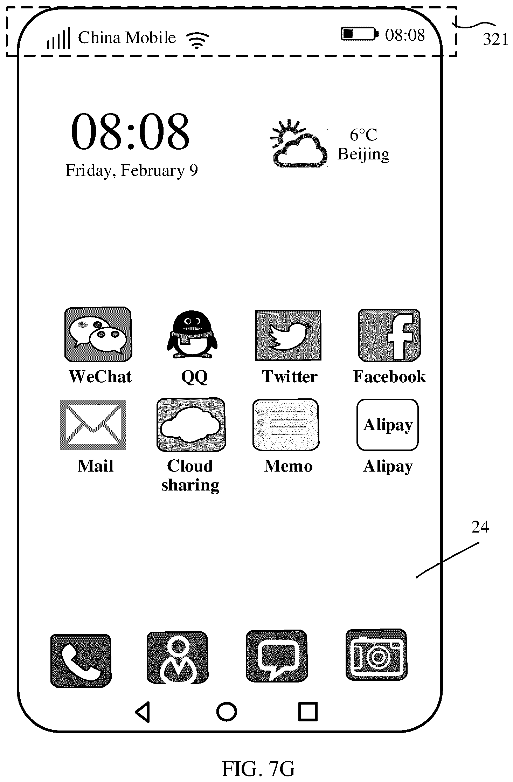

For example, as shown in FIG. 7D and FIG. 7E, the finger of the user slides on the display 194, to drag the floating window 30 to move on the home screen 24, until the upper edge of the floating window 22 coincides with the lower edge of the status bar 321. A sliding start point of the finger of the user is in the area in which the floating window 22 is located. As shown in FIG. 7F, the finger of the user stops sliding and stops touching the area in which the floating window 22 is located on the display 194. As shown in FIG. 7G, when the electronic device 100 detects the user operation, in response to the user operation, the electronic device 100 stops displaying the floating window 22, and the electronic device 100 keeps the floating window 22 running in the background.

In some embodiments of this application, the user operation that the finger of the user drags the floating window 22 to the area in which the status bar 321 is located may have the following two user intents:
User intent 1: The user performs a first user operation used to hide the floating window 22. The first user operation is that the finger of the user drags the floating window 22 to the area in which the status bar 321 is located, so that the upper edge of the floating window 22 coincides with the lower edge of the status bar 321.
User intent 2: The user intends to change a location of the floating window 30 on the display 194, so that the upper edge of the floating window 22 coincides with the lower edge of the status bar 321, and the user does not expect to hide the floating window 30.

In some embodiments of this application, different user operations are used to distinguish between the foregoing two user intents. In this application, a user operation used to implement the user intent 2 is referred to as a seventh user operation.

In some optional embodiments, the first preset condition of the first user operation may be that after the upper edge of the floating window 22 coincides with the lower edge of the status bar 321, the finger of the user continues to slide upward until a distance by which the finger of the user continues to slide upward reaches a first distance threshold. The first preset condition of the first user operation may alternatively be that after the upper edge of the floating window 22 coincides with the lower edge of the status bar 321, the finger of the user continues to slide upward, and when a distance by which the finger of the user continues to slide is greater than or equal to a first distance threshold, the finger of the user stops sliding and stops touching the display 194. The electronic device 100 detects the first user operation, and the electronic device 100 determines that the first user operation is used to implement the user intent 1. In response to the first user operation, the electronic device 100 stops displaying the floating window 22, and keeps the floating window 22 running in the background. The seventh user operation may be that the finger of the user drags the floating window 22 to the area in which the status bar 321 is located. After the upper edge of the floating window 22 coincides with the lower edge of the status bar 321, the finger of the user continues to slide upward, and when a distance by which the finger of the user continues to slide is less than a first distance threshold, the finger of the user stops sliding and stops touching the display 194. The electronic device 100 detects the seventh user operation, and the electronic device 100 determines that the user operation is used to implement the user intent 2. Therefore, the electronic device 100 continues to display the floating window 22. It may be understood that, in the seventh user operation, after the finger of the user drags the floating window 22 to the area in which the status bar 321 is located, the distance by which the finger of the user continues to slide upward may be equal to 0.

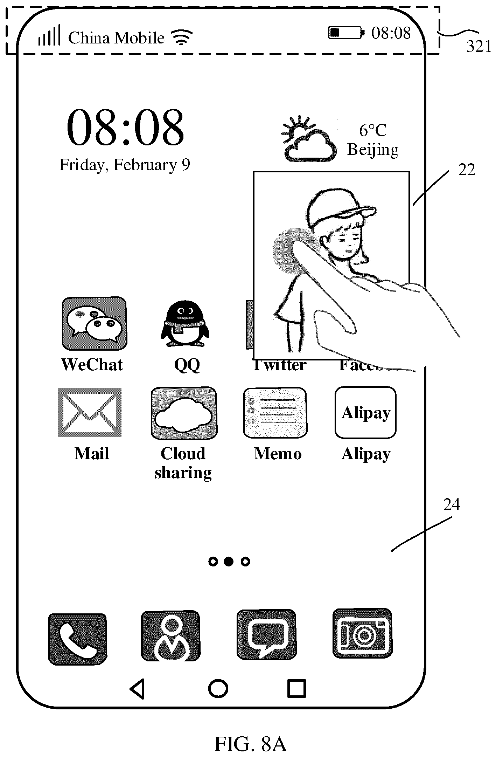

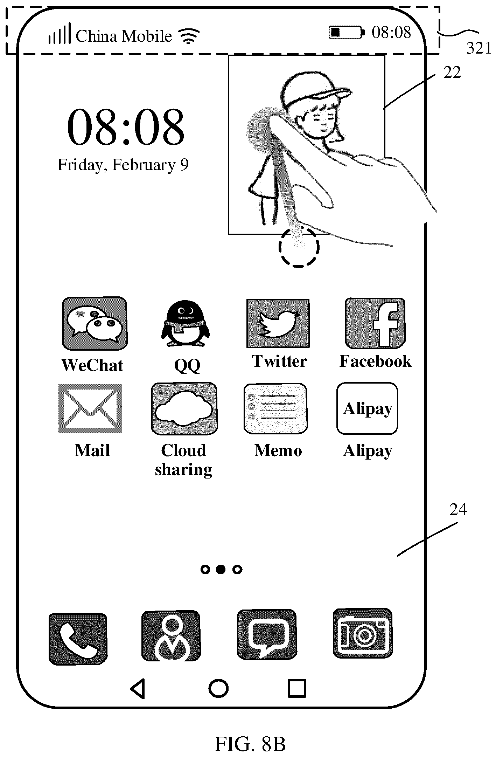

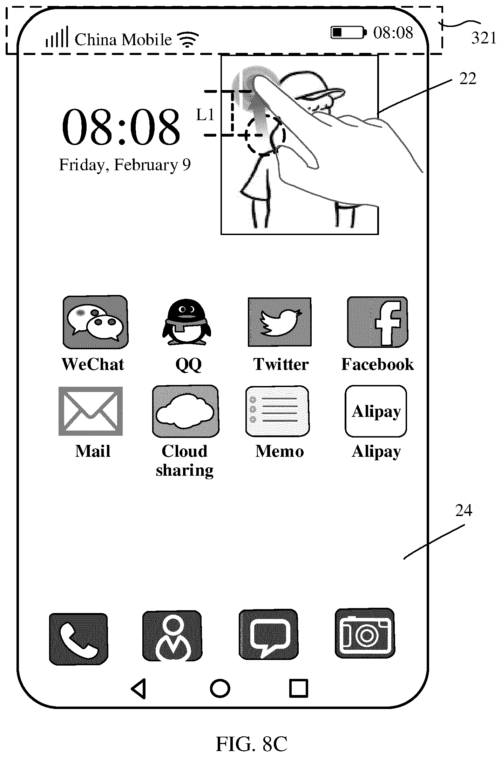

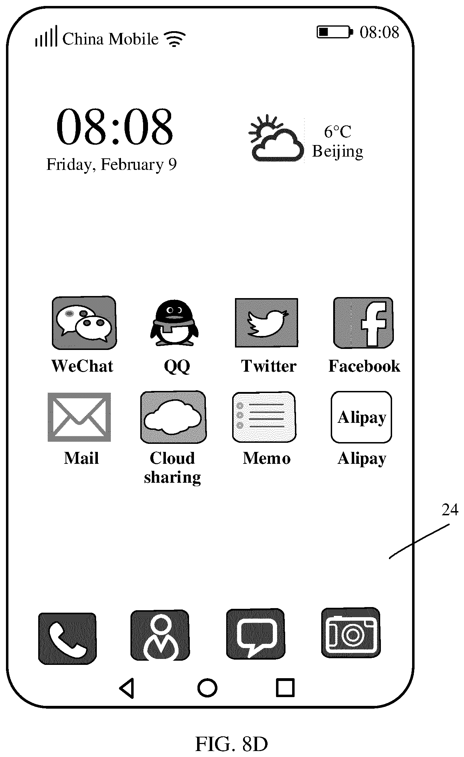

For example, the first distance threshold is equal to L1. As shown in FIG. 8A and FIG. 8B, the finger of the user slides on the display 194, a sliding start point is in the floating window 22, a sliding trend is sliding toward the top of the home screen, and the floating window 22 moves toward the status bar 321 as the finger of the user slides. As shown in FIG. 8C, after the upper edge of the floating window 22 coincides with the lower edge of the status bar 321, the finger of the user continues to slide upward. As shown in FIG. 8C and FIG. 8D, after the electronic device 100 detects that the distance by which the finger of the user continues to slide upward reaches L1, the electronic device 100 stops displaying the floating window 22, and keeps the floating window 22 running in the background.

In some optional embodiments, the first preset condition of the first user operation may be that after the upper edge of the floating window 22 coincides with the lower edge of the status bar 321, the finger of the user continues to touch the area in which the floating window 22 is located on the display 194 until a time period for which the finger of the user continues to touch the area reaches a first time threshold. The first preset condition of the first user operation may alternatively be that after the upper edge of the floating window 22 coincides with the lower edge of the status bar 321, the finger of the user continues to touch the area in which the floating window 22 is located on the display 194, and when a time period for which the finger of the user continues to touch the area is greater than or equal to a first time threshold, the finger of the user stops touching the area in which the floating window 22 is located on the display 194. In the first user operation, in a period for which the finger of the user continues to touch the area in which the floating window 22 is located on the display 194, a sliding trend of the finger of the user may be sliding stop, sliding upward, sliding leftward, or sliding rightward. The seventh user operation is that the finger of the user drags the floating window 22 to the area in which the status bar 321 is located. After the upper edge of the floating window 22 coincides with the lower edge of the status bar 321, the finger of the user continues to touch the area in which the floating window 22 is located on the display 194, and when a time period for which the finger of the user continues to touch the area is less than or equal to a first time threshold, the finger of the user stops touching the area in which the floating window 22 is located on the display 194. In the seventh user operation, in a period for which the finger of the user continues to touch the area in which the floating window 22 is located on the display 194, a sliding trend of the finger of the user may be sliding stop, sliding upward, sliding leftward, or sliding rightward. It may be understood that, in the seventh user operation, after the upper edge of the floating window 22 coincides with the lower edge of the status bar 321, a time period for which the finger of the user stops sliding and continues to touch the area in which the floating window 22 is located on the display 194 may be equal to 0.

Based on Case 2, which is not part of the claimed invention, details are as follows:
The floating window and the status bar on the display 194 of the electronic device 100 may be displayed in an overlapping manner, and after the upper edge of the floating window 22 coincides with the upper edge of the status bar 321, the floating window 22 cannot continue to move upward. The first user operation is that the finger of the user slides on the display 194, to drag the floating window 22 upward to the status bar 321, and a second preset condition is met.

In this application, the width of the status bar is a first width value.

In some embodiments of this application, the second preset condition may be that a distance between the upper edge of the floating window 22 and the upper edge of the status bar 321 is less than the first width value. It may be understood that the finger of the user drags the floating window 22 upward. After the upper edge of the floating window 22 coincides with a lower edge of the status bar 321, if the electronic device 100 detects that a distance by which the floating window 22 moves upward is greater than 0, the electronic device 100 hides the floating window 22.

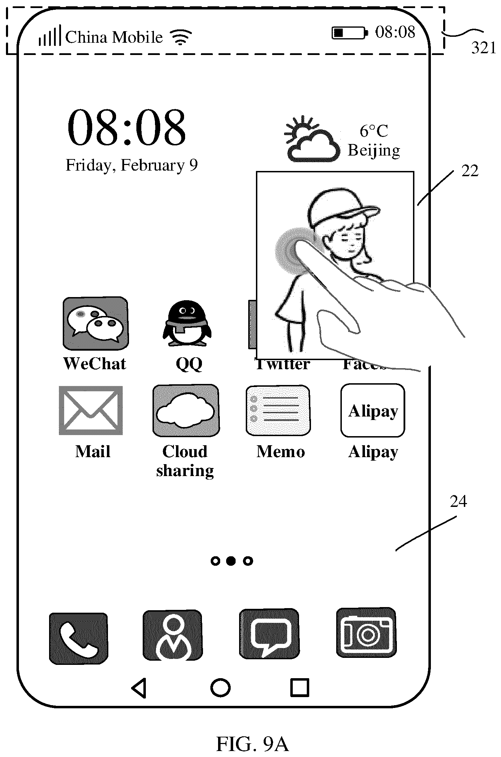

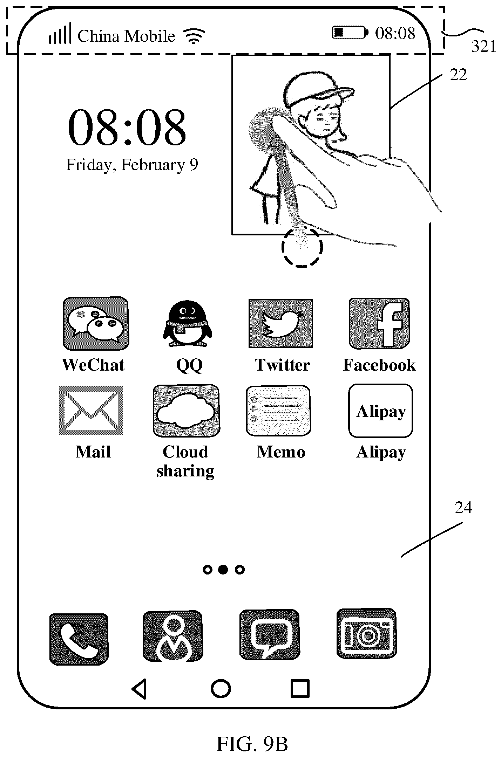

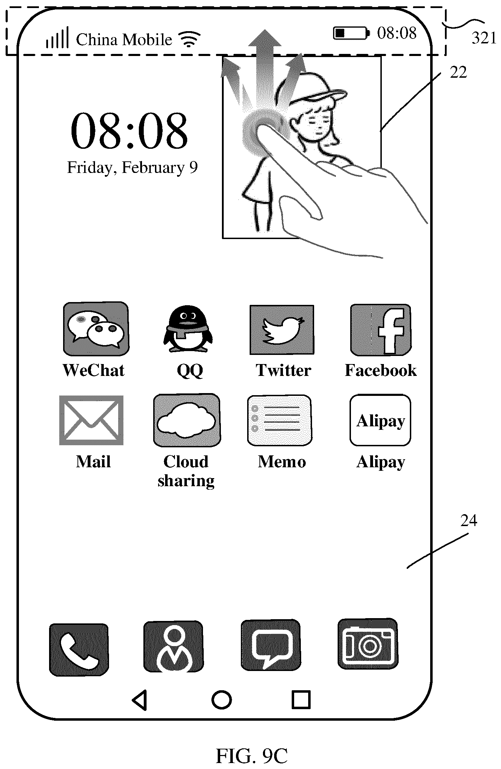

For example, as shown in FIG. 9A and FIG. 9B, the finger of the user slides on the display 194, to drag the floating window 30 to move on the home screen 24. A sliding start point of the finger of the user is in the area in which the floating window 22 is located. As shown in FIG. 9C, after the upper edge of the floating window 22 coincides with the lower edge of the status bar 321, the finger of the user continues to drag the floating window 22 upward, and the floating window continues to move upward as the finger of the user slides. If the electronic device 100 detects that the distance by which the floating window 22 continues to move upward is greater than 0, in response to the user operation, the electronic device 100 stops displaying the floating window 22, and keeps the floating window 22 running in the background. It may be understood that regardless of whether the user continues to touch the area in which the floating window 22 is located on the display 194, the electronic device 100 hides the floating window 22 provided that the distance between the upper edge of the floating window 22 and the upper edge of the status bar 321 is less than the first width value.

In some embodiments of this application, the second preset condition may be that when the distance between the upper edge of the floating window 22 and the upper edge of the status bar 321 is less than the first width value, the finger of the user stops sliding and stops touching the area in which the floating window 22 is located on the display 194.

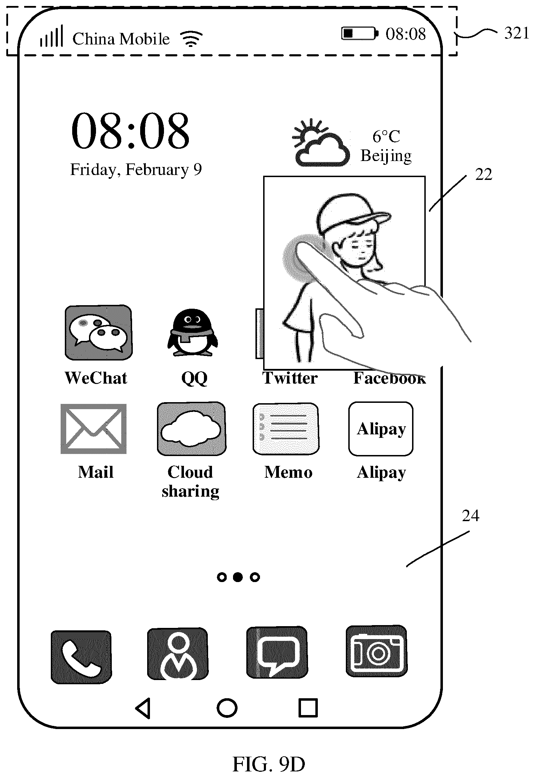

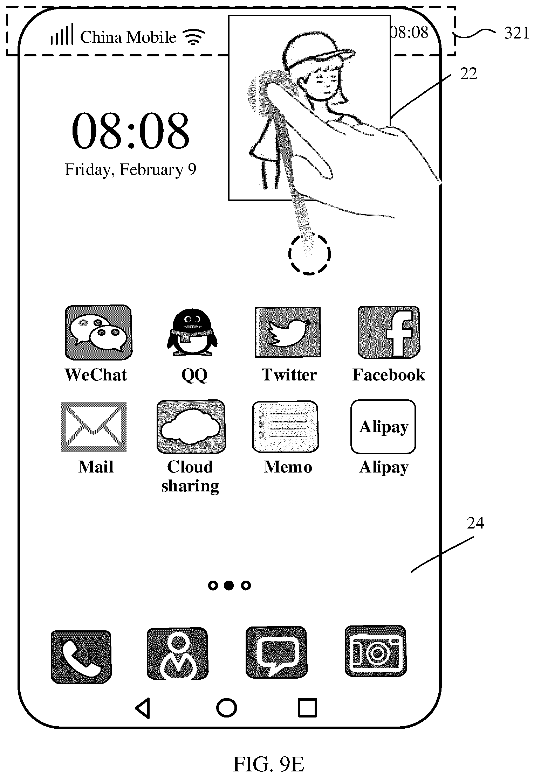

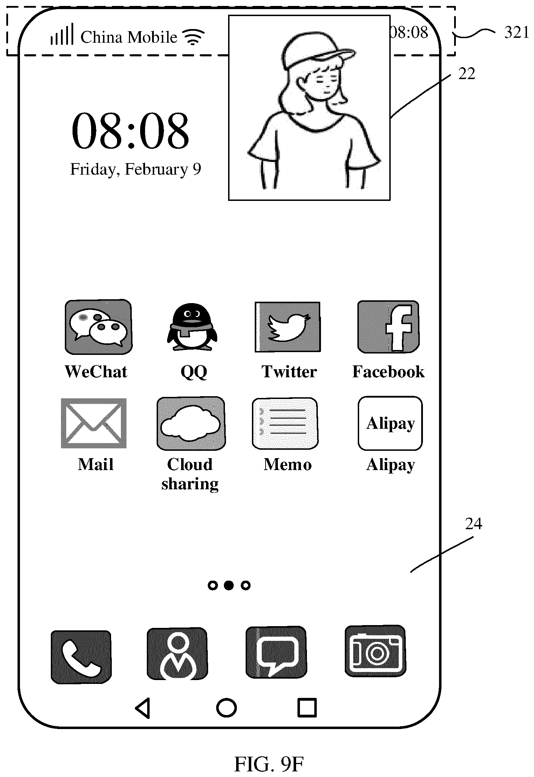

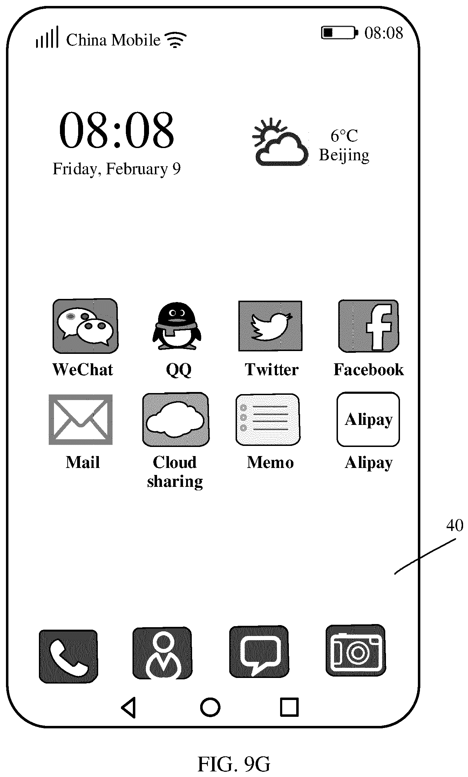

For example, as shown in FIG. 9D and FIG. 9E, the finger of the user slides on the display 194, to drag the floating window 22 to move on the home screen 24, until the distance between the upper edge of the floating window 22 and the upper edge of the status bar 321 is less than the first width value. A sliding start point of the finger of the user is in the area in which the floating window 22 is located. As shown in FIG. 9F, the finger of the user stops sliding and stops touching the area in which the floating window 22 is located on the display 194. As shown in FIG. 9G, when the electronic device 100 detects the user operation, in response to the user operation, the electronic device 100 stops displaying the floating window 22, and the electronic device 100 keeps the floating window 22 running in the background.

Based on Case 2, the user operation that the finger of the user drags the floating window 22 to the area in which the status bar 321 is located may alternatively have the following two user intents:
User intent 3: The user performs a first user operation used to hide the floating window 22. The first user operation may be that the finger of the user drags the floating window 22 to the area in which the status bar 321 is located, so that the distance between the upper edge of the floating window 22 and the upper edge of the status bar 321 is less than the first width value.
User intent 4: The user intends to change a location of the floating window 30 in the user interface 50, so that the distance between an upper edge of the floating window 22 and the upper edge of the status bar 321 is less than the first width value, and the user does not expect to hide the floating window 30.

In some embodiments of this application, different user operations are used to distinguish between the foregoing two user intents. In this application, a user operation used to implement the user intent 4 is referred to as an eighth user operation.

In some optional embodiments, the second preset condition of the first user operation may be that when the distance between the upper edge of the floating window 22 and the upper edge of the status bar 321 is less than the first width value, the finger of the user stops sliding and continues to touch the area in which the floating window 22 is located on the display 194 until a time period for which the finger of the user continues to touch the area reaches a second time threshold. The electronic device 100 detects the first user operation, and the electronic device 100 determines that the first user operation is used to implement the user intent 3. In response to the first user operation, the electronic device 100 stops displaying the floating window 22, and keeps the floating window 22 running in the background. The second preset condition of the first user operation may alternatively be that when the distance between the upper edge of the floating window 22 and the upper edge of the status bar 321 is less than the first width value, the finger of the user stops sliding and continues to touch the area in which the floating window 22 is located on the display 194, and when a time period for which the finger of the user continues to touch the area is greater than or equal to a second time threshold, the finger of the user stops touching the area in which the floating window 22 is located on the display 194. The eighth user operation is that the finger of the user drags the floating window 22 to the area in which the status bar 321 is located. When the distance between the upper edge of the floating window 22 and the upper edge of the status bar 321 is less than the first width value, the finger of the user stops sliding and continues to touch the area in which the floating window 22 is located on the display 194, and when a time period for which the finger of the user continues to touch the area is less than a second time threshold, the finger of the user stops touching the area in which the floating window 22 is located on the display 194. The electronic device 100 detects the eighth user operation, and the electronic device 100 determines that the eighth user operation is used to implement the user intent 2. Therefore, the electronic device 100 continues to display the floating window 22. It may be understood that, in the eighth user operation, the time period for which the finger of the user continues to touch the area in which the floating window 22 is located on the display 194 may be equal to 0.

Based on Case 2, the user operation that the finger of the user drags the floating window 22 to the area in which the status bar 321 is located may alternatively have the following two user intents:
User intent 5: The user performs a first user operation used to hide the floating window 22. The first user operation is that the finger of the user drags the floating window 22 to the area in which the status bar 321 is located, so that the upper edge of the floating window 22 coincides with the upper edge of the status bar 321.
User intent 6: The user intends to change a location of the floating window 30 on the display 194, so that the upper edge of the floating window 22 coincides with the upper edge of the status bar 321, and the user does not expect to hide the floating window 30.

In this application, that the upper edge of the floating window 22 coincides with the upper edge of the status bar 321 means that a distance between the upper edge of the floating window 22 and the upper edge of the status bar 321 is 0, or means that a distance between the upper edge of the floating window 22 and the upper edge of the status bar 321 is less than a minimum. For example, the minimum is equal to 0.1 mm.

In some embodiments of this application, different user operations are used to distinguish between the foregoing two user intents. In this application, a user operation used to implement the user intent 6 is referred to as a ninth user operation.

In some optional embodiments, the second preset condition of the first user operation may be that after the upper edge of the floating window 22 coincides with the upper edge of the status bar 321, a distance by which the finger of the user continues to slide upward reaches a second distance threshold. The second preset condition of the first user operation may alternatively be that when the finger of the user drags the floating window 22 to the area in which the status bar 321 is located, after the upper edge of the floating window 22 coincides with the upper edge of the status bar 321, the finger of the user continues to slide upward, and when a distance by which the finger of the user continues to slide upward is greater than or equal to a second distance threshold, the finger of the user stops sliding and stops touching the area in which the floating window 22 is located on the display 194. The electronic device 100 detects the first user operation, and the electronic device 100 determines that the first user operation is used to implement the user intent 5. In response to the first user operation, the electronic device 100 stops displaying the floating window 22, and keeps the floating window 22 running in the background. The ninth user operation is that the finger of the user drags the floating window 22 to the area in which the status bar 321 is located. After the upper edge of the floating window 22 coincides with the upper edge of the status bar 321, the finger of the user continues to slide upward, and when a distance by which the finger of the user continues to slide upward is less than a second distance threshold, the finger of the user stops sliding and stops touching the area in which the floating window 22 is located on the display 194. The electronic device 100 detects the ninth user operation, and the electronic device 100 determines that the ninth user operation is used to implement the user intent 6. Therefore, the electronic device 100 continues to display the floating window 22. It may be understood that, in the ninth user operation, after the upper edge of the floating window 22 coincides with the upper edge of the status bar 321, the distance by which the finger of the user continues to slide upward may be equal to 0.

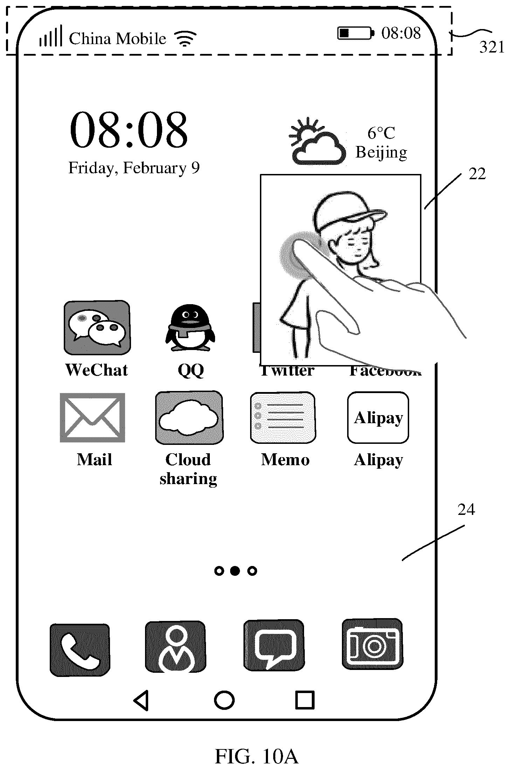

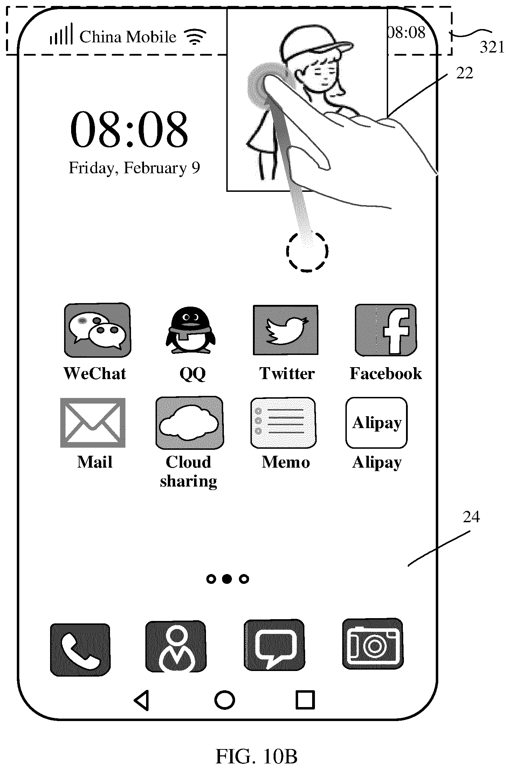

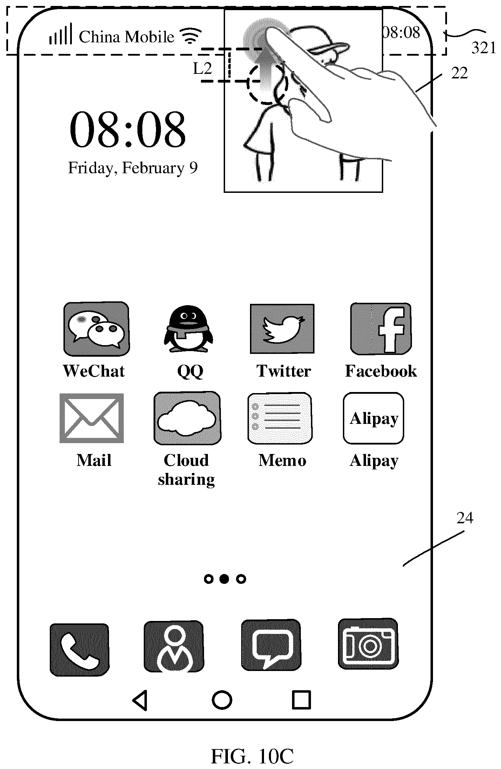

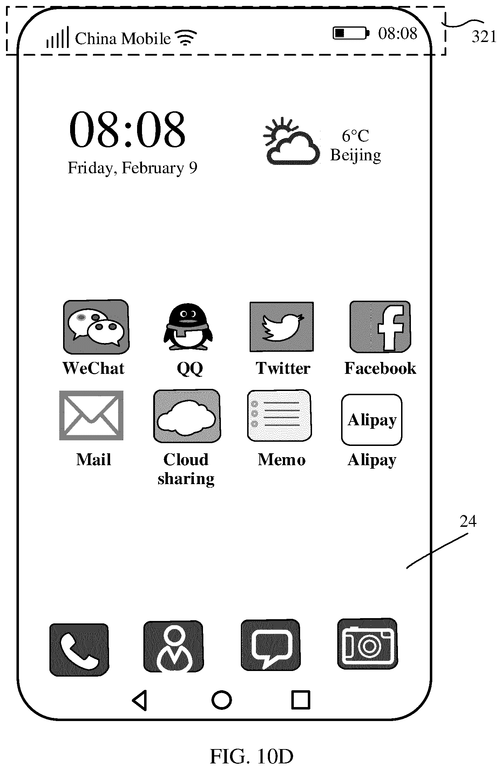

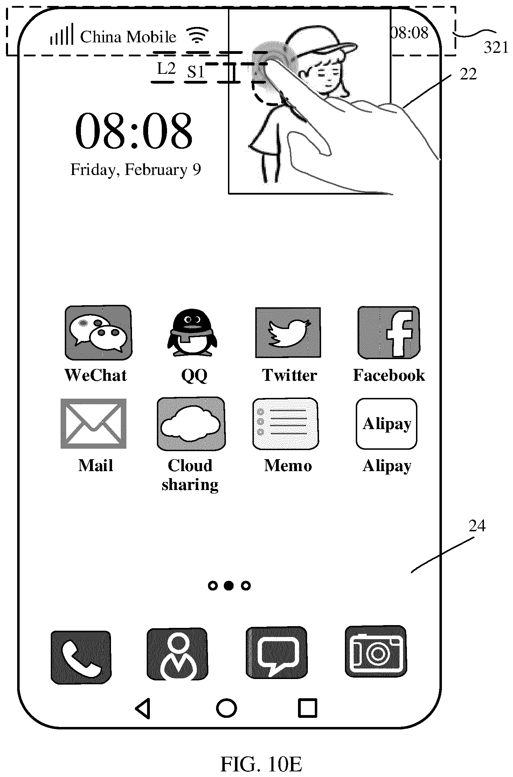

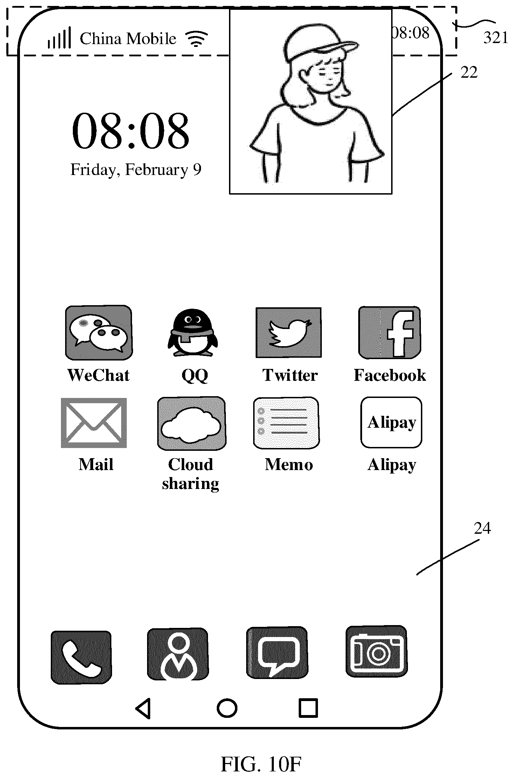

For example, as shown in FIG. 10A and FIG. 10B, the finger of the user slides on the display 194, a sliding start point is in the floating window 22, a sliding trend is sliding toward the top of the home screen, and the floating window 22 moves toward the status bar 321 as the finger of the user slides. The second distance threshold is equal to L2. As shown in FIG. 10C, after the upper edge of the floating window 22 coincides with the upper edge of the status bar 321, the finger of the user continues to slide upward. As shown in FIG. 10D, after the electronic device 100 detects that the distance by which the finger of the user continues to slide upward reaches L2, the electronic device 100 stops displaying the floating window 22, and keeps the floating window 22 running in the background. For example, after the user operation shown in FIG. 9A and FIG. 9B, the finger of the user continues to slide upward. As shown in FIG. 9E and FIG. 9F, after the finger of the user continues to slide upward by S1, the finger of the user stops sliding and stops touching the area in which the floating window 22 is located on the display 194, where S1 is less than the second distance threshold L2. When the electronic device 100 detects the user operation, in response to the user operation, the electronic device 100 continues to display the floating window 22. As shown in FIG. 10E and FIG. 10F, a vertical location of the floating window 22 remains unchanged.

In some optional embodiments, the second preset condition of the first user operation may be that after the upper edge of the floating window 22 coincides with the upper edge of the status bar 321, the finger of the user continues to touch the area in which the floating window 22 is located on the display 194 until a time period for which the finger of the user continues to touch the area reaches a third time threshold. The second preset condition of the first user operation may alternatively be that after the upper edge of the floating window 22 coincides with the upper edge of the status bar 321, the finger of the user continues to touch the area in which the floating window 22 is located on the display 194, and when a time period for which the user continues to touch the area is greater than or equal to a third time threshold, the finger of the user stops touching the area in which the floating window 22 is located on the display 194. In the first user operation, in a period for which the finger of the user continues to touch the area in which the floating window 22 is located on the display 194, a sliding trend of the finger of the user may be sliding stop, sliding upward, sliding leftward, or sliding rightward. The ninth user operation is that the finger of the user drags the floating window 22 to the area in which the status bar 321 is located. After the upper edge of the floating window 22 coincides with the upper edge of the status bar 321, the finger of the user continues to touch the area in which the floating window 22 is located on the display 194, and when a time period for which the user continues to touch the area is less than a third time threshold, the finger of the user stops touching the area in which the floating window 22 is located on the display 194. In the ninth user operation, in a period for which the finger of the user continues to touch the area in which the floating window 22 is located on the display 194, a sliding trend of the finger of the user may be sliding stop, sliding upward, sliding leftward, or sliding rightward. It may be understood that, in the ninth user operation, after the upper edge of the floating window 22 coincides with the upper edge of the status bar 321, the time period for which the finger of the user continues to touch the area in which the floating window 22 is located on the display 194 may be equal to 0.

Based on Case 3, which is not part of the claimed invention, details are as follows:
The floating window and the status bar on the display 194 of the electronic device 100 may be displayed in an overlapping manner, and after the upper edge of the floating window 22 coincides with the upper edge of the status bar 321, the floating window 22 may continue to move upward. The first user operation is that the finger of the user slides on the display 194, to drag the floating window 22 upward to the status bar 321, and a third preset condition is met.

In some embodiments of this application, the current height of the floating window 22 is a first height value. The third preset condition is that a distance between a lower edge of the floating window 22 and the upper edge of the status bar 321 is less than the first height value. It may be understood that the finger of the user drags the floating window 22 upward. After the upper edge of the floating window 22 coincides with the upper edge of the status bar 321, if the electronic device 100 detects that the floating window 22 continues to move upward, the electronic device 100 hides the floating window 22.

In some embodiments of this application, the third preset condition may be that when the distance between the lower edge of the floating window 22 and the upper edge of the status bar 321 is less than the first height value, the finger of the user stops sliding and stops touching the area in which the floating window 22 is located on the display 194.

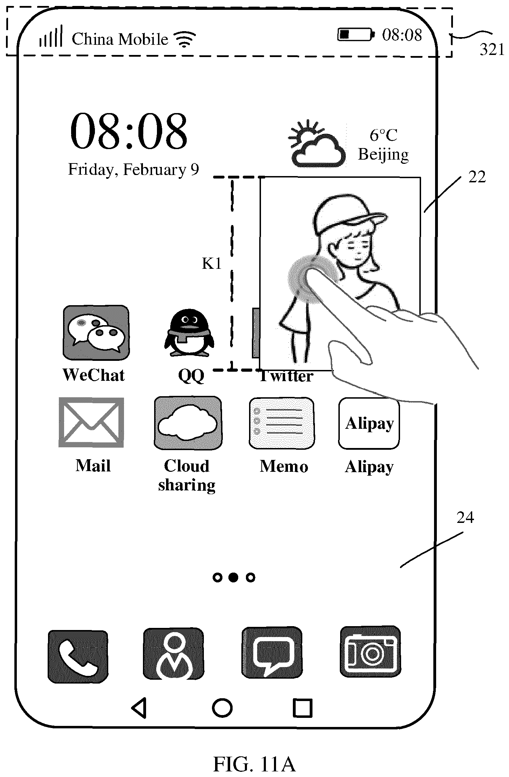

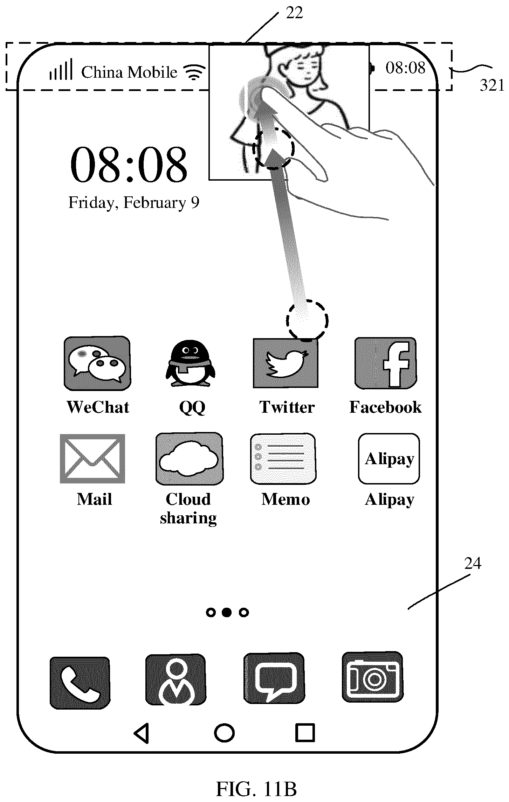

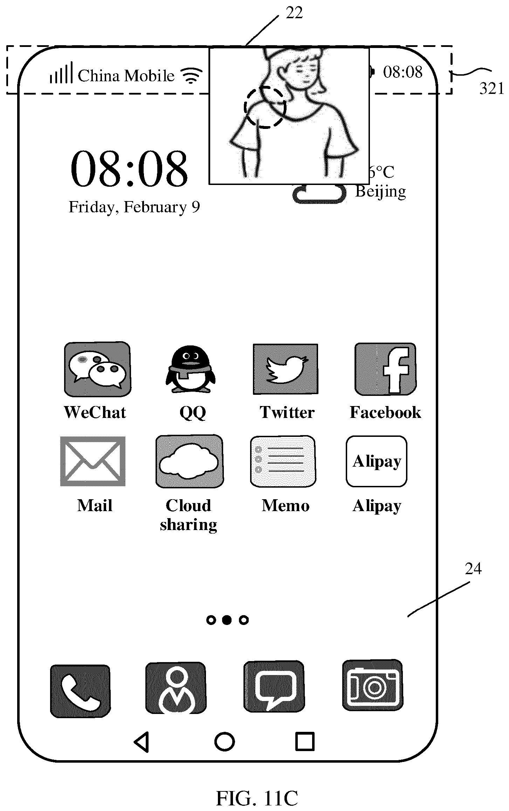

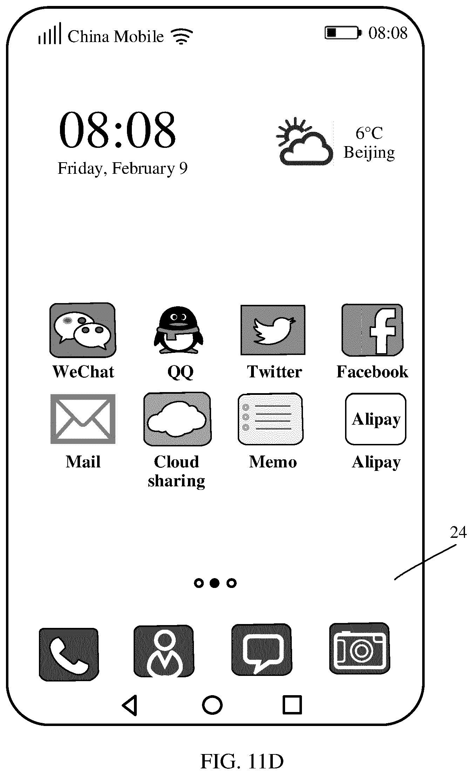

For example, a value of the first height value is K1. As shown in FIG. 11A and FIG. 11B, the finger of the user slides on the display 194, to drag the floating window 22 to move on the home screen 24. As shown in FIG. 11C, when the distance between the lower edge of the floating window 22 and the upper edge of the status bar 321 is less than the first height value, the finger of the user stops sliding and stops touching the area in which the floating window 22 is located on the display 194. As shown in FIG. 11D, when the electronic device 100 detects the user operation, in response to the user operation, the electronic device 100 stops displaying the floating window 22, and the electronic device 100 keeps the floating window 22 running in the background.

Based on Case 3, the user operation that the finger of the user drags the floating window 22 to the area in which the status bar 321 is located may alternatively have the following two user intents:
User intent 7: The user performs a first user operation used to hide the floating window 22. The first user operation is that the finger of the user drags the floating window 22 to the area in which the status bar 321 is located, so that the distance between the lower edge of the floating window 22 and the lower edge of the status bar 321 is less than the first height value.
User intent 8: The user intends to change a location of the floating window 22 on the display 194, so that the distance between the lower edge of the floating window 22 and the lower edge of the status bar 321 is less than the first height value, and the user does not expect to hide the floating window 22.

In some embodiments of this application, different user operations are used to distinguish between the foregoing two user intents. In this application, a user operation used to implement the user intent 8 is referred to as a tenth user operation.

In some optional embodiments, the third preset condition of the first user operation may be that a distance between the lower edge of the floating window 22 and the upper edge of the status bar 321 reaches a third distance threshold, where the third distance threshold is less than the first height value. The third preset condition of the first user operation may alternatively be that when a distance between the lower edge of the floating window 22 and the upper edge of the status bar 321 is less than a third distance threshold, the finger of the user stops sliding and stops touching the area in which the floating window 22 is located on the display 194. The electronic device 100 detects the first user operation, and the electronic device 100 determines that the first user operation is used to implement the user intent 7. In response to the first user operation, the electronic device 100 stops displaying the floating window 22, and keeps the floating window 22 running in the background. The tenth user operation is that the finger of the user drags the floating window 22 to the area in which the status bar 321 is located. When a distance between the lower edge of the floating window 22 and the upper edge of the status bar 321 is less than the first height value and greater than the third distance threshold, the finger of the user stops sliding and stops touching the area in which the floating window 22 is located on the display 194. The electronic device 100 detects the tenth user operation, and the electronic device 100 determines that the tenth user operation is used to implement the user intent 8. Therefore, the electronic device 100 continues to display the floating window 22.

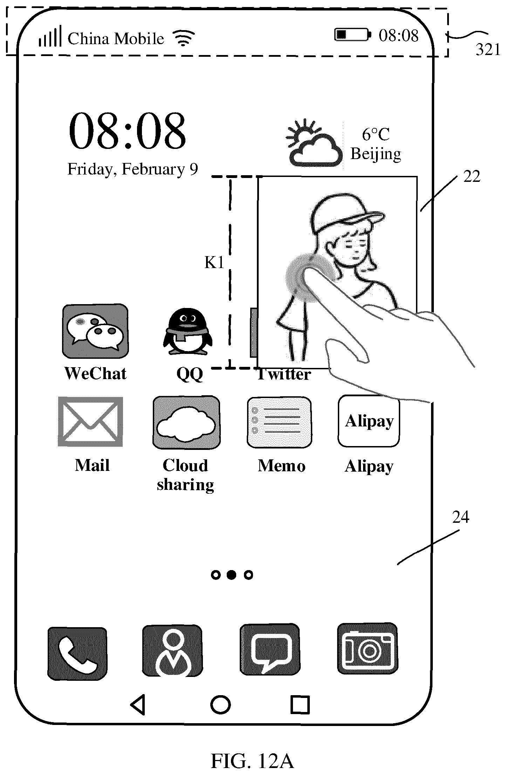

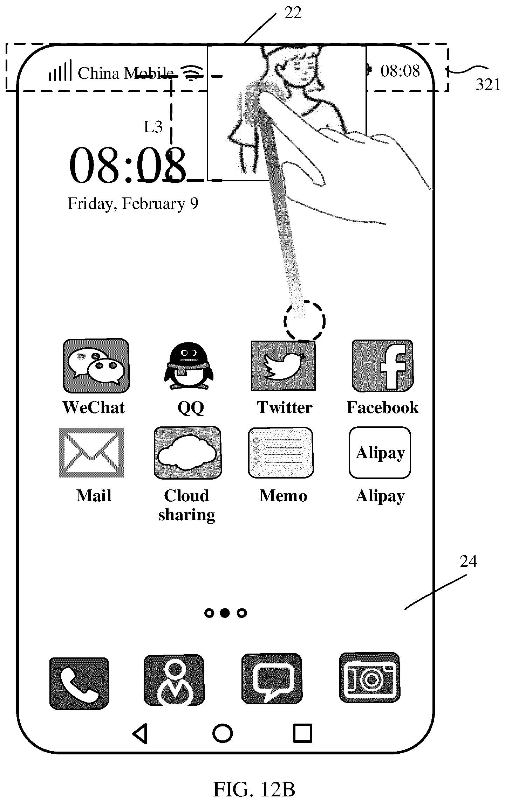

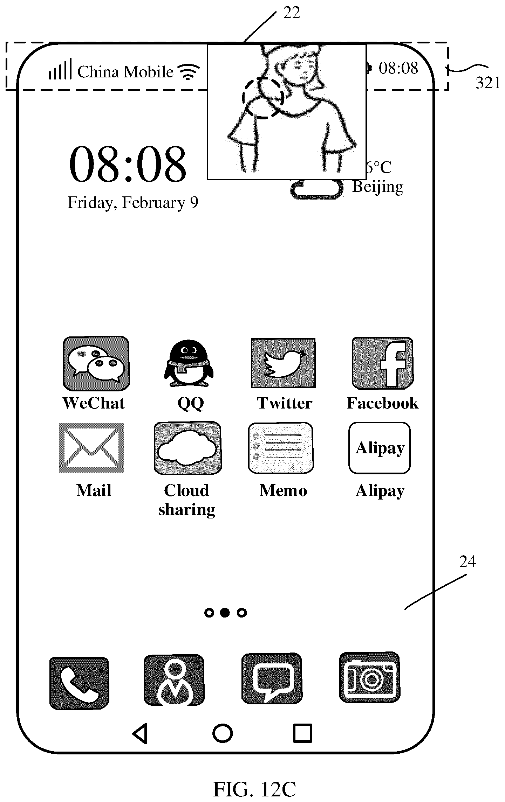

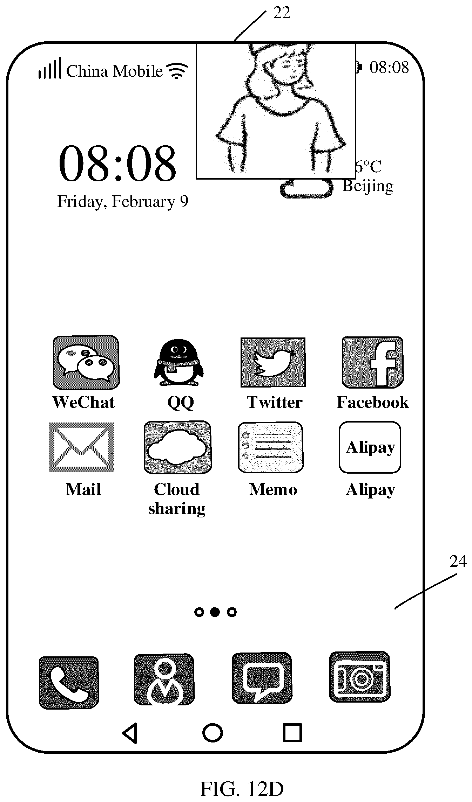

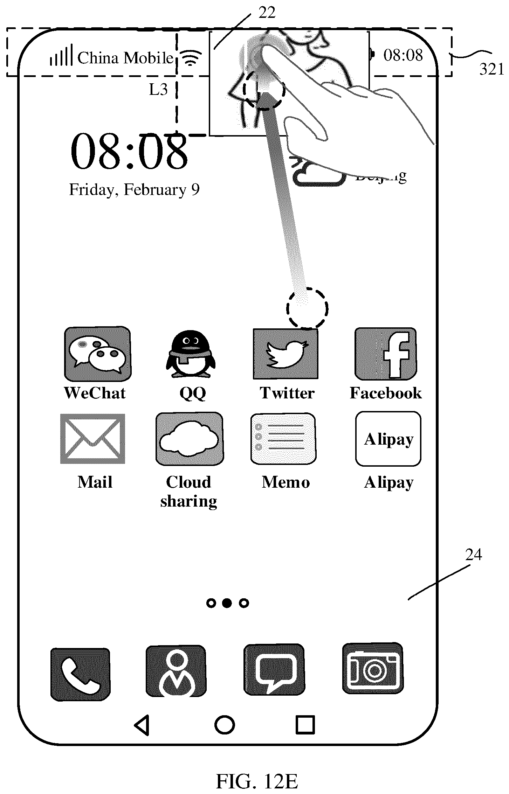

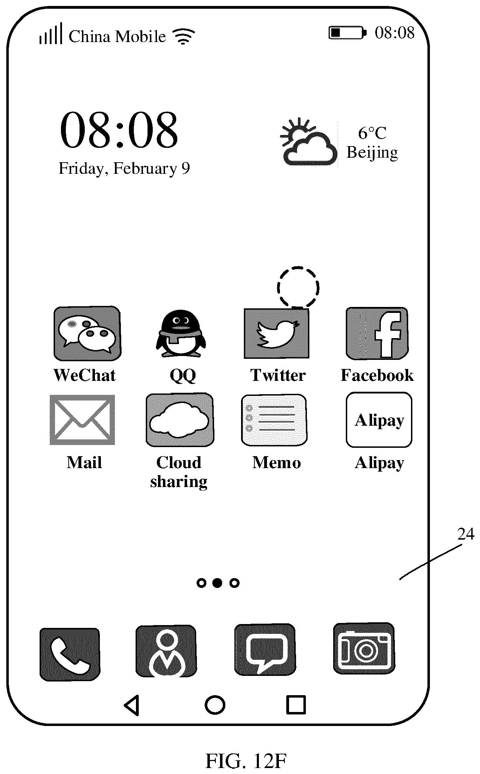

For example, as shown in FIG. 12A, FIG. 12B, and FIG. 12C, the finger of the user slides on the display 194, a sliding start point is in the floating window 22, a sliding trend is sliding toward the top of the home screen, and the floating window 22 moves toward the status bar 321 as the finger of the user slides. When the distance between the lower edge of the floating window 22 and the upper edge of the status bar 321 is less than the first height value and greater than the third distance threshold, the finger of the user stops sliding and stops touching the area in which the floating window 22 is located on the display 194. As shown in FIG. 12D, when the electronic device 100 detects the user operation, the electronic device 100 continues to display the floating window 22. As shown in FIG. 12E and FIG. 12F, after the user operation shown in FIG. 12B, the finger of the user continues to slide on the display 194 until the distance between the lower edge of the floating window 22 and the upper edge of the status bar 321 reaches the third distance threshold. When the electronic device 100 detects the user operation, in response to the user operation, the electronic device 100 stops displaying the floating window 22, and keeps the floating window 22 running in the background. In some embodiments of this application, when the electronic device 100 detects that the user may have an intent to hide the floating window 22, the electronic device 100 displays prompt information on the display 194. The prompt information is used to indicate, to the user, how to hide the floating window, and the prompt information may be presented in a form of an animation, a text, and/or a picture. This is not specifically limited herein. For example, the prompt information may be that a color of the status bar 321 changes, the width of the status bar 321 increases, the status bar 321 blinks by changing brightness, or the like.

In some embodiments of this application, the prompt information may be related to content currently displayed in the floating window. For example, if the content currently displayed in the floating window 22 is an image collected by a camera of the electronic device 100, the prompt information is that the color of the status bar changes to green. If the content currently displayed in the floating window 22 is an image collected by a camera of an electronic device of a contact, the prompt information is that the color of the status bar changes to blue.

For example, when the electronic device 100 detects that the user may have an intent to hide the floating window 22, the electronic device 100 changes the status bar 321 from the first width value to a second width value, to prompt that the user may hide the floating window 22 by using the status bar 321. The second width value is greater than the first width value.

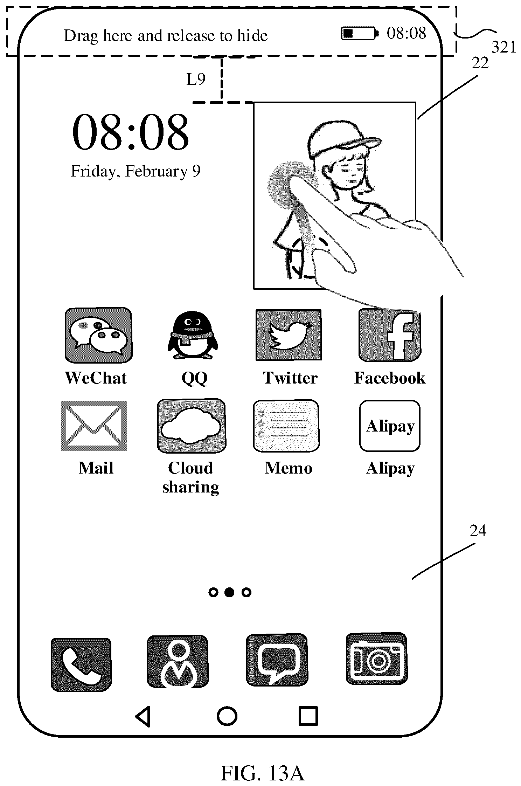

For example, the first user operation is that the finger of the user drags the floating window 22 to the area in which the status bar 321 is located. After the upper edge of the floating window 22 coincides with the upper edge of the status bar 321, the finger of the user stops sliding and stops touching the area in which the floating window 22 is located on the display 194. As shown in FIG. 13A, when the electronic device 100 detects that the distance between the upper edge of the floating window 22 and the lower edge of the status bar 321 is less than or equal to a ninth distance threshold, and there is a sliding trend that a hand of the user continues to drag the floating window 30 upward, the electronic device 100 determines that the user may have an intent to hide the floating window 22. In this case, the electronic device 100 displays prompt information on the status bar 321, where content of the prompt information is "Drag here and release to hide", and a value of the ninth distance threshold is L9.

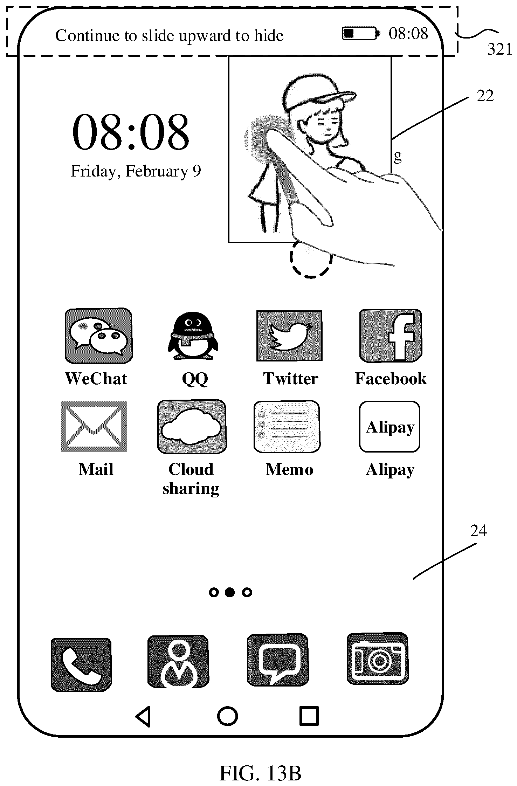

For example, the first user operation is that the finger of the user drags the floating window 22 to the area in which the status bar 321 is located. After the upper edge of the floating window 22 coincides with the upper edge of the status bar 321, the finger of the user continues to slide upward until a distance by which the finger of the user continues to slide reaches the second distance threshold. As shown in FIG. 13B, after the upper edge of the floating window 22 coincides with the lower edge of the status bar 321, when the electronic device 100 detects that the finger of the user continues to drag the floating window 30 upward, the electronic device 100 determines that the user may have an intent to hide the floating window 22. In this case, the electronic device 100 displays prompt information on the status bar 321, where content of the prompt information is "Continue to slide upward to hide".

It may be understood that after the first user operation ends, the electronic device 100 stops displaying the prompt information.

In some embodiments of this application, in addition to the foregoing manner of displaying the prompt information on the display 194, the prompt information may be further played by using a voice. For example, the first user operation is that the finger of the user drags the floating window 22 to the area in which the status bar 321 is located. After the upper edge of the floating window 22 coincides with the lower edge of the area in which the status bar 321 is located, the finger of the user stops sliding and stops touching the area in which the floating window 22 is located on the display 194. When the electronic device 100 detects a sliding trend that the finger of the user drags the floating window 30 upward, the electronic device 100 plays voice prompt information, where voice content is "Drag to the status bar and release to hide the floating window".

In addition to the foregoing user operation used to hide the floating window 22, in a specific implementation, there may be another user operation to hide the floating window 22.

For example, the user may hide the floating window 22 by drawing an S-shape on the display 194. A drawing start point of the user on the display 194 is in the area in which the floating window is located.

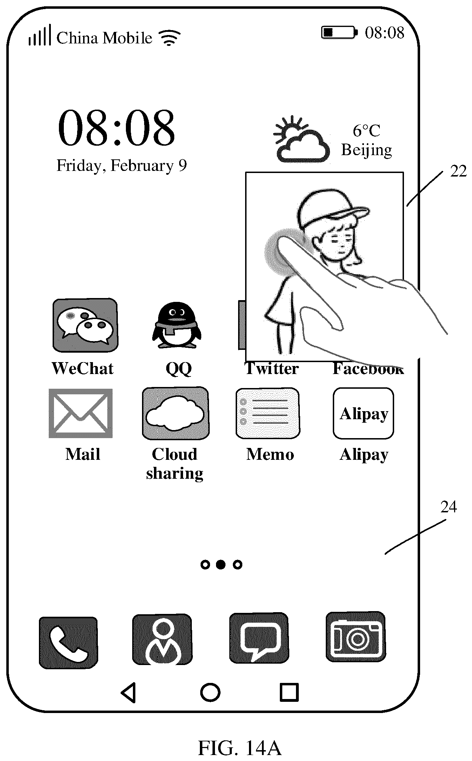

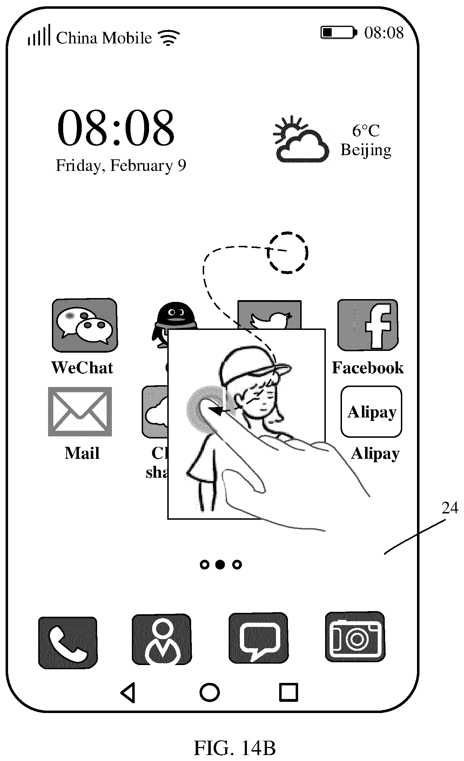

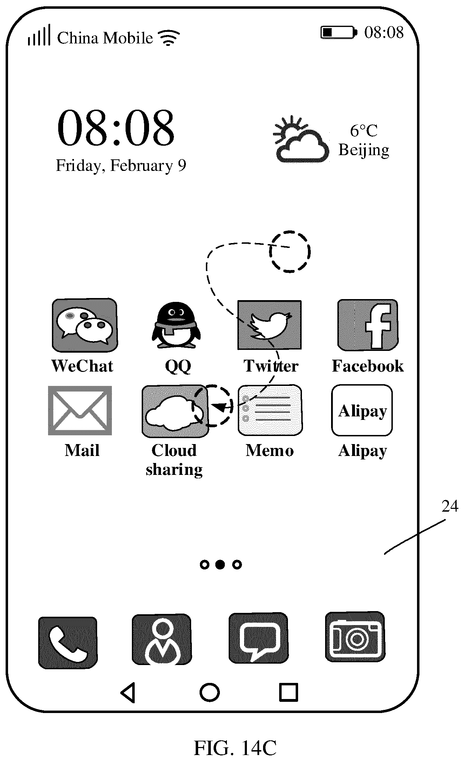

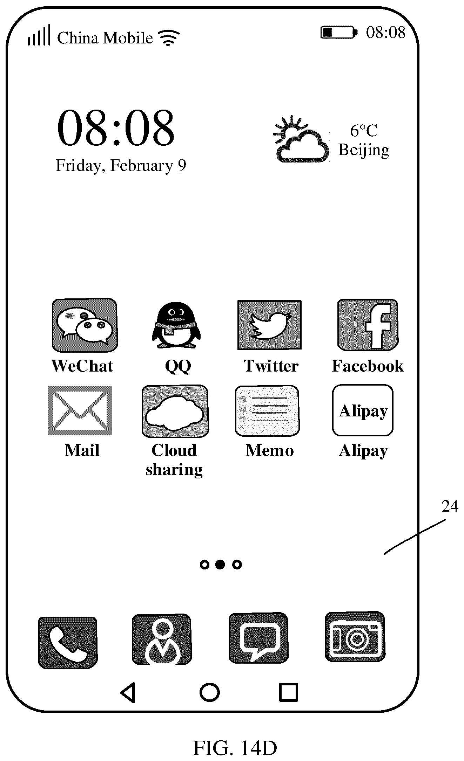

Specifically, as shown in FIG. 14A and FIG. 14B, the first user operation may alternatively be that the finger of the user slides on the display 194 to draw an S-shape, and a drawing start point of the user on the display 194 is in the area in which the floating window is located. As shown in FIG. 14C and FIG. 14D, the user stops sliding and stops touching the area in which the floating window is located on the display. When the electronic device 100 detects the touch operation, in response to the touch operation, the electronic device 100 may hide the floating window 22. In addition to drawing the S-shape on the display 194, the touch operation may be drawing a Z-shape on the display 194 by using the finger, and the touch operation may be drawing a circle in the finger by using the finger or drawing another shape on the display 194 by using the finger. A drawing start point is in the area in which the floating window is located. The first user operation may be distinguished from a touch operation entered by the user in an area outside the floating window on the display 194 by using the finger, so that the electronic device 100 is prevented from mistakenly considering the user operation used to hide the floating window 22 as another user operation entered by the user for an interface element on the display 194, to improve accuracy and efficiency of hiding the floating window 22 by the electronic device 100. The drawn shape (for example, the S-shape, the Z-shape, a rectangle, or the circle) may be a shape that is obtained through a large amount of statistics collection and that best meets a psychological expectation of the user. The user may directly associate the shape with the hidden the floating window 22, to reduce memory load of the user and meet a use habit of the user. The drawn shape may alternatively be pre-recorded by the user. In addition to the S-shape, the Z-shape, the rectangle, and the circle, the shape pre-recorded by the user may be another non-linear track shape.

Specifically, the S-shape drawn by the user on the display 194 may not be a standard shape. A specific error is allowed between the S-shape drawn by the user and a standard S-shape, provided that the shape is similar to the S-shape. The electronic device 100 may compare the S-shape detected in the user interface 20 with the standard S-shape. If a degree of matching between the S-shape detected in the user interface 20 and the standard S-shape exceeds a specific threshold, it may be considered that the detected S-shape is valid, that is, the user operation of drawing the S-shape may be used to enable the first control mode. Allowing a specific error between the S-shape drawn by the user and the standard S-shape can reduce difficulty in drawing the S-shape by the user, so that the user can draw the S-shape more randomly, and user experience is better.

For another example, the user may hide the floating window 22 by pressing the button 190.

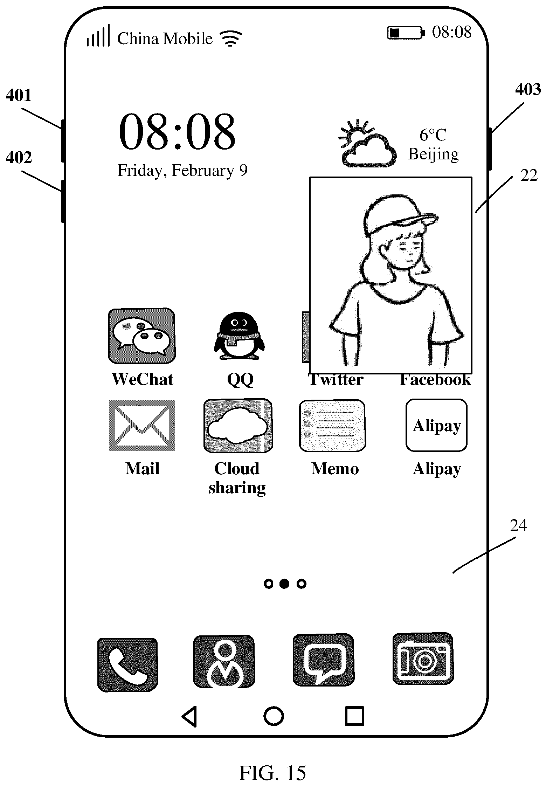

Specifically, as shown in FIG. 15, the button 190 used to hide the floating window 22 may include any one or more of a volume up button 401, a volume down button 402, and a power button 403. The volume up button and the volume down button may be located on one side of the electronic device 100, and the power button may be located on the other side of the electronic device 100. When the button 190 used to hide the floating window 22 is a combination of two buttons, the electronic device 100 may hide the floating window 22 by receiving an operation of simultaneously pressing the two buttons by the user. The operation of simultaneously pressing the two buttons may be distinguished from an operation of pressing a single button, to prevent the electronic device 100 from making an incorrect response. When the button 190 used by the user to hide the floating window 22 is any one of the foregoing buttons, the electronic device 100 may hide the floating window 22 by receiving an operation of consecutively pressing the button twice or more by the user. The operation of consecutively pressing one button twice or more may be distinguished from an operation of pressing the button once, to prevent the electronic device 100 from making an incorrect response.

For another example, the user may hide the floating window 22 by using a gesture.

Specifically, the first user operation may alternatively be that the user makes a specific gesture within a collection range of the camera. For example, the gesture is "V-shape made by using a hand of the user". The electronic device 100 may collect, by using the camera, a gesture entered by the user, compare the collected gesture with a pre-stored gesture, and hide the floating window 22 if the collected gesture is the same as the pre-stored gesture. The floating window 22 is hidden by using the gesture. Therefore, the operation is simple and convenient. The gesture (for example, the V-shape or a gesture that five fingers are unbent and folded) may be a gesture that is obtained through a large amount of statistics collection and that best meets a psychological expectation of the user. The user may directly associate the gesture with the hidden the floating window 22, to reduce memory load of the user and meet a use habit of the user.

For another example, the user may hide the floating window 22 by using a voice.

Specifically, the electronic device 100 may collect, by using a microphone, the voice entered by the user, for example, specific content of the voice is "Please hide the floating window"; compare the specific content "Please hide the floating window" of the collected voice with a pre-stored voice keyword "Please hide the floating window", and compare a voice feature of the collected voice with a pre-stored voice feature of an owner; and hide the floating window 22 if the specific content of the voice is the same as the pre-stored voice keyword and a degree of matching between the voice feature of the collected voice and the voice feature of the owner exceeds a specific threshold. The floating window 22 is hidden by using the voice. Therefore, the operation is simple and convenient. In addition, because another person cannot imitate the voice feature of the owner, the floating window 22 cannot be hidden randomly, and security is high. The user operation used to hide the floating window 22 is not limited in this embodiment of this application.

In some embodiments of this application, after the electronic device 100 hides the floating window 22, the electronic device 100 displays identification information of the hidden floating window 22 in the area in which the status bar 321 is located, where the identification information may indicate, to the user, that a floating window is hidden, that is, a small window runs in the background. The identification information may be presented on the display 194 in a form of a prompt bar, a small window icon, an arrow, a text, or the like. The identification information may also be used as an entrance for re-invoking the floating window 22. For example, when the finger of the user taps the identification information, in response to the user operation, the electronic device 100 redisplays the floating window 22. The identification information is displayed in the area in which the status bar 321 is located, so that the identification information can be prevented from blocking interface content on the home screen 24, to avoid impact on browsing the interface content on the home screen 24 by the user, and avoid impact on a user operation performed by the user on the home screen 24.

In some embodiments of this application, the electronic device 100 uses a color of the status bar 321 as the identification information. After the electronic device 100 hides the floating window 22, the electronic device 100 indicates, to the user by changing the color of the status bar 321, that the floating window is hidden.

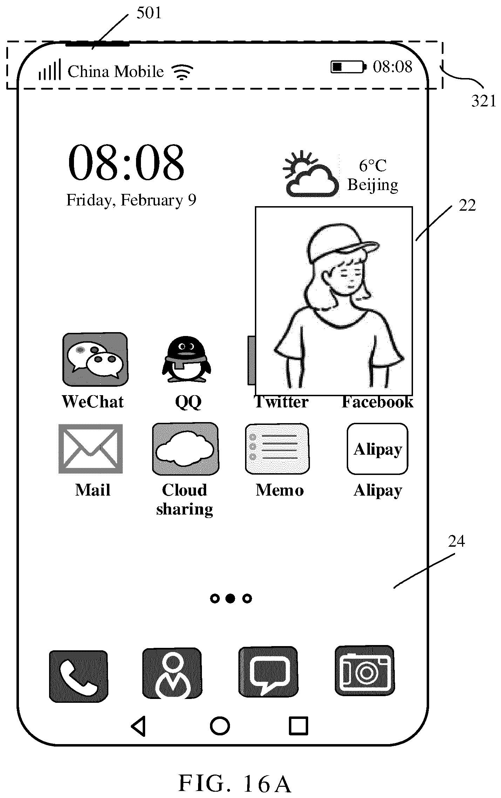

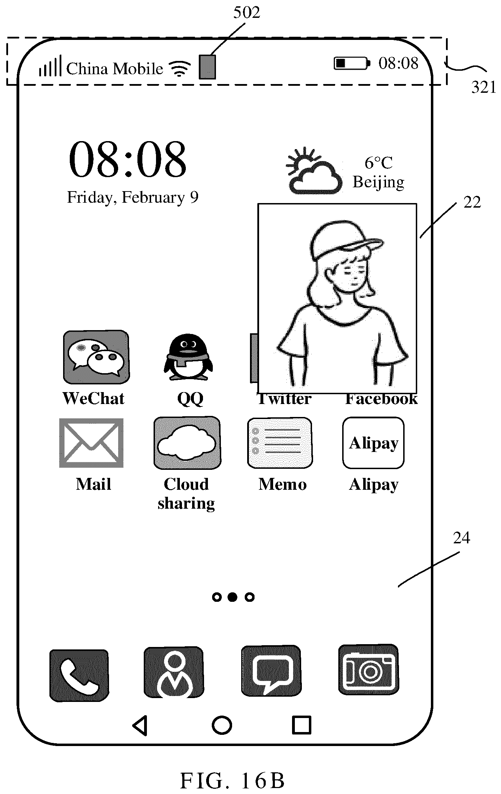

For example, as shown in FIG. 16A, after the floating window 22 is hidden, a black prompt bar 501 may be displayed on an upper left side of the display 194. For example, as shown in FIG. 16B, after the floating window 22 is hidden, a preset icon 502 of the floating window is displayed on the status bar 321.

Aspect 2: How to re-invoke the floating window 22.

It may be understood that after the user hides the floating window 22, the display 194 displays the home screen 24. Before the user re-invokes the floating window, the electronic device 100 may receive one or more user operations of the user. For example, the home screen 24 is switched to a second user interface. In this case, if the electronic device 100 detects a user operation used to re-invoke the floating window, in response to the user operation, the electronic device 100 displays both the second user interface and the floating window 22 on the display 194. The second user interface may be the same as or may be different from the home screen 24. The following further describes, by using an example in which the second user interface is the same as the home screen 24, how to re-invoke the hidden floating window.

In some embodiments of this application, when the electronic device 100 may detect a user operation performed on the home screen 24 (for example, the user single-taps the status bar 321 on the home screen 24), the electronic device 100 may re-invoke the floating window 22 in response to the user operation. In addition to single-tapping the status bar 321 on the home screen 24, the user operation may be double-tapping the status bar 321 on the home screen 24, touching and holding the status bar 321 on the home screen 24, or the like. Herein, the tap operation and the touch and hold operation may be performed by using one or more knuckles, a finger pad, a fingertip, a stylus, or the like.

In this application, an operation used to re-invoke the floating window 22 may be referred to as a second user operation. When the user expects to re-invoke the floating window 22, the user performs the second user operation. When the electronic device 100 detects the second user operation, in response to the second user operation, the electronic device 100 may re-invoke the floating window 22, and display the floating window 22 at a preset location on the display 194.

It may be understood that when the electronic device 100 detects the second user operation, the electronic device 100 determines whether there is a hidden floating window (that is, the floating window running in the background), and if there is the hidden floating window, the electronic device 100 re-invokes the hidden floating window 22 in response to the second user operation.

In this application, the user operation used to trigger the electronic device 100 to re-invoke the floating window may be preset by the system of the electronic device 100, or may be set by the user based on an operation habit of the user.

In some embodiments of this application, the second user operation may be that the finger of the user slides leftward (or rightward) in the area in which the status bar 321 is located on the display 194 by a distance reaching a fourth distance threshold. In response to the user operation, the electronic device 100 displays the floating window 22 at a preset location on the display 194.

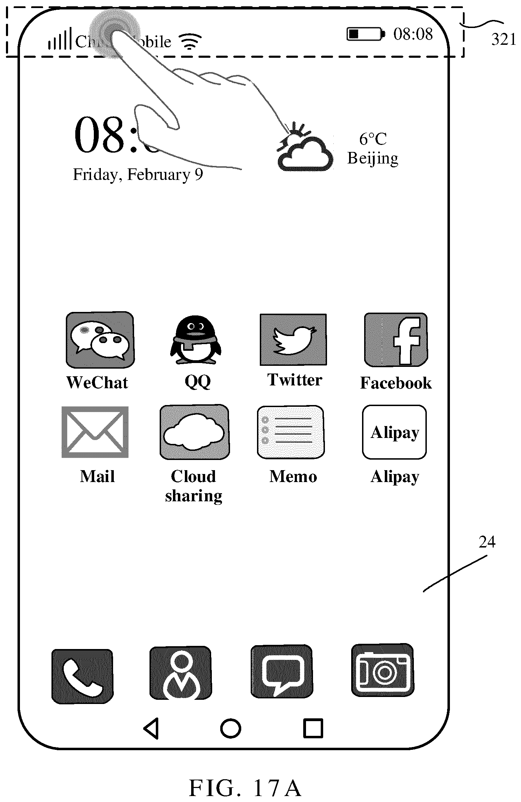

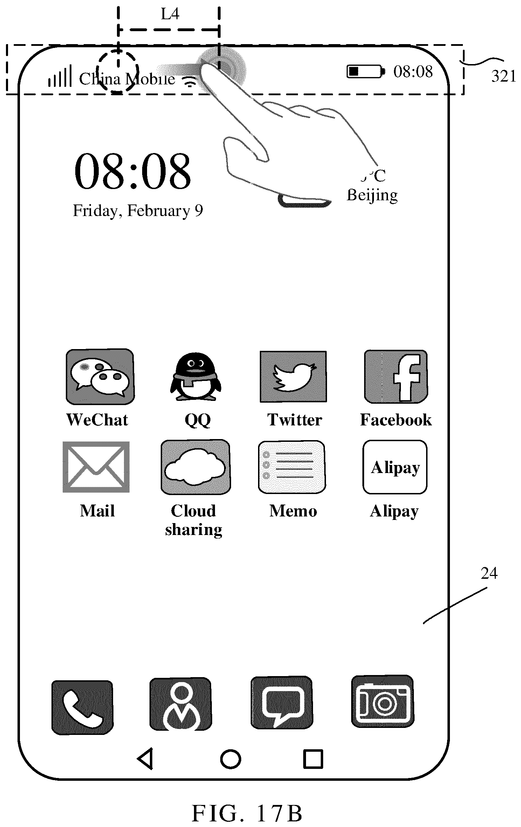

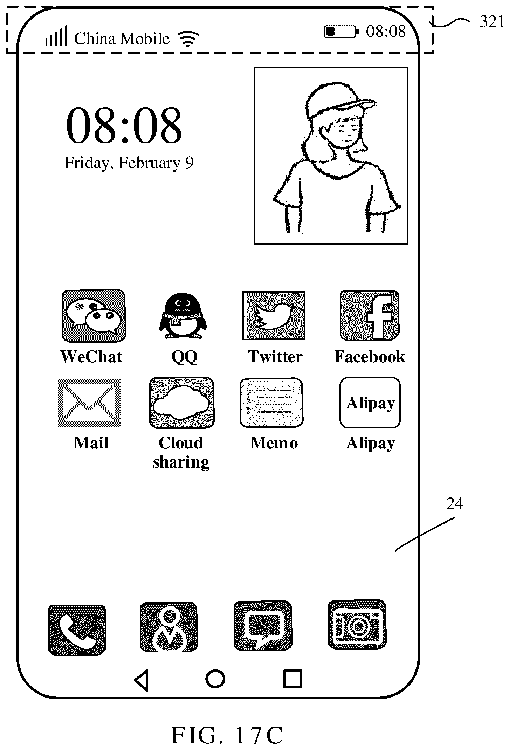

For example, a value of the fourth distance threshold is L4. As shown in FIG. 17A, FIG. 17B**,** and FIG. 17C, the finger of the user slides in the area in which the status bar 321 is located on the display, and a sliding trend is sliding toward a left edge of the electronic device 100. When the electronic device 100 detects that a distance by which the finger of the user slides leftward in the area in which the status bar 321 is located reaches the fourth distance threshold, the electronic device 100 displays the floating window 22 at a preset location on the display 194.

In some embodiments of this application, the second user operation may be that the finger of the user slides leftward (or rightward) on the status bar 321. When the finger of the user stops sliding and stops touching the area in which the status bar 321 is located on the display, a distance by which the finger of the user slides leftward (or rightward) is greater than or equal to a fourth distance threshold.

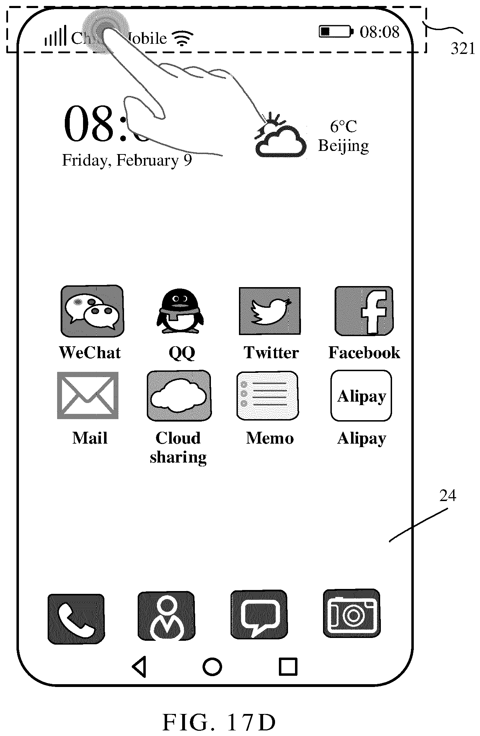

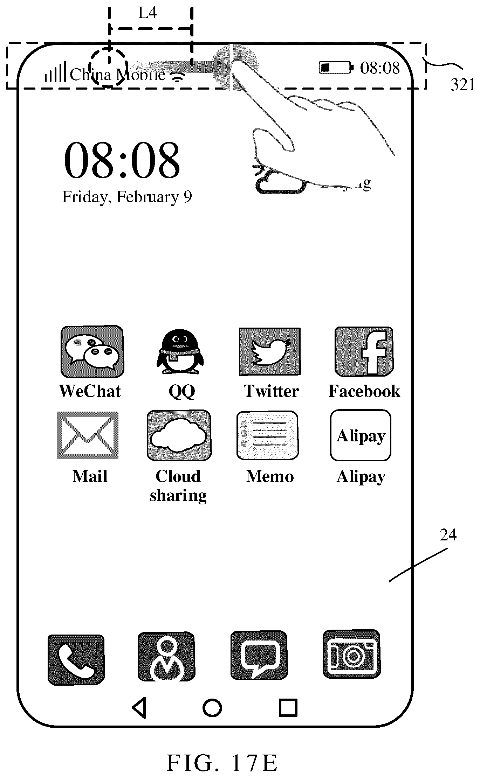

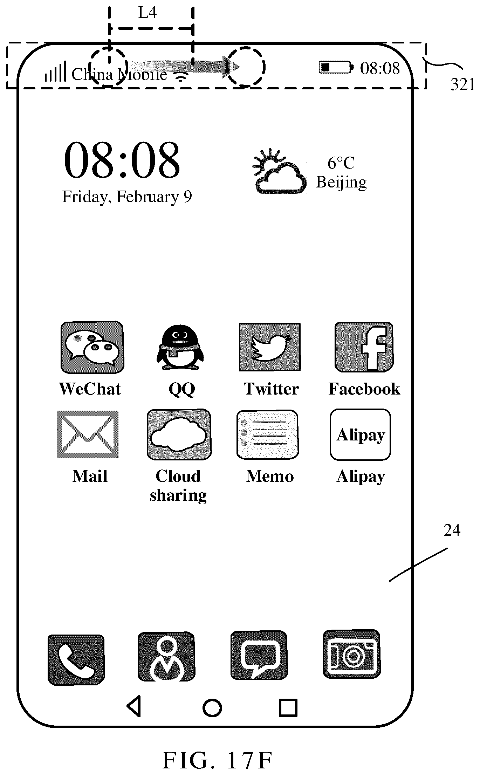

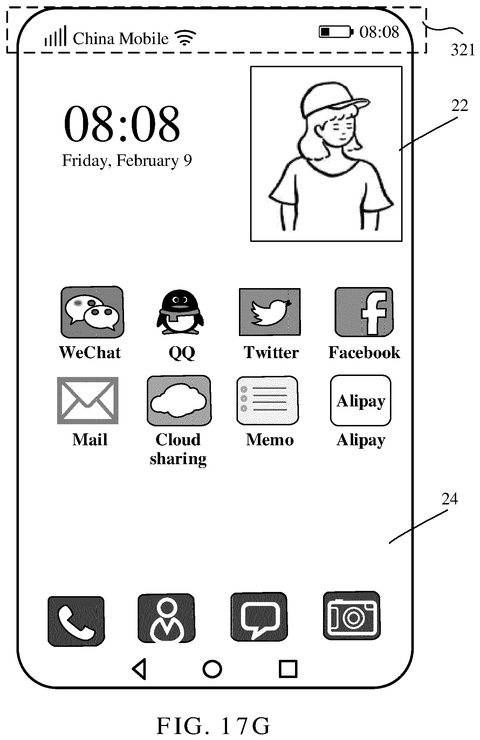

For example, as shown in FIG. 17D and FIG. 17E, the finger of the user slides on the area in which the status bar 321 is located on the display 194, and a sliding trend is sliding toward a left edge of the electronic device 100. As shown in FIG. 17F, when the finger of the user stops sliding and stops touching the area in which the status bar 321 is located on the display, a distance by which the finger of the user slides rightward is greater than the fourth threshold. As shown in FIG. 17G, when the electronic device 100 detects the user operation, in response to the user operation, the electronic device 100 displays the floating window 22 at a preset location on the display 194.

In some embodiments of this application, the second user operation may be that the finger of the user slides leftward (or rightward) in the area in which the status bar 321 is located on the display 194 for a time period greater than a fourth time threshold.

In some embodiments of this application, if the user intends to invoke a system notification bar interface 25 on the display 194, the finger of the user slides on the display 194. A sliding start point is the status bar 321 on the home screen 24, and a sliding trend is sliding toward the bottom of the electronic device 100. If a distance by which the finger of the user slides downward is less than a fifth distance threshold, the finger of the user may pull down a system notification bar as the finger of the user slides. When a distance by which the finger of the user slides downward is less than the fifth distance threshold, if the finger of the user stops sliding and stops touching the display 194, the electronic device 100 displays the system notification bar interface 25 in full screen mode. If the user intends to re-invoke the floating window, the second user operation may alternatively be that the finger of the user slides on the display 194, a sliding start point is the status bar 321 in the user interface, a sliding trend is sliding toward the bottom of the electronic device 100, and when a distance by which the finger of the user slides downward is greater than or equal to a fifth distance threshold, the finger of the user stops sliding and stops touching the display 194. The second user operation may alternatively be that the finger of the user slides on the display 194, a sliding start point is the status bar 321 in the user interface, a sliding trend is sliding toward the bottom of the electronic device 100, and a distance by which the finger of the user slides downward reaches a fifth distance threshold.

In this application, the distance by which the finger of the user slides downward is a distance between the lower edge of the status bar 321 and the finger of the user.

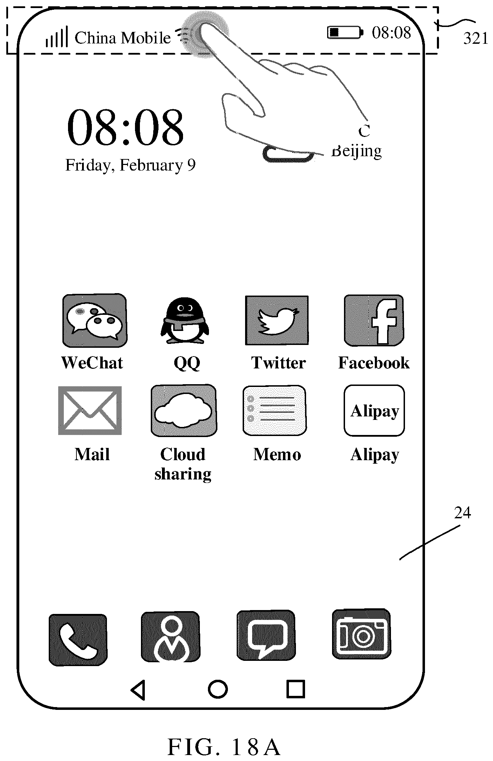

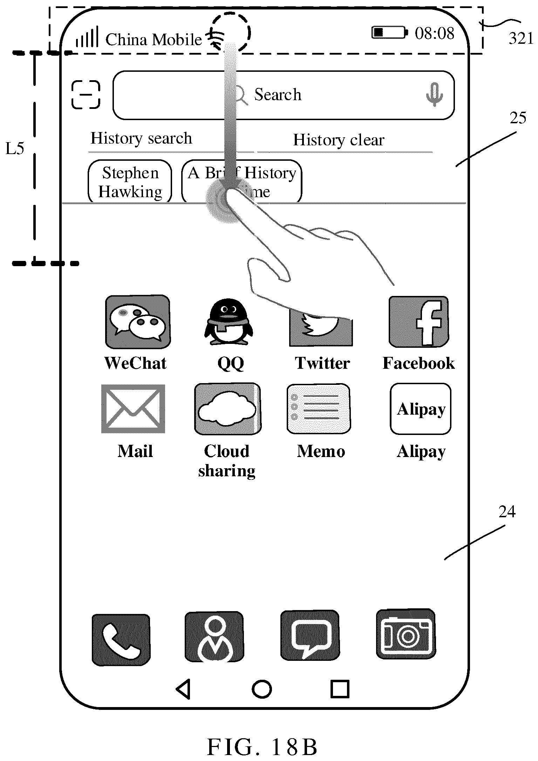

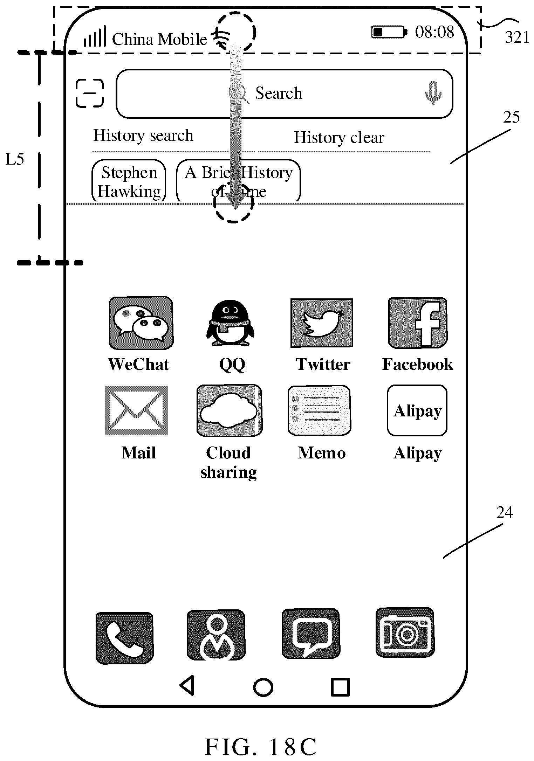

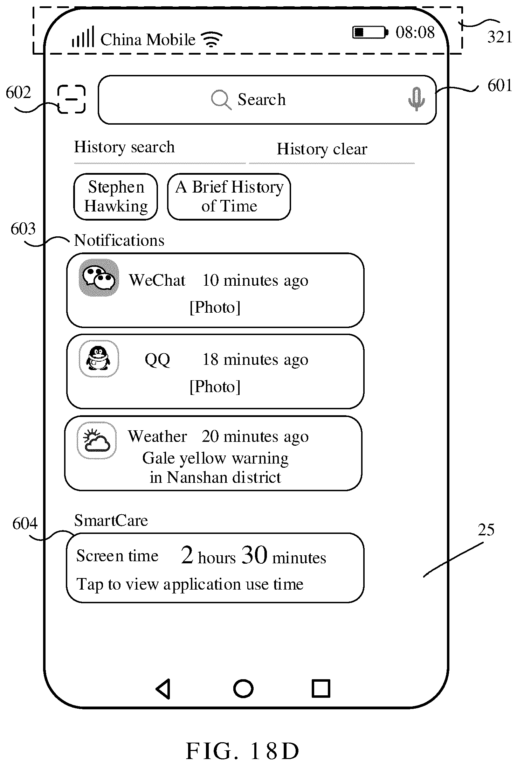

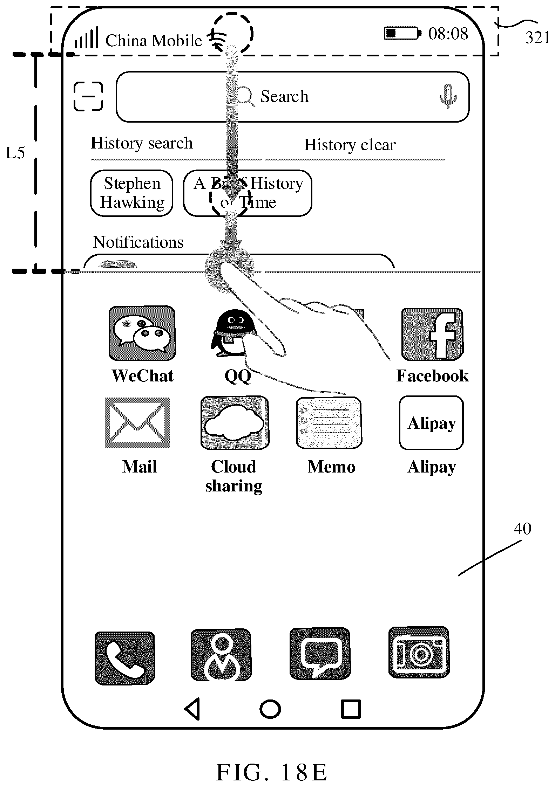

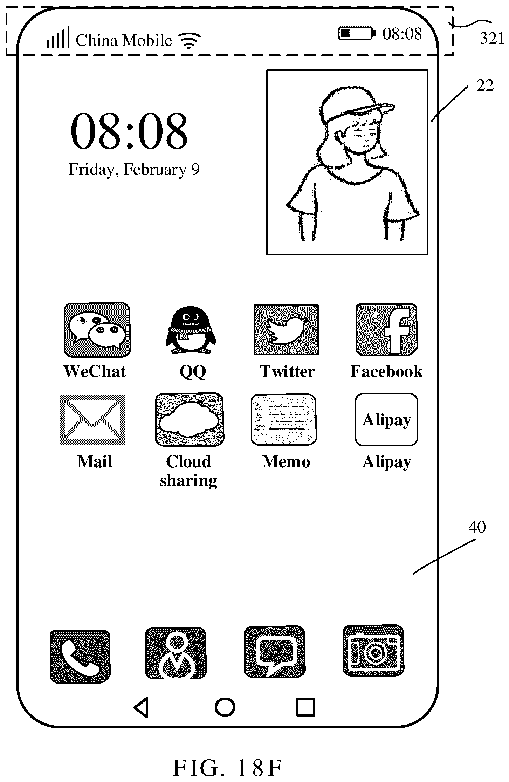

For example, a value of the fifth distance threshold is L5. As shown in FIG. 18A and FIG 18B, the finger of the user slides downward by using the status bar 321 as a start point. When the electronic device 100 detects the user operation, in response to the user operation, the electronic device 100 displays a part of the system notification bar interface, to present a display effect of pulling down the system notification bar interface 25 by the finger of the user. As shown in FIG. 18C and FIG. 18D, when the finger of the user stops sliding and stops touching the display 194, a distance by which the finger of the user slides downward is less than the fifth distance threshold. When the electronic device 100 detects the user operation, in response to the user operation, the electronic device 100 displays the system notification bar interface 25 in full screen mode. The system notification bar interface 25 may include a search bar 601, a scan icon 602, a notification bar 603, and a SmarCare bar 604. A history search button and a history clear button may be further attached below the search bar 601. In addition to the foregoing controls, the system notification bar interface 25 may further include another control. This is not specifically limited herein. As shown in FIG. 18E, after the user operation shown in FIG. 18C, the finger of the user continues to slide downward, and a distance by which the finger of the user slides downward reaches the fifth distance threshold. As shown in FIG. 18F, when the electronic device 100 detects the user operation, in response to the user operation, the electronic device 100 re-invokes the floating window 22, and displays the floating window 22 at a preset location on the display 194.

In this application, a user operation used to invoke the system notification bar interface 25 and display the system notification bar interface 25 in full screen mode may be referred to as a fifth user operation.

In some embodiments of this application, after hiding the floating window 22, the user expects to continue watching the video image in the floating window 22. Therefore, the user may have the following three user intents:
User intent 9: The user re-invokes the floating window 22, and displays the floating window 22 at a preset location on the display 194.
User intent 10: The user re-invokes the floating window 22, and displays, in full screen mode, the video call interface 20 corresponding to the floating window 22.
User intent 11: The user re-invokes the floating window 22, and displays, in split-screen mode, the video call interface 20 corresponding to the floating window 22. To be specific, the display 194 is divided into a first area and a second area, the first area is used to continue displaying the current user interface, and the second area is used to display the video call interface 20 corresponding to the floating window 22.

In some embodiments of this application, different user operations are used to distinguish between the user intent 9 and the user intent 10. In this application, a user operation used to implement the user intent 10 is referred to as a third user operation. In this application, a user operation used to implement the user intent 11 is referred to as a fourth user operation.

In some embodiments of this application, the third user operation may be that the finger of the user single-taps or double-taps the status bar 321 in the second user interface; the third user operation may be that the finger of the user slides leftward or rightward on the status bar 321 in the second user interface for a time period greater than or equal to a fourth time threshold; the third user operation may be that the finger of the user slides leftward or rightward on the status bar 321 in the second user interface by a distance greater than or equal to a fourth distance threshold; the third user operation may be that the finger of the user touches and holds the status bar 321 in the second user interface for a time period greater than or equal to a fifth time threshold; or the third user operation may be that the finger of the user slides toward the bottom of the electronic device 100 on the display by using the status bar 321 as a start point, and when a distance by which the finger of the user slides downward is greater than or equal to a fifth distance threshold, the finger of the user stops sliding and stops touching the display.

In some embodiments of this application, the fourth user operation may be that the finger of the user single-taps or double-taps the status bar 321 in the second user interface; the fourth user operation may be that the finger of the user slides leftward or rightward on the status bar 321 in the second user interface for a time period greater than or equal to a fourth time threshold; the fourth user operation may be that the finger of the user slides leftward or rightward on the status bar 321 in the second user interface by a distance greater than or equal to a fourth distance threshold; the fourth user operation may be that the finger of the user touches and holds the status bar 321 in the second user interface for a time period greater than or equal to a fifth time threshold; or the fourth user operation may be that the finger of the user slides toward the bottom of the electronic device 100 on the display by using the status bar 321 as a start point, and when a distance by which the finger of the user slides downward is greater than or equal to a fifth distance threshold, the finger of the user stops sliding and stops touching the display.

In some optional embodiments, the second user operation may be that the finger of the user single-taps the status bar 321. The electronic device 100 detects the second user operation, and the electronic device 100 determines that the second user operation is used to implement the user intent 9. In response to the second user operation, the electronic device 100 displays the floating window 22 at a preset location on the display 194. The third user operation may be that the finger of the user touches and holds the status bar 321 for a time period greater than the fifth time threshold. The electronic device 100 detects the third user operation, and the electronic device 100 determines that the third user operation is used to implement the user intent 10. In response to the third user operation, the electronic device 100 displays, in full screen mode, the video call interface 20 corresponding to the floating window 22. The fourth user operation may be that the finger of the user touches and holds the status bar 321 for a time period greater than a sixth time threshold. The electronic device 100 detects the fourth user operation, and the electronic device 100 determines that the fourth user operation is used to implement the user intent 11. In response to the fourth user operation, the electronic device 100 displays, in split-screen mode, the video call interface 20 corresponding to the floating window 22.

In some optional embodiments, the second user operation may be that the finger of the user slides on the area in which the status bar 321 is located on the display 194, a sliding trend is sliding toward a left edge of the electronic device 100, and a distance by which the finger of the user slides leftward reaches the fourth distance threshold. The third user operation may be that the finger of the user slides on the area in which the status bar 321 is located on the display 194, a sliding trend is sliding toward a right edge of the electronic device 100, and a distance by which the finger of the user slides rightward reaches the fourth distance threshold. The fourth user operation may be that the finger of the user slides on the area in which the status bar 321 is located on the display 194, a sliding trend is sliding toward a right edge of the electronic device 100, and when a distance by which the finger of the user slides rightward is greater than the fourth distance threshold, the finger of the user stops sliding and stops touching the display 194.

In some optional embodiments, as shown in FIG. 18A, FIG. 18B, and FIG. 18C, the fifth user operation may be that the finger of the user slides on the display 194, a sliding start point is in the area in which the status bar 321 is located, a sliding trend is sliding toward the bottom of the electronic device 100, and when a distance by which the finger of the user slides downward is less than the fifth distance threshold, the finger of the user stops sliding and stops touching the display 194. The second user operation may be that the finger of the user slides on the display 194, a sliding start point is in the area in which the status bar 321 is located, a sliding trend is sliding toward the bottom of the electronic device 100, and when a distance by which the finger of the user slides downward is greater than or equal to the fifth distance threshold and less than a sixth distance threshold, the finger of the user stops sliding and stops touching the display 194. The third user operation may be that the finger of the user slides on the display 194, a sliding start point is in the area in which the status bar 321 is located, a sliding trend is sliding toward the bottom of the electronic device 100, and when a distance by which the finger of the user slides downward is greater than or equal to the sixth distance threshold and less than a seventh distance threshold, the finger of the user stops sliding and stops touching the display 194. The fourth user operation may be that the finger of the user slides on the display 194, a sliding start point is in the area in which the status bar 321 is located, a sliding trend is sliding toward the bottom of the electronic device 100, and when a distance by which the finger of the user slides downward is greater than or equal to the seventh distance threshold, the finger of the user stops sliding and stops touching the display 194. Alternatively, the fourth user operation may be that the finger of the user slides on the display 194, a sliding start point is in the area in which the status bar 321 is located, and a sliding trend is sliding toward the bottom of the electronic device 100, until a distance by which the finger of the user slides downward reaches the seventh distance threshold.

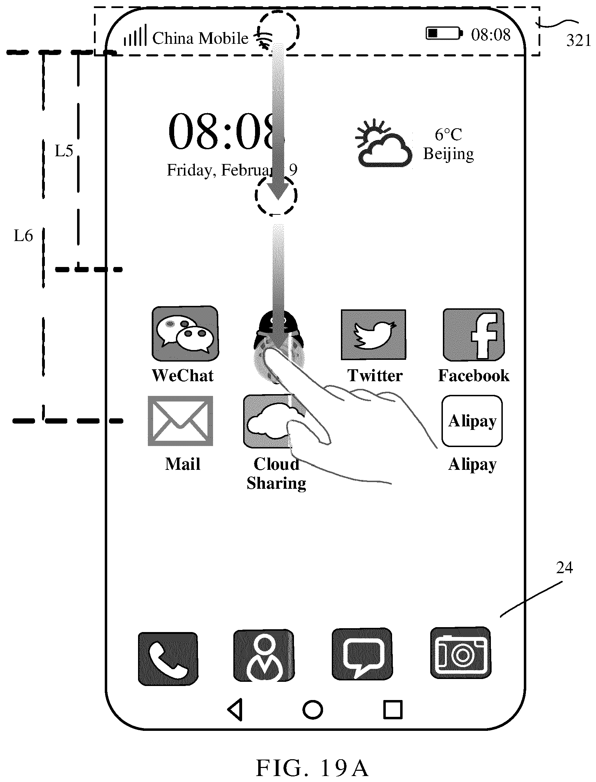

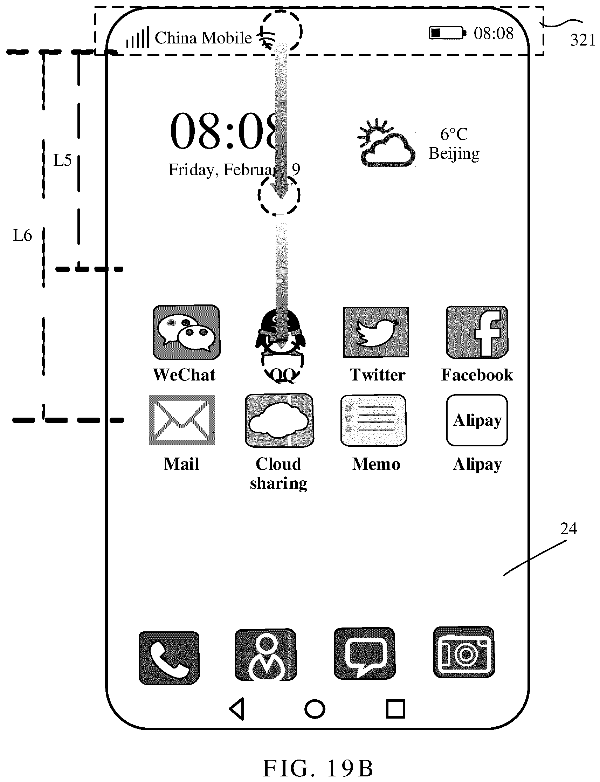

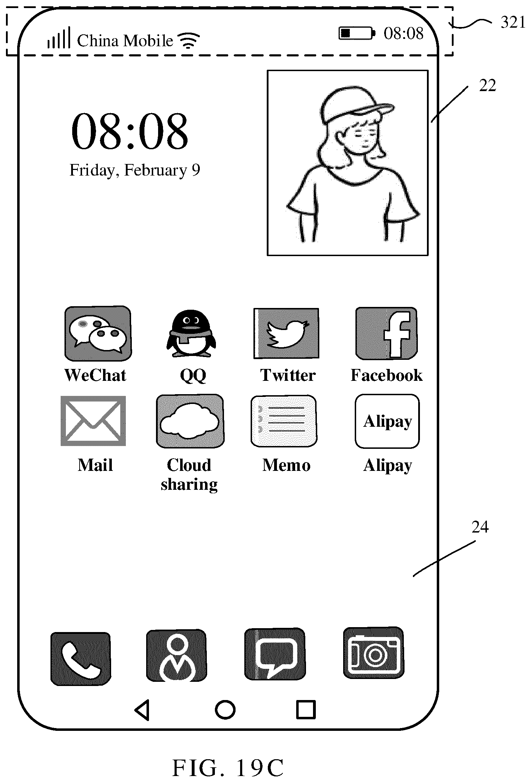

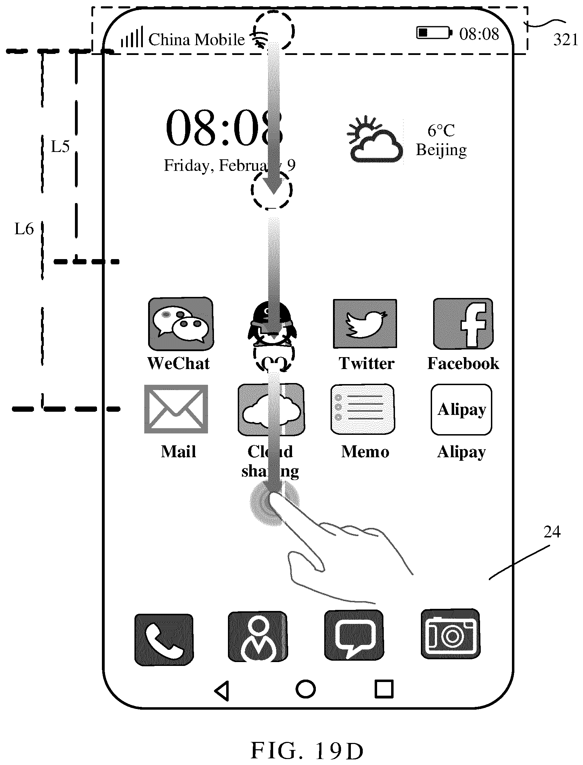

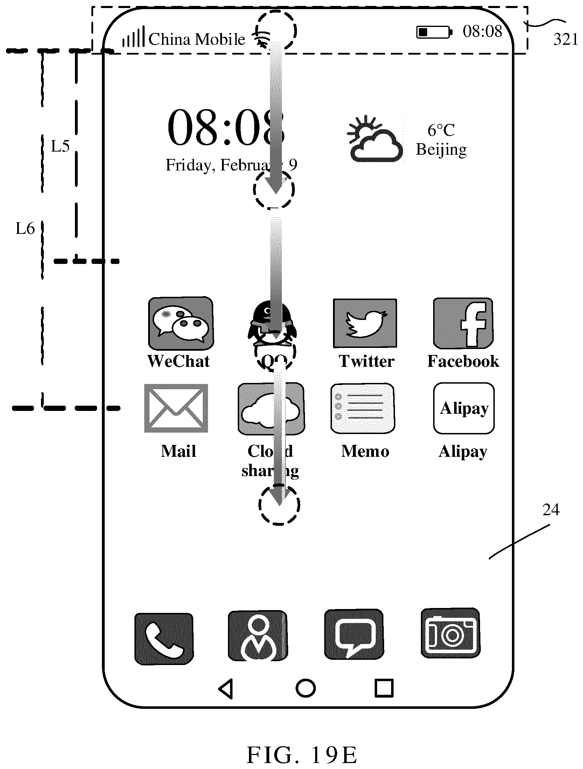

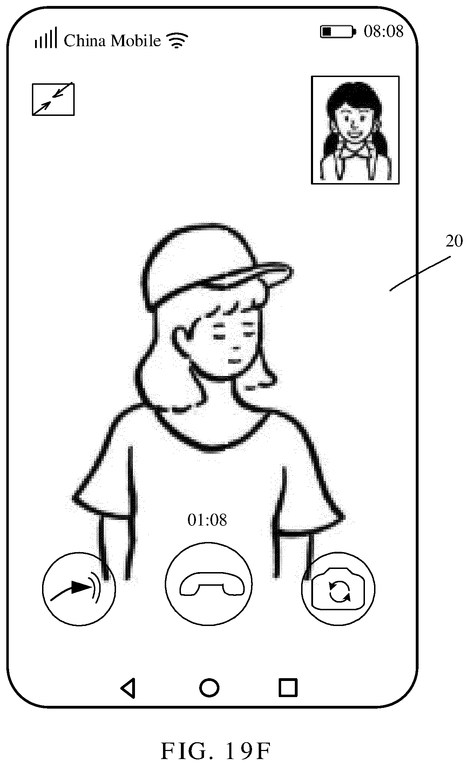

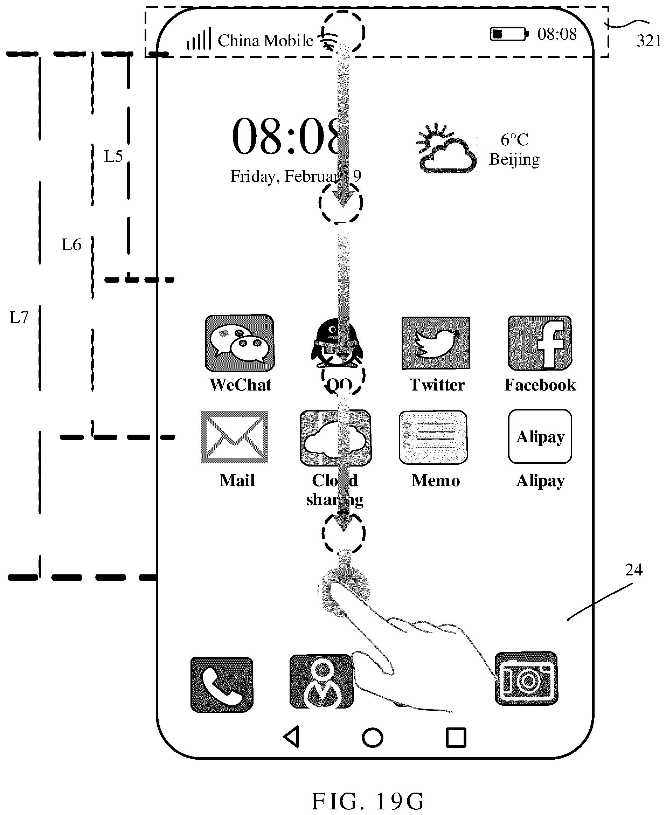

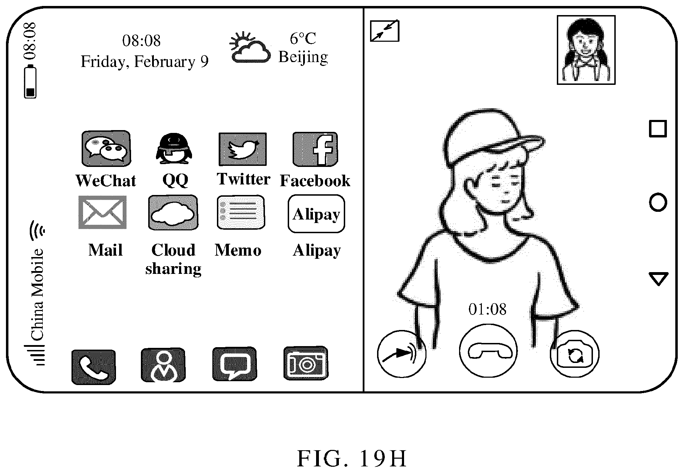

For example, a value of the sixth distance threshold is L6, and a value of the seventh distance threshold is L7. As shown in FIG. 19A and FIG. 19B, after the user operation shown in FIG. 18C, the finger of the user continues to slide downward, and when the finger of the user stops sliding and stops touching the display 194, a distance by which the finger of the user slides downward is greater than the fifth distance threshold and less than the sixth distance threshold. As shown in FIG. 19C, when the electronic device 100 detects the user operation, in response to the user operation, the electronic device 100 re-invokes the floating window 22, and displays the floating window 22 at a preset location on the display 194. As shown in FIG. 19D and FIG. 19E, after the user operation shown in FIG. 19A, the finger of the user continues to slide downward, and when the finger of the user stops sliding and stops touching the display 194, a distance by which the finger of the user slides downward is greater than the sixth distance threshold and less than the seventh distance threshold. As shown in FIG. 19F, when the electronic device 100 detects the user operation, in response to the user operation, the electronic device 100 displays, in full screen mode, the video call interface 20 corresponding to the floating window 22. As shown in FIG. 19G and FIG. 19H, after the user operation shown in FIG. 19D, the finger of the user continues to slide downward. When the electronic device 100 detects that a distance by which the finger of the user slides downward reaches the seventh distance threshold, in response to the user operation, the electronic device 100 displays, in split-screen mode, the video call interface 20 corresponding to the floating window 22.

It should be noted that, in addition to a split-screen interface shown in FIG. 19H, in a specific implementation, there may be another form of split-screen interface. This is not specifically limited herein.

In some embodiments of this application, the status bar 321 in the user interface may be divided into two parts: a first preset area and a second preset area. Widths of the status bar, the first preset area, and the second preset area in the second user interface are the same.

In some optional embodiments, the second user operation may be that the finger of the user slides on the display 194, a sliding start point is in the first preset area in the area in which the status bar 321 is located, a sliding trend is sliding toward the bottom of the electronic device 100, and when a distance by which the finger of the user slides downward is less than an eighth distance threshold, the finger of the user stops sliding and stops touching the display 194. The third user operation may be that the finger of the user slides on the display 194, a sliding start point is in the first preset area in the area in which the status bar 321 is located, a sliding trend is sliding toward the bottom of the electronic device 100, and when a distance by which the finger of the user slides downward is greater than or equal to the eighth distance threshold, the finger of the user stops sliding and stops touching the display 194. Alternatively, the third user operation may be that the finger of the user slides on the display 194, a sliding start point is in the first preset area in the area in which the status bar 321 is located, a sliding trend is sliding toward the bottom of the electronic device 100, and a distance by which the finger of the user slides downward reaches the eighth distance threshold. The fifth user operation may be that the finger of the user slides on the display 194, a sliding start point is in the second preset area in the area in which the status bar 321 is located, a sliding trend is sliding toward the bottom of the electronic device 100, and when a distance by which the finger of the user slides downward is less than the fifth distance threshold, the finger of the user stops sliding and stops touching the display 194. The fourth user operation may be that the finger of the user slides on the display 194, a sliding start point is in the second preset area in the area in which the status bar 321 is located, a sliding trend is sliding toward the bottom of the electronic device 100, and when a distance by which the finger of the user slides downward is greater than or equal to the fifth distance threshold, the finger of the user stops sliding and stops touching the display 194. Alternatively, the fourth user operation may be that the finger of the user slides on the display 194, a sliding start point is in the second preset area in the area in which the status bar 321 is located, a sliding trend is sliding toward the bottom of the electronic device 100, and a distance by which the finger of the user slides downward reaches the fifth distance threshold.

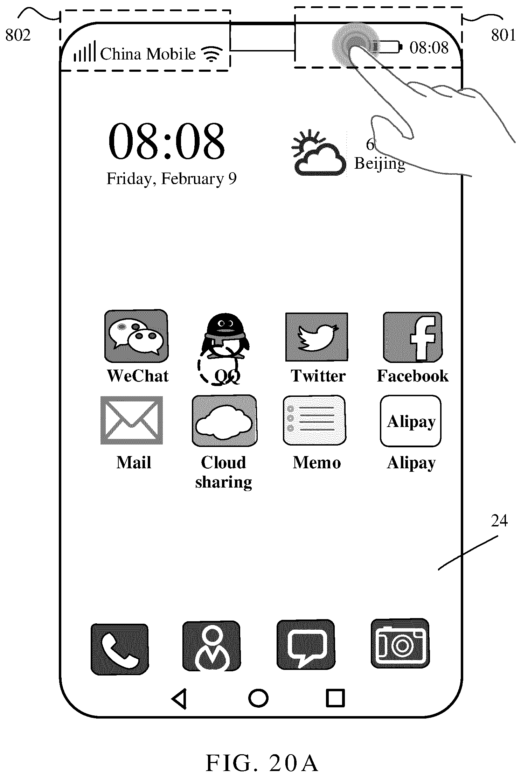

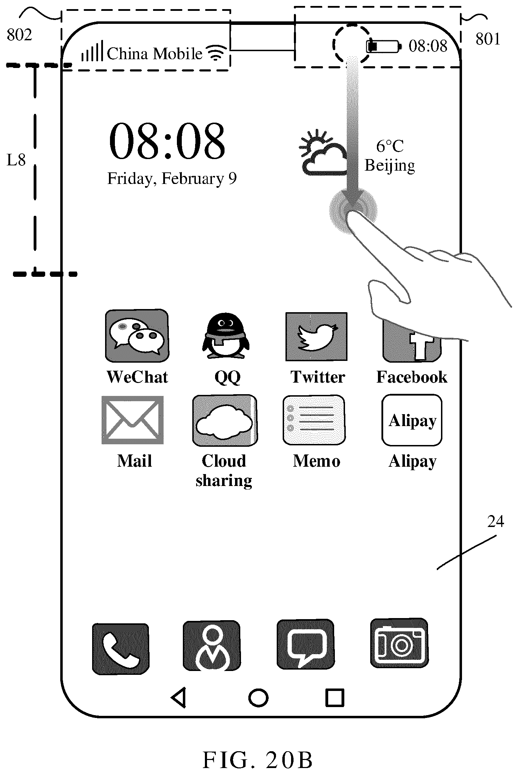

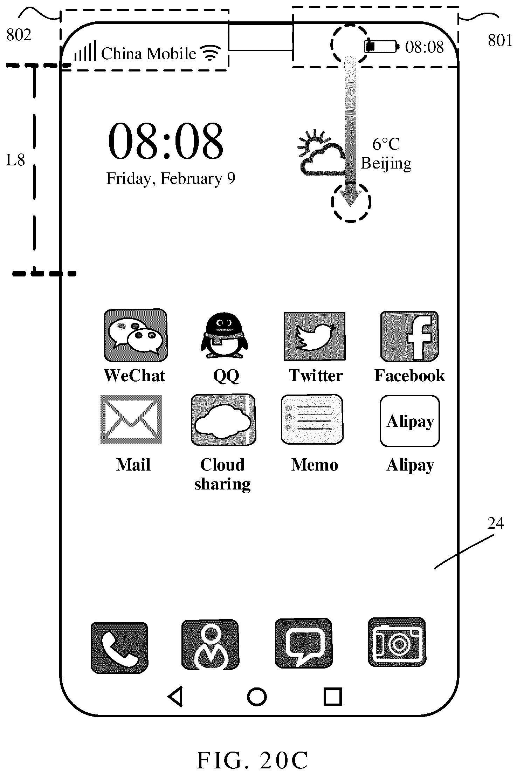

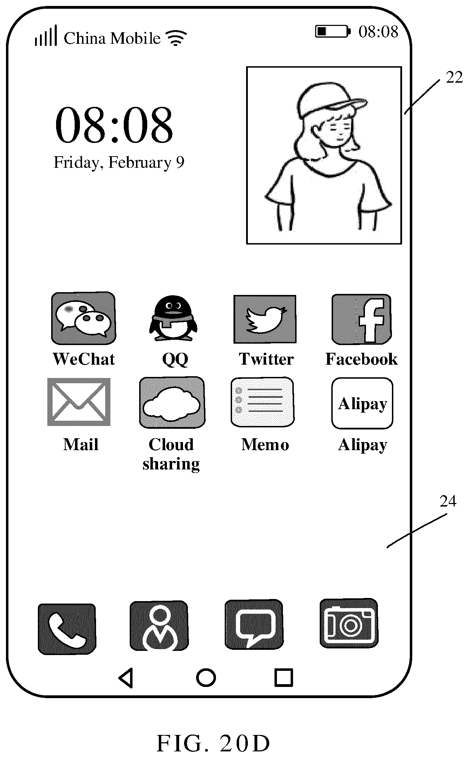

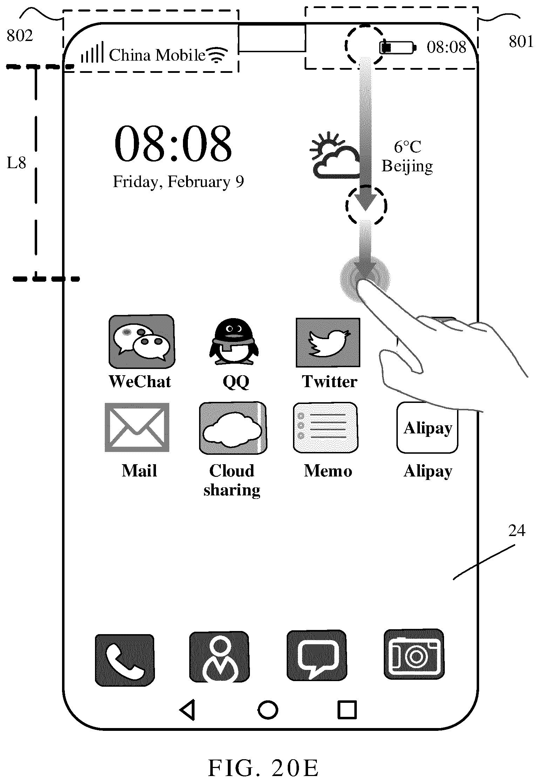

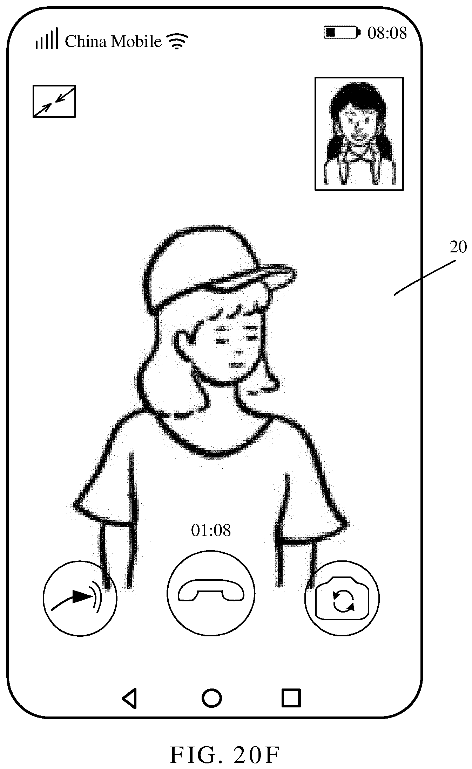

For example, a value of the eighth distance threshold is L8. As shown in FIG. 20A, FIG. 20B, FIG. 20C, and FIG. 20D, the finger of the user slides downward from the second preset area 802 of the status bar 321 on the display 194, and when a distance by which the finger of the user slides downward is less than the eighth distance threshold, the finger of the user stops sliding and stops touching the display 194. When the electronic device 100 detects the user operation, in response to the user operation, the electronic device 100 displays the floating window 22 at a preset location on the display 194. As shown in FIG. 20E and FIG. 20F, after the user operation shown in FIG. 20F**,** the finger of the user continues to slide downward, and when the electronic device 100 detects that a distance by which the finger of the user slides downward reaches the eighth distance threshold, in response to the user operation, the electronic device 100 displays, on the display 194 in full screen mode, the video call interface 20 corresponding to the floating window 22. For example, the finger of the user slides downward from the second preset area 802 of the status bar 321 on the display 194, when a distance by which the finger of the user slides downward is less than the fifth distance threshold, the finger of the user stops sliding and stops touching the display 194, and when the electronic device 100 detects the user operation, in response to the user operation, the electronic device 100 displays the system notification bar interface 25 in full screen mode. The finger of the user continues to slide downward, and when the electronic device 100 detects that a distance by which the finger of the user slides downward reaches the fifth distance threshold, in response to the user operation, the electronic device 100 displays, in split-screen mode, the video call interface 20 corresponding to the floating window 22.

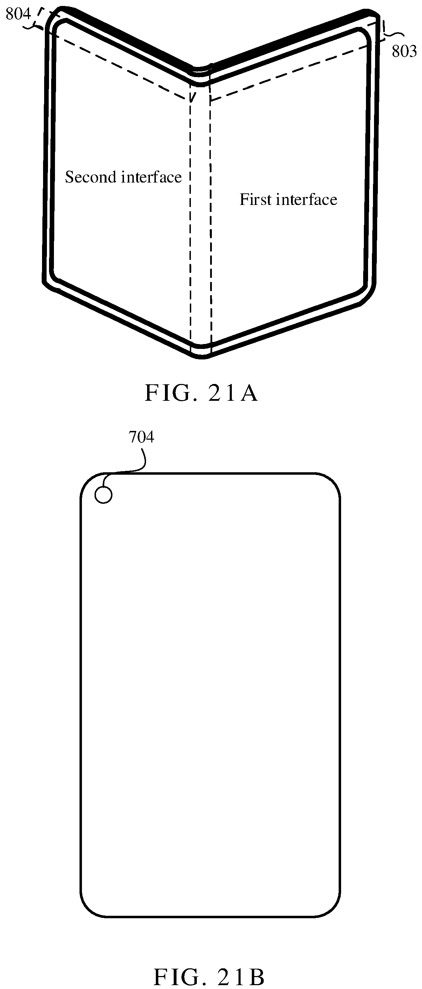

In some embodiments of this application, as shown in FIG. 21A, the display 194 may be divided into two parts: a first interface and a second interface by using a folding track of a foldable screen as a division line; and the first preset area is a status bar area 803 in the first interface, and the second preset area is a status bar area 804 in the second interface; or the first preset area is a status bar area 804 in the second interface, and the second preset area is a status bar area 803 in the first interface.

In some embodiments of this application, an area in which a small hole of the hole-punch display is located is used as a trigger point, and the finger of the user approaches, in a floating manner (or through single-tapping), the area in which the small hole of the hole-punch display is located. When the electronic device 100 detects the user operation, in response to the user operation, the electronic device 100 displays a menu navigation window on the display 194. The menu navigation window includes at least a first option control and a second option control. The first option control is configured to trigger the electronic device 100 to re-invoke the floating window. The second option control is configured to trigger the electronic device 100 to re-invoke the floating window, and display, in full screen mode, the video call interface 20 corresponding to the floating window 22. The second user operation may be that the finger of the user single-taps the first option control. The third user operation may be that the finger of the user single-taps the second option control.

For example, as shown in FIG. 21B, the hole-punch display may alternatively refer to a screen design in which a small hole 704 is disposed on the left of an upper edge of the display 194.

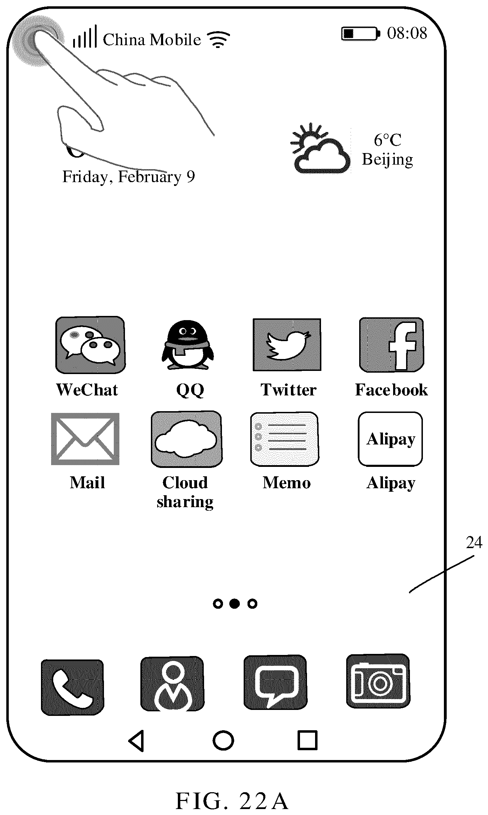

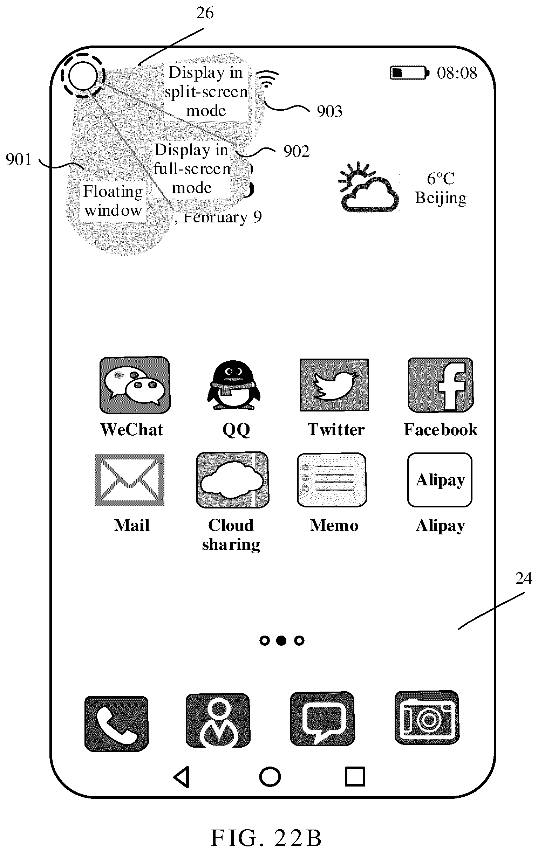

For example, as shown in FIG. 22A and FIG. 22B, the finger of the user single-taps an area in which a small hole of the hole-punch display is located, and the finger of the user touches touch points around the small hole of the display. When the electronic device 100 detects the user operation, in response to the user operation, the electronic device 100 displays a menu navigation window 26 on the display 194. The menu navigation window 26 includes a first option control 901, a second option control 902, and a third option control 903. For example, the finger of the user touches the first option control 901. When the electronic device 100 detects the user operation, in response to the user operation, the electronic device 100 displays the floating window 22 at a preset location on the display 194. For example, the finger of the user single-taps the second option control 902. When the electronic device 100 detects the user operation, in response to the user operation, the electronic device 100 displays, in full screen mode, the video call interface 20 corresponding to the floating window 22. For example, the finger of the user single-taps the third option control 903. When the electronic device 100 detects the user operation, in response to the user operation, the electronic device 100 displays, in split-screen mode, the video call interface 20 corresponding to the floating window 22.

In addition to the foregoing user operation used to re-invoke the floating window 22, in a specific implementation, there may be another user operation to re-invoke the floating window 22.

For example, the user may re-invoke the floating window 22 by pressing the button 190.

Specifically, the button 190 used to re-invoke the floating window 22 may include any one or more of a volume up button, a volume down button, and a power button. A location of each button on the electronic device 100 is shown in FIG. 15. A manner of re-invoking the floating window 22 by pressing the button 190 is similar to a manner of hiding the floating window 22 by pressing the button 190. Details are not described herein again.

For example, the user may re-invoke the floating window 22 by using a voice.

Specifically, the electronic device 100 may collect, by using a microphone, the voice entered by the user, for example, specific content of the voice is "Please re-invoke the floating window"; compare the specific content "Please re-invoke the floating window" of the collected voice with a pre-stored voice keyword "Please re-invoke the floating window", and compare a voice feature of the collected voice with a pre-stored voice feature of an owner; and re-invoke the floating window if the specific content of the voice is the same as the pre-stored voice keyword and a degree of matching between the voice feature of the collected voice and the voice feature of the owner exceeds a specific threshold. The floating window is re-invoked by using the voice. Therefore, the operation is simple and convenient. In addition, because another person cannot imitate the voice feature of the owner, the hidden floating window cannot be invoked randomly, and security is high. The foregoing manner of re-invoking the floating window is merely used an example for description. Actually, the floating window may alternatively be re-invoked in another manner, for example, a specific pattern is entered in a specific area in the user interface. This is not limited in this embodiment of this application.

According to this application, when displaying a floating window used for a video call, the electronic device 100 may hide the floating window based on a user operation, and the electronic device 100 may further re-invoke the hidden floating window based on a user operation. In addition, in the foregoing process, when the electronic device 100 continuously keeps the video call, the floating window is prevented from blocking the user interface, to improve convenience of the user operation.

The floating window management method provided in this application may be further applied to a voice call scenario.

In the foregoing voice call scenario, for the user operation used to hide the floating window 32, refer to the first user operation in the video call scenario. Details are not described herein again.

In the foregoing voice call scenario, for the user operation used to re-invoke the floating window 32, refer to the second user operation in the video call scenario. Details are not described herein again.

The floating window management method provided in this application may be further applied to a video playing scenario.

In the foregoing voice call scenario, for the user operation used to hide the floating window 41, refer to the first user operation in the video call scenario. Details are not described herein again.

In the foregoing video playing scenario, for the user operation used to re-invoke the floating window 41, refer to the second user operation in the video call scenario. Details are not described herein again.

An embodiment of this application further provides a computer-readable storage medium. All or some of the procedures in the foregoing method embodiments may be completed by a computer program instructing related hardware. The program may be stored in the foregoing computer storage medium. When the program is executed, the procedures of the foregoing method embodiments may be included. The computer-readable storage medium includes any medium that can store program code, such as a read-only memory (read-only memory, ROM), a random access memory (random access memory, RAM), a magnetic disk, or an optical disc.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A sequence of the steps of the method in the embodiments of this application may be adjusted, combined, and deleted based on an actual requirement.

The modules in the apparatus in the embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the claims.

## Claims

1. A floating window management method, comprising:
displaying, by an electronic device (100), a first user interface and a floating window (22) on a display (194),
receiving, by the electronic device (100), a first user operation, wherein the first user operation is that a user drags the floating window (22) to a status bar (321) in the first user interface; and
hiding, by the electronic device (100), the floating window (22) in response to the first user operation,
wherein the floating window (22) and the status bar (321) in the first user interface cannot be displayed in an overlapping manner; and the first user operation is that a finger of the user slides on the display (194), to drag the floating window upward to the status bar (321) in the first user interface, and a first preset condition is met,
**characterized in that**:
the floating window (22) is used to display an image collected by a camera of the electronic device (100) of a video contact,
wherein the first preset condition is:
after the upper edge of the floating window (22) coincides with the lower edge of the status bar (321) in the first user interface, a distance by which the finger of the user continues to slide upward on the display (194) reaches a first distance threshold;
after the upper edge of the floating window (22) coincides with the lower edge of the status bar (321) in the first user interface, when the distance by which the finger of the user continues to slide upward on the display (194) is greater than or equal to the first distance threshold, the finger of the user stops sliding and stops touching the display (194);
after the upper edge of the floating window (22) coincides with the lower edge of the status bar in the first user interface, a time period for which the finger of the user continues to touch the area in which the floating window (22) is located on the display (194) reaches a first time threshold; or
after the upper edge of the floating window (22) coincides with the lower edge of the status bar (321) in the first user interface, when the time period for which the finger of the user continues to touch the area in which the floating window (22) is located on the display (194) is greater than or equal to the first time threshold, the finger of the user stops touching the area in which the floating window (22) is located on the display (194).

2. The method according to claim 1, wherein after the hiding, by the electronic device (100), the floating window (22) in response to the first user operation, the method further comprises:
receiving, by the electronic device (100), a second user operation performed on a status bar (321) in a second user interface; and
displaying, by the electronic device (100), the second user interface and the floating window (22) on the display (194) in response to the second user operation.

3. The method according to claim 1 or 2, wherein after the hiding, by the electronic device (100), the floating window (22) in response to the first user operation, the method further comprises:
receiving, by the electronic device (100), a third user operation performed on the status bar (321) in the second user interface; and
displaying, by the electronic device (100) on the display (194) in full screen mode in response to the third user operation, a video call interface corresponding to the floating window (22).

4. The method according to any one of claims 1 to 3, wherein the display (194) comprises a first area and a second area, and after the hiding, by the electronic device (100), the floating window (22) in response to the first user operation, the method further comprises:
receiving, by the electronic device (100), a fourth user operation performed on the status bar (321) in the second user interface; and
in response to the fourth user operation, displaying, by the electronic device, the second user interface in the first area, and displaying, by the electronic device (100), the video call interface corresponding to the floating window (22) in the second area.

5. The method according to any one of claims 2 to 4, wherein the second user operation is that the finger of the user single-taps or double-taps the status bar (321) in the second user interface;
the second user operation is that the finger of the user slides leftward or rightward on the status bar (321) in the second user interface for a time period greater than or equal to a fourth time threshold;
the second user operation is that the finger of the user slides leftward or rightward on the status bar (321) in the second user interface by a distance greater than or equal to a fourth distance threshold;
the second user operation is that the finger of the user touches and holds the status bar (321) in the second user interface for a time period greater than or equal to a fifth time threshold; or
the second user operation is that the finger of the user slides downward by using the status bar (321) in the second user interface as a start point, and when a distance by which the finger of the user slides downward is greater than a fifth distance threshold, the finger of the user stops sliding and stops touching the display (194).

6. The method according to claim 3 or claim 4, wherein the third user operation is that the finger of the user single-taps or double-taps the status bar (321) in the second user interface;
the third user operation is that the finger of the user slides leftward or rightward on the status bar (321) in the second user interface for a time period greater than or equal to a fourth time threshold;
the third user operation is that the finger of the user slides leftward or rightward on the status bar (321) in the second user interface by a distance greater than or equal to a fourth distance threshold;
the third user operation is that the finger of the user touches and holds the status bar (321) in the second user interface for a time period greater than or equal to a fifth time threshold; or
the third user operation is that the finger of the user slides downward by using the status bar (321) in the second user interface as a start point, and when a distance by which the finger of the user slides downward is greater than a fifth distance threshold, the finger of the user stops sliding and stops touching the display.

7. The method according to claim 4, wherein the fourth user operation is that the finger of the user single-taps or double-taps the status bar (321) in the second user interface;
the fourth user operation is that the finger of the user slides leftward or rightward on the status bar (321) in the second user interface for a time period greater than or equal to a fourth time threshold;
the fourth user operation is that the finger of the user slides leftward or rightward on the status bar (321) in the second user interface by a distance greater than or equal to a fourth distance threshold;
the fourth user operation is that the finger of the user touches and holds the status bar (321) in the second user interface for a time period greater than or equal to a fifth time threshold; or
the fourth user operation is that the finger of the user slides downward by using the status bar (321) in the second user interface as a start point, and when a distance by which the finger of the user slides downward is greater than a fifth distance threshold, the finger of the user stops sliding and stops touching the display (194).

8. An electronic device (100), comprising one or more processors and one or more memories, wherein
the one or more memories are coupled to the one or more processors, the one or more memories are configured to store computer program code, wherein the computer program code comprises computer instructions, and when the one or more processors execute the computer instructions, the electronic device (100) performs the floating window management method according to any one of claims 1 to 7.

9. A computer program product, wherein when the computer program product runs on an electronic device, the electronic device is enabled to perform the floating window management method according to any one of claims 1 to 7.

10. A computer storage medium, including computer instructions, wherein when the computer instructions are run on an electronic device, the electronic device is enabled to perform the floating window management method according to any one of claims 1 to 7.

## Patentansprüche

1. Verfahren zur Verwaltung von schwebendem Fenster, umfassend:
Anzeigen einer ersten Benutzerschnittstelle und eines schwebenden Fensters (22) auf einem Display (194) durch eine elektronische Vorrichtung (100),
Empfangen eines ersten Benutzervorgangs durch die elektronische Vorrichtung (100), wobei der erste Benutzervorgang darin besteht, dass ein Benutzer das schwebende Fenster (22) in eine Statusleiste (321) in der ersten Benutzerschnittstelle zieht; und
Ausblenden des schwebenden Fensters (22) durch die elektronische Vorrichtung (100) als Reaktion auf den ersten Benutzervorgang,
wobei das schwebende Fenster (22) und die Statusleiste (321) in der ersten Benutzerschnittstelle nicht überlappend angezeigt werden können; und der erste Benutzervorgang darin besteht, dass ein Finger des Benutzers über das Display (194) gleitet, um das schwebende Fenster nach oben zu der Statusleiste (321) in der ersten Benutzerschnittstelle zu ziehen, und eine erste voreingestellte Bedingung erfüllt ist,
**dadurch gekennzeichnet, dass**:
das schwebende Fenster (22) verwendet wird, um ein Bild, das durch eine Kamera der elektronischen Vorrichtung (100) eines Videokontakts aufgenommen wird, anzuzeigen,
wobei die erste voreingestellte Bedingung folgende ist:
nachdem die obere Kante des schwebenden Fensters (22) mit der unteren Kante der Statusleiste (321) in der ersten Benutzerschnittstelle zusammenfällt, erreicht ein Abstand, um welchen der Finger des Benutzers auf dem Display (194) weiter nach oben gleitet, einen ersten Abstandsschwellenwert;
nachdem die obere Kante des schwebenden Fensters (22) mit der unteren Kante der Statusleiste (321) in der ersten Benutzerschnittstelle zusammenfällt, wenn der Abstand, um welchen der Finger des Benutzers auf dem Display (194) weiter nach oben gleitet, größer oder gleich dem ersten Abstandsschwellenwert ist, hört der Finger des Benutzers auf zu gleiten und hört er auf, das Display (194) zu berühren;
nachdem die obere Kante des schwebenden Fensters (22) mit der unteren Kante der Statusleiste in der ersten Benutzerschnittstelle zusammenfällt, erreicht ein Zeitraum, in welchem der Finger des Benutzers den Bereich weiter berührt, in welchem sich das schwebende Fenster (22) auf dem Display (194) befindet, einen ersten Schwellenwert; oder
nachdem die obere Kante des schwebenden Fensters (22) mit der unteren Kante der Statusleiste (321) in der ersten Benutzerschnittstelle zusammenfällt, wenn der Zeitraum, in welchem der Finger des Benutzers den Bereich weiter berührt, in welchem sich das schwebende Fenster (22) auf dem Display (194) befindet, größer oder gleich dem ersten Zeitschwellenwert ist, hört der Finger des Benutzers auf, den Bereich zu berühren, in welchem sich das schwebende Fenster (22) auf dem Display (194) befindet.

2. Verfahren nach Anspruch 1, wobei das Verfahren nach dem Ausblenden des schwebenden Fensters (22) durch die elektronische Vorrichtung (100) als Reaktion auf den ersten Benutzervorgang ferner Folgendes umfasst:
Empfangen eines zweiten Benutzervorgangs durch die elektronische Vorrichtung (100) auf einer Statusleiste (321) in einer zweiten Benutzerschnittstelle; und
Anzeigen der zweiten Benutzerschnittstelle und des schwebenden Fensters (22) auf dem Display (194) durch die elektronische Vorrichtung (100) als Reaktion auf den zweiten Benutzervorgang.

3. Verfahren nach Anspruch 1 oder 2, wobei das Verfahren nach dem Ausblenden des schwebenden Fensters (22) durch die elektronische Vorrichtung (100) als Reaktion auf den ersten Benutzervorgang ferner Folgendes umfasst:
Empfangen eines dritten Benutzervorgangs, der auf der Statusleiste (321) in der zweiten Benutzerschnittstelle durchgeführt wird, durch die elektronische Vorrichtung (100); und
Anzeigen einer Videoanrufschnittstelle entsprechend dem schwebenden Fenster (22) durch die elektronische Vorrichtung (100) auf dem Display (194) im Vollbildmodus als Reaktion auf den dritten Benutzervorgang.

4. Verfahren nach einem der Ansprüche 1 bis 3, wobei das Display (194) einen ersten Bereich und einen zweiten Bereich umfasst, und Verfahren nach dem Ausblenden des schwebenden Fensters (22) durch die elektronische Vorrichtung (100) als Reaktion auf den ersten Benutzervorgang ferner Folgendes umfasst:
Empfangen eines vierten Benutzervorgangs, der auf der Statusleiste (321) in der zweiten Benutzerschnittstelle durchgeführt wird, durch die elektronische Vorrichtung (100); und
als Reaktion auf den vierten Benutzervorgang, Anzeigen der zweiten Benutzerschnittstelle in dem ersten Bereich durch die elektronische Vorrichtung und Anzeigen der Videoanrufschnittstelle entsprechend dem schwebenden Fenster (22) in dem zweiten Bereich durch die elektronische Vorrichtung (100) .

5. Verfahren nach einem der Ansprüche 2 bis 4, wobei der zweite Benutzervorgang darin besteht, dass der Finger des Benutzers die Statusleiste (321) in der zweiten Benutzerschnittstelle einmal oder zweimal antippt;
der zweite Benutzervorgang darin besteht, dass der Finger des Benutzers auf der Statusleiste (321) in der zweiten Benutzerschnittstelle über einen Zeitraum, der größer oder gleich einem vierten Zeitschwellenwert ist, nach links oder rechts gleitet;
der zweite Benutzervorgang darin besteht, dass der Finger des Benutzers auf der Statusleiste (321) in der zweiten Benutzerschnittstelle um einen Abstand, der größer oder gleich einem vierten Abstandsschwellenwert ist, nach links oder rechts gleitet;
der zweite Benutzervorgang darin besteht, dass der Finger des Benutzers die Statusleiste (321) in der zweiten Benutzerschnittstelle über einen Zeitraum, der größer oder gleich einem fünften Zeitschwellenwert ist, berührt und hält; oder
der zweite Benutzervorgang darin besteht, dass der Finger des Benutzers unter Verwendung der Statusleiste (321) in der zweiten Benutzerschnittstelle als einen Startpunkt nach unten gleitet, und wenn ein Abstand, um welchen der Finger des Benutzers nach unten gleitet, größer als ein fünfter Abstandsschwellenwert ist, der Finger des Benutzers aufhört zu gleiten und aufhört, das Display (194) zu berühren.

6. Verfahren nach Anspruch 3 oder Anspruch 4, wobei der dritte Benutzervorgang darin besteht, dass der Finger des Benutzers die Statusleiste (321) in der zweiten Benutzerschnittstelle einmal oder zweimal antippt;
der dritte Benutzervorgang darin besteht, dass der Finger des Benutzers auf der Statusleiste (321) in der zweiten Benutzerschnittstelle über einen Zeitraum, der größer oder gleich einem vierten Zeitschwellenwert ist, nach links oder rechts gleitet;
der dritte Benutzervorgang darin besteht, dass der Finger des Benutzers auf der Statusleiste (321) in der zweiten Benutzerschnittstelle um einen Abstand, der größer oder gleich einem vierten Abstandsschwellenwert ist, nach links oder rechts gleitet;
der dritte Benutzervorgang darin besteht, dass der Finger des Benutzers die Statusleiste (321) in der zweiten Benutzerschnittstelle über einen Zeitraum, der größer oder gleich einem fünften Zeitschwellenwert ist, berührt und hält; oder
der dritte Benutzervorgang darin besteht, dass der Finger des Benutzers unter Verwendung der Statusleiste (321) in der zweiten Benutzerschnittstelle als einen Startpunkt nach unten gleitet, und wenn ein Abstand, um welchen der Finger des Benutzers nach unten gleitet, größer als ein fünfter Abstandsschwellenwert ist, der Finger des Benutzers aufhört zu gleiten und aufhört, das Display zu berühren.

7. Verfahren nach Anspruch 4, wobei der vierte Benutzervorgang darin besteht, dass der Finger des Benutzers die Statusleiste (321) in der zweiten Benutzerschnittstelle einmal oder zweimal antippt;
der vierte Benutzervorgang darin besteht, dass der Finger des Benutzers auf der Statusleiste (321) in der zweiten Benutzerschnittstelle über einen Zeitraum, der größer oder gleich einem vierten Zeitschwellenwert ist, nach links oder rechts gleitet;
der vierte Benutzervorgang darin besteht, dass der Finger des Benutzers auf der Statusleiste (321) in der zweiten Benutzerschnittstelle um einen Abstand, der größer oder gleich einem vierten Abstandsschwellenwert ist, nach links oder rechts gleitet;
der vierte Benutzervorgang darin besteht, dass der Finger des Benutzers die Statusleiste (321) in der zweiten Benutzerschnittstelle über einen Zeitraum, der größer oder gleich einem fünften Zeitschwellenwert ist, berührt und hält; oder
der vierte Benutzervorgang darin besteht, dass der Finger des Benutzers unter Verwendung der Statusleiste (321) in der zweiten Benutzerschnittstelle als einen Startpunkt nach unten gleitet, und wenn ein Abstand, um welchen der Finger des Benutzers nach unten gleitet, größer als ein fünfter Abstandsschwellenwert ist, der Finger des Benutzers aufhört zu gleiten und aufhört, das Display (194) zu berühren.

8. Elektronische Vorrichtung (100), umfassend einen oder mehrere Prozessoren und einen oder mehrere Speicher, wobei
der eine oder die mehreren Speicher mit dem einen oder den mehreren Prozessoren gekoppelt sind, der eine oder die mehreren Speicher dazu konfiguriert sind, einen Computerprogrammcode zu speichern, wobei der Computerprogrammcode Computeranweisungen umfasst, und, wenn der eine oder die mehreren Prozessoren die Computeranweisungen ausführen, die elektronische Vorrichtung (100) das Verfahren zur Verwaltung von schwebendem Fenster nach einem der Ansprüche 1 bis 7 durchführt.

9. Computerprogrammprodukt, wobei, wenn das Computerprogrammprodukt auf einer elektronischen Vorrichtung läuft, die elektronische Vorrichtung in die Lage versetzt wird, das Verfahren zur Verwaltung von schwebendem Fenster nach einem der Ansprüche 1 bis 7 durchzuführen.

10. Computerspeichermedium, beinhaltend Computeranweisungen, wobei, wenn die Computeranweisungen auf einer elektronischen Vorrichtung ausgeführt werden, die elektronische Vorrichtung in die Lage versetzt wird, das Verfahren zur Verwaltung von schwebendem Fenster nach einem der Ansprüche 1 bis 7 durchzuführen.

## Revendications

1. Procédé de gestion de fenêtre flottante, comprenant :
l'affichage, par un dispositif électronique (100), d'une première interface utilisateur et d'une fenêtre flottante (22) sur un affichage (194),
la réception, par le dispositif électronique (100), d'une première opération d'utilisateur, dans lequel la première opération d'utilisateur consiste en ce qu'un utilisateur fait glisser la fenêtre flottante (22) vers une barre d'état (321) dans la première interface utilisateur ; et
le masquage, par le dispositif électronique (100), de la fenêtre flottante (22) en réponse à la première opération d'utilisateur, dans lequel la fenêtre flottante (22) et la barre d'état (321) dans la première interface utilisateur ne peuvent pas être affichées de manière superposée ; et la première opération d'utilisateur consiste en ce qu'un doigt de l'utilisateur glisse sur l'affichage (194) pour faire glisser la fenêtre flottante vers le haut jusqu'à la barre d'état (321) dans la première interface utilisateur, et qu'une première condition prédéfinie est remplie,
**caractérisé en ce que** :
la fenêtre flottante (22) est utilisée pour afficher une image collectée par une caméra du dispositif électronique (100) d'un contact vidéo,
dans lequel la première condition prédéfinie est la suivante :
après que le bord supérieur de la fenêtre flottante (22) coïncide avec le bord inférieur de la barre d'état (321) dans la première interface utilisateur, une distance par laquelle le doigt de l'utilisateur continue à glisser vers le haut sur l'affichage (194) atteint un premier seuil de distance ;
après que le bord supérieur de la fenêtre flottante (22) coïncide avec le bord inférieur de la barre d'état (321) dans la première interface utilisateur, lorsque la distance par laquelle le doigt de l'utilisateur continue à glisser vers le haut sur l'affichage (194) est supérieure ou égale au premier seuil de distance, le doigt de l'utilisateur cesse de glisser et cesse de toucher l'écran (194) ;
après que le bord supérieur de la fenêtre flottante (22) coïncide avec le bord inférieur de la barre d'état dans la première interface utilisateur, une durée pendant laquelle le doigt de l'utilisateur continue de toucher la zone dans laquelle se trouve la fenêtre flottante (22) sur l'affichage (194) atteint un premier seuil de durée ; ou
après que le bord supérieur de la fenêtre flottante (22) coïncide avec le bord inférieur de la barre d'état (321) dans la première interface utilisateur, lorsque la durée pendant laquelle le doigt de l'utilisateur continue de toucher la zone dans laquelle se trouve la fenêtre flottante (22) sur l'affichage (194) est supérieure ou égale au premier seuil de durée, le doigt de l'utilisateur cesse de toucher la zone dans laquelle se trouve la fenêtre flottante (22) sur l'affichage (194).

2. Procédé selon la revendication 1, dans lequel après le masquage, par le dispositif électronique (100), de la fenêtre flottante (22) en réponse à la première opération d'utilisateur, le procédé comprend également :
la réception, par le dispositif électronique (100), d'une deuxième opération d'utilisateur réalisée sur une barre d'état (321) dans une seconde interface utilisateur ; et
l'affichage, par le dispositif électronique (100), de la seconde interface utilisateur et de la fenêtre flottante (22) sur l'affichage (194) en réponse à la deuxième opération d'utilisateur.

3. Procédé selon la revendication 1 ou 2, dans lequel après le masquage, par le dispositif électronique (100), de la fenêtre flottante (22) en réponse à la première opération d'utilisateur, le procédé comprend également :
la réception, par le dispositif électronique (100), d'une troisième opération d'utilisateur réalisée sur la barre d'état (321) dans la seconde interface utilisateur ; et
l'affichage, par le dispositif électronique (100) sur l'affichage (194) en mode plein écran en réponse à la troisième opération d'utilisateur, d'une interface d'appel vidéo correspondant à la fenêtre flottante (22).

4. Procédé selon l'une quelconque des revendications 1 à 3, dans lequel l'affichage (194) comprend une première zone et une seconde zone, et après le masquage, par le dispositif électronique (100), de la fenêtre flottante (22) en réponse à la première opération d'utilisateur, le procédé comprend également :
la réception, par le dispositif électronique (100), d'une quatrième opération d'utilisateur réalisée sur la barre d'état (321) dans la seconde interface utilisateur ; et
en réponse à la quatrième opération d'utilisateur, l'affichage, par le dispositif électronique, de la seconde interface utilisateur dans la première zone, et l'affichage, par le dispositif électronique (100), de l'interface d'appel vidéo correspondant à la fenêtre flottante (22) dans la seconde zone.

5. Procédé selon l'une quelconque des revendications 2 à 4, dans lequel la deuxième opération d'utilisateur consiste en ce que le doigt de l'utilisateur appuie une fois ou deux fois sur la barre d'état (321) dans la seconde interface utilisateur ;
la deuxième opération d'utilisateur consiste en ce que le doigt de l'utilisateur glisse vers la gauche ou vers la droite sur la barre d'état (321) dans la seconde interface utilisateur pendant une durée supérieure ou égale à un quatrième seuil de durée ;
la deuxième opération d'utilisateur consiste en ce que le doigt de l'utilisateur glisse vers la gauche ou vers la droite sur la barre d'état (321) dans la seconde interface utilisateur d'une distance supérieure ou égale à un quatrième seuil de distance ;
la deuxième opération d'utilisateur consiste en ce que le doigt de l'utilisateur touche et maintient la barre d'état (321) dans la seconde interface utilisateur pendant une durée supérieure ou égale à un cinquième seuil de durée ; ou
la deuxième opération d'utilisateur consiste en ce que le doigt de l'utilisateur glisse vers le bas à l'aide de la barre d'état (321) dans la seconde interface utilisateur comme point de départ, et lorsqu'une distance par laquelle le doigt de l'utilisateur glisse vers le bas est supérieure à un cinquième seuil de distance, le doigt de l'utilisateur cesse de glisser et cesse de toucher l'affichage (194).

6. Procédé selon la revendication 3 ou la revendication 4, dans lequel la troisième opération d'utilisateur consiste en ce que le doigt de l'utilisateur appuie une fois ou deux fois sur la barre d'état (321) dans la seconde interface utilisateur ;
la troisième opération d'utilisateur consiste en ce que le doigt de l'utilisateur glisse vers la gauche ou vers la droite sur la barre d'état (321) dans la seconde interface utilisateur pendant une durée supérieure ou égale à un quatrième seuil de durée ;
la troisième opération d'utilisateur consiste en ce que le doigt de l'utilisateur glisse vers la gauche ou vers la droite sur la barre d'état (321) dans la seconde interface utilisateur d'une distance supérieure ou égale à un quatrième seuil de distance ;
la troisième opération d'utilisateur consiste en ce que le doigt de l'utilisateur touche et maintient la barre d'état (321) dans la seconde interface utilisateur pendant une durée supérieure ou égale à un cinquième seuil de durée ; ou
la troisième opération d'utilisateur consiste en ce que le doigt de l'utilisateur glisse vers le bas à l'aide de la barre d'état (321) dans la seconde interface utilisateur comme point de départ, et lorsqu'une distance par laquelle le doigt de l'utilisateur glisse vers le bas est supérieure à un cinquième seuil de distance, le doigt de l'utilisateur cesse de glisser et cesse de toucher l'affichage.

7. Procédé selon la revendication 4, dans lequel la quatrième opération d'utilisateur consiste en ce que le doigt de l'utilisateur appuie une fois ou deux fois sur la barre d'état (321) dans la seconde interface utilisateur ;
la quatrième opération d'utilisateur consiste en ce que le doigt de l'utilisateur glisse vers la gauche ou vers la droite sur la barre d'état (321) dans la seconde interface utilisateur pendant une durée supérieure ou égale à un quatrième seuil de durée ;
la quatrième opération d'utilisateur consiste en ce que le doigt de l'utilisateur glisse vers la gauche ou vers la droite sur la barre d'état (321) dans la seconde interface utilisateur d'une distance supérieure ou égale à un quatrième seuil de distance ;
la quatrième opération d'utilisateur consiste en ce que le doigt de l'utilisateur touche et maintient la barre d'état (321) dans la seconde interface utilisateur pendant une durée supérieure ou égale à un cinquième seuil de durée ; ou
la quatrième opération d'utilisateur consiste en ce que le doigt de l'utilisateur glisse vers le bas à l'aide de la barre d'état (321) dans la seconde interface utilisateur comme point de départ, et lorsqu'une distance par laquelle le doigt de l'utilisateur glisse vers le bas est supérieure à un cinquième seuil de distance, le doigt de l'utilisateur cesse de glisser et cesse de toucher l'affichage (194).

8. Dispositif électronique (100), comprenant un ou plusieurs processeurs et une ou plusieurs mémoires, dans lequel
les une ou plusieurs mémoires sont couplées aux un ou plusieurs processeurs, les une ou plusieurs mémoires sont configurées pour stocker un code de programme informatique, dans lequel le code de programme informatique comprend des instructions informatiques, et lorsque les un ou plusieurs processeurs exécutent les instructions informatiques, le dispositif électronique (100) réalise le procédé de gestion de fenêtre flottante selon l'une quelconque des revendications 1 à 7.

9. Produit de programme informatique, dans lequel lorsque le produit de programme informatique fonctionne sur un dispositif électronique, le dispositif électronique est activé pour réaliser le procédé de gestion de fenêtre flottante selon l'une quelconque des revendications 1 à 7.

10. Support de stockage informatique, comportant des instructions informatiques, dans lequel, lorsque les instructions informatiques fonctionnent sur un dispositif électronique, le dispositif électronique est activé pour réaliser le procédé de gestion de fenêtre flottante selon l'une quelconque des revendications 1 à 7.
